(19)

Europäisches
Patentamt
European
Patent Office
Office européen
des brevets

(11)     **EP 2 610 772 A1**

(12)     **EUROPEAN PATENT APPLICATION**
published in accordance with Art. 153(4) EPC

(43) Date of publication:
   **03.07.2013   Bulletin 2013/27**

(51) Int Cl.:
   ***G06F 17/50*** (2006.01)

(21) Application number: **11819846.4**

(22) Date of filing: **18.08.2011**

(86) International application number:
   **PCT/JP2011/068662**

(87) International publication number:
   **WO 2012/026383 (01.03.2012 Gazette 2012/09)**

(84) Designated Contracting States:
   **AL AT BE BG CH CY CZ DE DK EE ES FI FR GB
   GR HR HU IE IS IT LI LT LU LV MC MK MT NL NO
   PL PT RO RS SE SI SK SM TR**

(30) Priority: **21.12.2010   JP 2010284878
          24.08.2010   JP 2010187309**

(71) Applicant: **Asahi Glass Company, Limited
   Tokyo 100-8405 (JP)**

(72) Inventors:
   • **UEMURA Ken
     Tokyo 100-8405 (JP)**
   • **YANAGIHARA Kazutaka
     Tokyo 100-8405 (JP)**
   • **SAITO Tsunehiro
     Tokyo 100-8405 (JP)**

(74) Representative: **Müller-Boré & Partner
   Patentanwälte
   Grafinger Straße 2
   81671 München (DE)**

(54)   **APPARATUS FOR GENERATING COMPUTATIONAL DATA, METHOD FOR GENERATING
       COMPUTATIONAL DATA, AND PROGRAM FOR GENERATING COMPUTATIONAL DATA**

(57)   Calculation data to be used for a numerical analysis are generated.

   Provided are a section for defining voxel data obtained by dividing an analysis domain including an object into plural rectangular parallelepipeds according to parameters stored in a parameter storage section, giving voxel attributes to respective voxels, and storing the voxel attributes in a voxel data storage section; a section for generating initial point data which are smaller in number than the voxels using center points of the voxels, and storing the generated initial point data in an initial point data storage section; a section for defining, in the object, divisional regions which are plural ones of the voxels on the basis of the voxel attributes stored in the voxel data storage section and the initial point data stored in the initial point data storage section, and storing divisional region data of the defined divisional regions in divisional region data storage section; and a section for generating boundary surface data of each divisional region on the basis of the divisional region data stored in the divisional region data storage section, and storing the generated boundary surface data in calculation data storage section as calculation data.

*FIG. 21*

EP 2 610 772 A1

**Description**

TECHNICAL FIELD

The present invention relates to a generating device, a generating method and a generating program for generating calculation data for a numerical analysis.

BACKGROUND ART

For example, the finite element method, the finite volume method, the voxel method, and the particle method are known as numerical analysis methods for calculating a flow velocity distribution, a stress distribution, a heat distribution, etc. by a numerical analysis. In general, such numerical analysis methods consist of a pre process, a solver process, and a post process. A calculation data model is generated in the pre process, and physical quantity values are calculated in the solver process using the generated calculation data model and a discretized governing equation.

In conventional finite volume methods, for example, an analysis domain is divided into plural regions and physical quantity values in respective divisional regions are calculated using volumes of the respective divisional regions, areas of boundary surfaces of adjoining divisional regions, and normal vectors of the boundary surfaces. In finite volume methods, the pre process generates a calculation data model (usually called a mesh) containing the coordinates (Vertex) of the vertices of each divisional regions. In a solver process, volumes of the respective divisional regions, areas of boundary surfaces, and normal vectors of the boundary surfaces (mentioned above) are calculated using the Vertex etc. included in the calculation data model and physical quantity values are calculated using the thus-calculated values. The Vertex is values for definition of geometric shapes of the divisional regions. In finite volume methods, it can be said that volumes of respective divisional regions, areas of boundary surfaces, and normal vectors of the boundary surfaces are calculated in the solver process using geometric shapes of the divisional regions.

Furthermore, in finite volume methods, there may exist portions where the vertex sharing condition between adjoining divisional regions is violated partially. Therefore, in finite volume methods, there may occur a case that restrictions on divisional regions are somewhat relaxed. On the other hand, usable element types for analysis are limited to the tetra element, hexa element, prism element, pyramid element, etc.

As disclosed in Patent document 1, a finite volume method has been proposed in which element types for analysis are not limited. However, even in such a finite volume method in which element types for analysis are not limited, as in the above-described finite volume methods, a calculation data model including coordinates of the vertices of divisional regions is generated in a pre process and physical quantity values are calculated using the Vertex etc. included in the generated calculation data model.

As is well known, finite element methods are methods in which physical quantity values are calculated in respective divisional regions using an interpolation function. As in finite volume methods, geometric shapes of divisional regions which are defined by Vertex etc. are used in a solver process.

Voxel methods and particle methods are numerical analysis methods which can generate a calculation data model more easily than finite element methods and finite volume methods. Voxel methods are methods which perform a numerical analysis by generating, as a calculation data model, voxel data which define an analysis domain by plural rectangular parallelepiped voxels (orthogonal grid) basically having the same size and calculating physical quantity values using the generated voxel data. Voxel methods are generally classified into a weighted residual integration type which uses a governing equation of a weighted residual integration method and a non-integration type which uses a cellular automaton model, a lattice Boltzmann model, or the like. In voxel methods, Vertex etc. are not necessary as voxel data. According to such voxel methods, an analysis domain can be defined easily by dividing the analysis domain into voxels and a calculation data model can be generated in a short time.

On the other hand, particle methods are methods which perform a numerical analysis by generating, as a calculation data model, particle data which define an analysis domain by plural particles and calculating physical quantity values using the generated particle data. In particle methods, a governing equation of a non-integration method and an inter-particle interaction model are used. In particle methods, no Vertex etc. are necessary because no divisional regions are used. In such particle methods, an analysis domain can be defined easily by, for example, arranging particles there uniformly and a calculation data model can be generated in a short time.

PRIOR ART REFERENCE

PATENT DOCUMENT

Patent document 1: U.S. Patent Application Publication No. 2008 /0021684 Specification

SUMMARY OF THE INVENTION

PROBLEMS TO BE SOLVED BY THE INVENTION

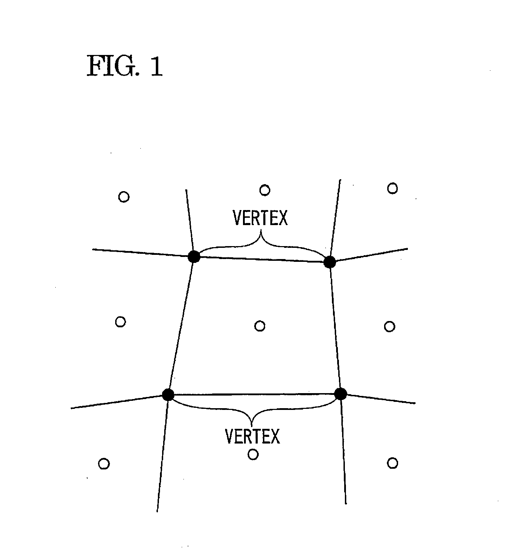

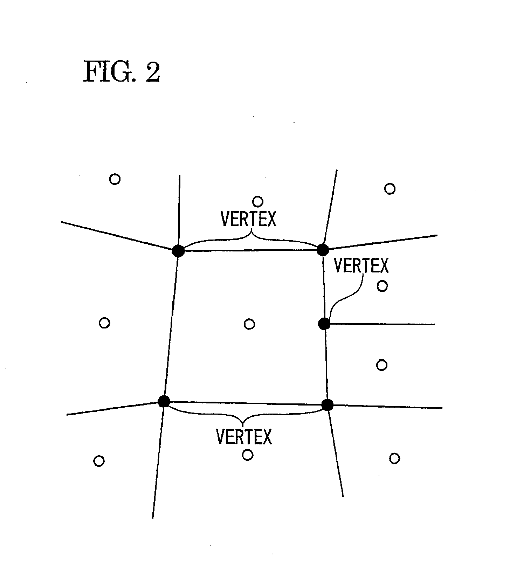

Where geometric shapes of divisional regions are used in a solver process as in conventional numerical analysis methods such as finite element methods and finite volume methods, naturally it is indispensable that a calculation data model be given data indicating geometric shapes of divisional regions.
To define geometric shapes of divisional regions, the vertex connectivity (Connectivity of Vertex; referred to as Connectivity, hereinafter) is necessary in addition to Vertex. Therefore, in finite element methods and finite volume methods, it is necessary that a calculation data model be given Vertex and Connectivity.
Specifically, Connectivity is defined by global mode numbers which are assigned to the vertices of all divisional regions in order and local node numbers which are assigned to the vertices of each divisional region in order.
As is well known, enormous work is necessary to generate such a calculation data model having Vertex and Connectivity. For example, in a calculation data model used in finite element methods, it is necessary to generate a calculation data model in such a manner that a condition that adjoining divisional regions should necessarily share vertices is satisfied as shown in Fig. 1. To allow all divisional regions to satisfy this condition, an enormous amount of time is necessary.
On the other hand, in a calculation data model used in finite volume methods, since presence of vertices that are not shared by adjoining divisional regions is permitted as shown in Fig. 2, the degree of freedom of mesh generation is higher than in finite element methods. However, even in finite volume methods, the degree of freedom of mesh generation is not high because it is necessary to generate a calculation data model under conditions that an unshared Vertex should at least exist on a side of an adjacent divisional region and that shapes of divisional regions should conform to preset element types for analysis.
In recent years, numerical analyses of analysis domains that are extracted from 3D shape data such as 3D CAD (computer aided design) have been being performed. However, 3D shape data is not data that is formed for numerical analysis, and includes data representing overlapping surfaces, surface intersections, gaps between surfaces, small holes, etc. as well as many conditions that are not suitable for generation of a calculation data model having Vertex and Connectivity. Therefore, it is necessary to modify or change 3D shape data to enable generation of a calculation data model having Vertex and Connectivity. To modify or change 3D shape data to enable generation of a calculation data model having Vertex and Connectivity, an enormous amount of manual work is necessary which requires experiences and trial-and-error processes. This is a serious problem to be solved in putting a finite element method and a finite volume method into practice.
Where volumes of divisional regions, areas of boundary surfaces, and normal vectors of the boundary surfaces are calculated in a solver process as in finite volume methods, the amount of calculation in the solver process and hence the computation load in the solver process is increased further.
Voxel methods have the following problems though they enable generation of a calculation data model in a short time. In voxel methods, the whole of an analysis domain is basically defined by voxels (orthogonal grid) having the same size. In finite element methods and finite volume methods, usually, physical quantity values are calculated accurately in regions where higher accuracy of analysis is desired by setting element sizes (divisional region sizes) small in those regions whereas the computation load is reduced in the other regions by setting element sizes large in those regions. However, in voxel methods, since all voxels basically have the same size, the computation load becomes very high if the voxel size is set small and the accuracy of analysis is lowered if the voxel size is set large.
Furthermore, in voxel methods, since an analysis domain needs to be defined by arranging voxels (orthogonal grid) having the same size, there may occur case that an analysis domain cannot be made smooth and has a stepwise shape around a boundary with an external domain. That is, even if a region to be analyzed actually has a slant surface, a curved surface, or the like, that region is expressed like a stepwise shape by voxel data. As a result, in voxel methods, an analysis region is given a shape that is different from the shape of a region to be analyzed actually and the accuracy of analysis is thus lowered.
In view of the above, an improved method called a cut-cell method has been proposed in which a stepwise region of voxel data is cut (boundary-corrected) along a slant surface or a curved surface of a region to be analyzed actually. However, in this improved method, this boundary correction tends to produce very small divisional regions. The accuracy of analysis is lowered if such small divisional regions are produced. In this improved method, Vertex is used for formation of cut cells and in a solver process.
As described above, in a voxel method without boundary correction, whereas no Vertex etc. are necessary, there is a limit in the generation of voxels (what is called a mesh). That is, if it is attempted to attain sufficiently high accuracy of analysis, the number of voxels is increased, resulting in a problem that the computation load is increased in a solver process. The improved method with boundary correction of a voxel method results in use of Vertex and hence is affected by geometric shapes of divisional regions. As a result, a process for forming divisional regions around a boundary with an external domain necessitates an enormous amount of manual work which requires experiences and trial-and-error processes. Thus, a shape data model cannot be generated in a short time.

On the other hand, in particle methods, it is necessary to calculate connection relationships between a certain, particular particle and other particles. This makes it necessary to search for particles that are located in the vicinity of the particular particle. As a general rule, this particle near-neighbor search process is executed on all particles. However, in particle methods, each particle moves as time elapses, as a result of which the connection relationships between particles always vary. Therefore, a near-neighbor search process needs to be executed every time the time of an analysis changes, which results in increase in computation load. An attempt has been made to reduce the computation load of a near-neighbor search process by, for example, carefully selecting particles as near-neighbor search subjects. However, if the number of particles is increased to increase the accuracy of analysis, the computation load increases in proportion to the square of the number of particles.

To realize a numerical analysis of such a particle method which can be performed in a practical time, it is necessary to use many CPUs (central processing units) in a large-scale parallel computer. An example in known in which a numerical analysis that can be performed in a half day using one CPU by a general finite method solver that uses Vertex and Connectivity took more than one week when a parallel calculation was performed using 32 CPUs by a particle method using about a million particles. In particle methods, the computation load becomes very high if particles are arranged densely and the accuracy of analysis is lowered if particles are arranged sparsely.

Furthermore, in particle methods, as described later in detail, in the case of analyzing a physical phenomenon that is based on the conservation law of a physical quantity of a fluid, a structure, heat, diffusion, or the like, it is not conserved satisfactorily. For example, there is no information as to what area a particle associated with a boundary surface between an analysis domain and an external domain occupies in the boundary surface. Therefore, when it is attempted to give a condition of input of heat through the boundary surface, it cannot be recognized accurately what amount of heat is input to each particle and hence highly accurate quantitative values cannot be obtained.

The present invention has been made in view of the problems of the above-described conventional numerical analysis methods, that is, the finite element method, the finite volume method, the voxel method, the improved version of the voxel method, and the particle method. An object of the present invention is to provide a generating device for calculation data, a generating method for calculation data, and a generating program for calculation data which can reduce the work load of generation of calculation data to be input to a numerical analysis apparatus which can reduce the computation load in the solver process without lowering the accuracy of analysis.

SOLUTION TO THE PROBLEMS

To solve the above problems, the invention provides a physical quantity calculating method for calculating physical quantity values in a numerical analysis method for analyzing a physical phenomenon numerically. The physical quantity calculating method includes a physical quantity calculating step of calculating physical quantity values in an analysis domain which is divided into plural divisional regions which are not fully in an orthogonal grid shape. The physical quantity calculating step calculates physical quantity values using a discretized governing equation which uses only quantities that do not require coordinates of the vertices of the divisional regions or connection information of the vertices (Connectivity) and is derived according to a residual integration method and a calculation data model which has, as quantities that do not require coordinates of the vertices of the divisional regions or connection information of the vertices (Connectivity), volumes of the respective divisional regions and characteristics of boundary surfaces indicating characteristics of boundary surfaces between adjoining divisional regions.

A discretized governing equation used in the invention is not a conventional one which is expressed in such a form as to include quantities (Vertex and Connectivity) for defining geometric shapes of divisional regions but a one which does not require any quantities for defining geometric shapes of divisional regions. A discretized governing equation used in the invention can be obtained by intentionally stopping, halfway, a process of deriving a conventional equation that uses quantities for defining geometric shapes according to a weighted residual integration method. Such a discretized governing equation used in the invention is expressed by quantities that do not require any quantities for defining geometric shapes of divisional regions (i.e., quantities that do not require Vertex or Connectivity) can be in such a form as to depend on, for example, only two sets of quantities, that is, a volume of each divisional region and characteristics of each boundary surface.

In conventional finite element methods and finite volume methods, since a subject of analysis is divided into minute regions as indispensable processing, a discretized governing equation is derived on the assumption that quantities for defining geometric shapes of the minute regions (i.e., Vertex and Connectivity) are used. On the other hand, a discretized governing equation used in the invention is derived according to a new concept that is entirely different from conventional ones. The invention, which is characterized by use of a discretized governing equation derived according to such a new concept, does not depend on geometric shapes unlike conventional numerical analysis methods. Thus, the invention solves the problems in the art and provides various remarkable advantages.

A description will now be made of why the volume of each divisional region and the characteristics of each boundary surface are quantities that require neither of Vertex and Connectivity which define a particular geometric shape of a divisional region. The quantity that does not require Vertex or Connectivity means a quantity that can be defined without using Vertex or Connectivity. For example, in the case of the volume of each divisional region, there are plural geometric shapes of a divisional region whose volume has a certain, prescribed value, such as a cube or a sphere. For example, a volume of each divisional region can be defined by an optimizing calculation which is performed so that, for example, the volume of each divisional region comes to be proportional, as accurately as possible, to the cube of an average distance to adjacent divisional regions, under a restricting condition that the sum of volumes of all divisional regions is equal to the volume of the entire analysis domain. As such, the volume of each divisional region can be dealt with as a quantity that does not require a particular shape of a divisional region (i.e., a quantity that that does not require Vertex or Connectivity) .

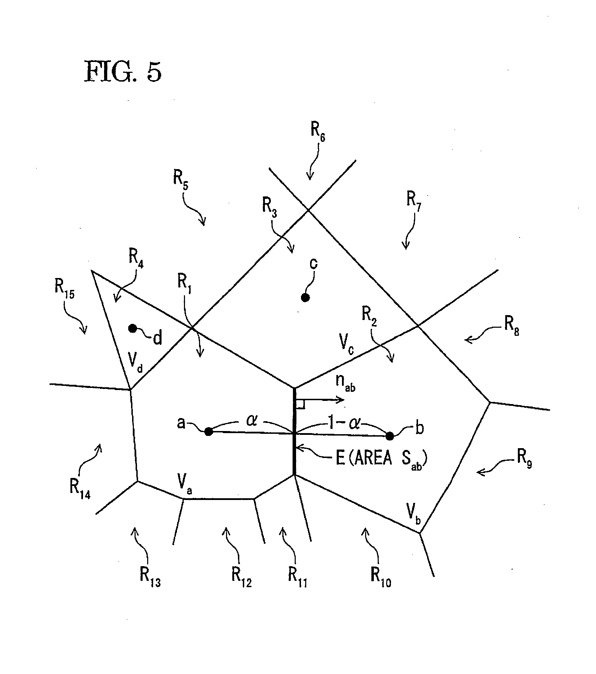

Examples of characteristics of a boundary surface are an area of the boundary surface, its normal vector, and its contour length. There are plural geometric shapes of a divisional region (i.e., plural geometric shapes of a boundary surface) that give these characteristics of the boundary surface a certain, prescribed value. For example, characteristics of the boundary surface can be defined by an optimizing calculation which is performed so that the direction of the normal vector of the boundary surface comes close to the line segment connecting control points (see Fig. 5) of the two adjoining divisional regions and the sum of areas of all boundary surfaces surrounding the divisional region comes to be proportional, as accurately as possible, to the (2/3)th power of the volume of the divisional region, under a restricting condition that the length of an area-weighted average vector of normal vectors of all boundary surfaces surrounding the divisional region becomes zero. As such, the characteristics of each boundary surface can be dealt with as a quantity that does not require a particular shape of a divisional region (i.e., a quantity that that does not require Vertex or Connectivity).

In the invention, "the analysis domain which is divided into plural divisional regions which are not fully in an orthogonal grid shape" means that at least one of plural divisional regions constituting the analysis domain is not an element of an orthogonal grid, that is, the analysis domain includes a divisional region that is shaped so as not to be an element of an orthogonal grid. In the invention, "to use only quantities that do not require Vertex or Connectivity" means values that are substituted into a discretized governing equation are values of only quantities that do not require Vertex or Connectivity.

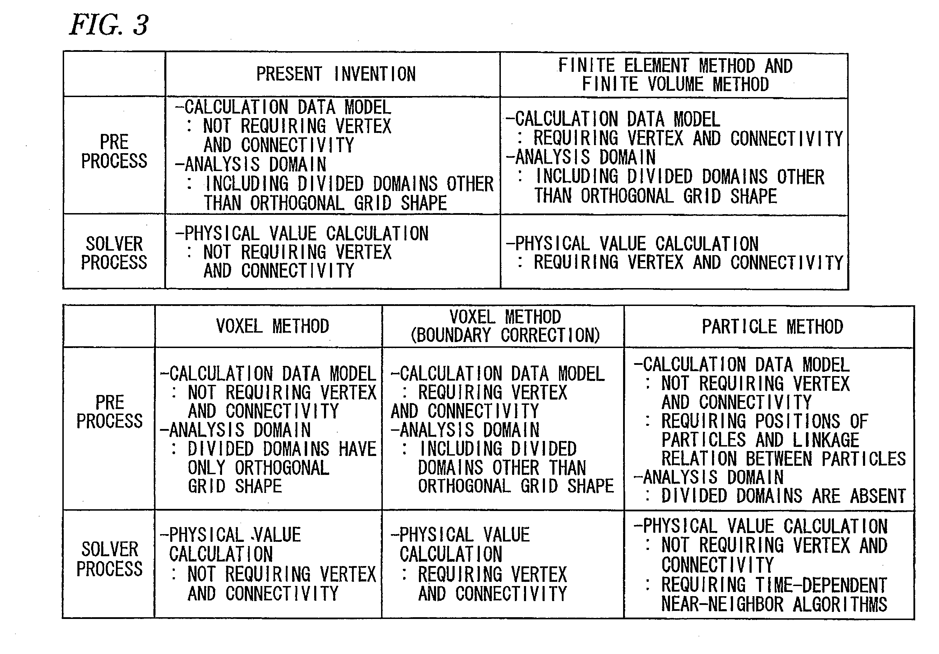

Next, with referring to Fig. 3, remarkable advantages of the invention will be described in more detail while a comparison will be made between the pre process and the solver process of the numerical analysis method according to the invention and those of conventional numerical analysis methods.

In the numerical analysis method according to the invention, as shown in Fig. 3, in the solver process (physical quantity calculating step of the invention), physical quantity values in divisional regions are calculated using a discretized governing equation which uses only quantities that do not require Vertex or Connectivity. Therefore, to solve the discretized governing equation, it is not necessary that a calculation data model which is generated in the pre process include Vertex and Connectivity.

When the invention is used, the volume of each divisional region and characteristics of each boundary surface are used as the quantities that do not require Vertex or Connectivity. As a result, a calculation data model which is generated in the pre process does not have Vertex or Connectivity and has volumes of divisional regions, characteristics of boundary surfaces, and auxiliary data (e.g., links of the divisional regions and control point coordinates).

As mentioned above, when the invention is used, a physical quantity value in each divisional region can be calculated on the basis of volumes of divisional regions and characteristics of boundary surfaces, that is, quantities that do not require geometric shapes of divisional regions. Therefore, a physical quantity value can be calculated without the need for giving volumes of divisional regions and characteristics of boundary surfaces, that is, Vertex and Connectivity, to a calculation data model. Therefore, when the invention is used, it suffices to generate, in the pre process, a calculation data model having at least volumes of divisional regions and characteristics of boundary surfaces (areas of the boundary surfaces and normal vectors of them). And a physical quantity value can be calculated without generating a calculation data model having Vertex and Connectivity.

A calculation data model not having Vertex or Connectivity can be generated without being restricted by geometric shapes of divisional regions because they do not require geometric shapes of divisional regions. As a result, restrictions imposed on work of correcting 3D shape data can be relaxed greatly. Therefore, a calculation data model not having Vertex or Connectivity can be generated far more easily than a calculation data model having Vertex and Connectivity. Thus, the invention can reduce the work load of generation of a calculation data model.

Even when the invention is used, Vertex and Connectivity may be used in the pre process. That is, volumes of divisional regions, characteristics of boundary surfaces, etc. may be calculated in the pre process using Vertex and Connectivity. Even in such a case, physical quantity values can be calculated in the solver process as long as volumes of divisional regions and characteristics of boundary surfaces exist. Therefore, even though Vertex and Connectivity are used in the pre process, there are no restrictions on the geometric shape of each divisional region such as restrictions caused by deformation, a twist, or the like of each divisional region. Thus, the work load of generation of a calculation

data model can be reduced.

When the invention is used, in the pre process, divisional regions can be changed so as to have arbitrary shapes because there are no restrictions on their geometric shapes. As a result, an analysis domain can easily be caused to fit a region to be analyzed actually without increasing the number of divisional regions, whereby the accuracy of analysis can be increased without increasing the computation load. Furthermore, when the invention is used, the distribution density of divisional regions can be changed arbitrarily. As a result, the accuracy of analysis can be increased while increase in computation load is permitted within a necessary range.

Where the invention is used, unlike in the case of using conventional numerical analysis methods, it is not necessary to calculate volumes of divisional regions and characteristics of boundary surfaces using Vertex and Connectivity in the solver process. Therefore, the computation load in the solver process can be reduced.

In the invention, when the shape of an analysis domain does not vary, it is not necessary to move divisional regions and hence, unlike in particle methods, it is not necessary to execute a near-neighbor search process every time a time change occurs. This means a low computation load. Furthermore, as described later in detail, when the invention is used, unlike in particle methods, physical quantity values can be calculated while a conservation law of the physical quantity is satisfied.

On the other hand, in finite volume methods as conventional numerical analysis methods, a calculation data model having Vertex and Connectivity which indicate geometric shapes of divisional regions is generated in the pre process. In the solver process, volumes of divisional regions and characteristics of boundary surfaces (areas of the boundary surfaces and normal vectors of them) are calculated using the Vertex and Connectivity included in the calculation data model and then physical quantity values in the respective divisional regions are calculated. In this case, restrictions on the geometric shapes exist, that is, it is required that the relationships between the Vertex and Connectivity have no problems. As a result, a calculation data model (i. e., a mesh) needs to be generated with restrictions caused by deformation, a twist, or the like of each divisional region. As described above, this raises a problem that an enormous amount of manual work is necessary in generating a calculation data model.

Also in finite element methods, since physical quantity values are calculated in the solver process using Vertex and Connectivity included in a calculation data model, it is necessary to generate, in the pre process, a calculation data model having Vertex and Connectivity which indicate geometric shapes of divisional regions. Therefore, an enormous amount of manual work is necessary in generating a calculation data model.

In voxel methods as conventional numerical analysis methods, as shown in Fig. 3, neither Vertex nor Connectivity is necessary in calculating physical quantity values in the solver process. However, since divisional regions are restricted to voxels in terms of shape, voxel methods have a problem that a boundary with an external domain comes to have a stepwise shape (described above). As a result, as described above, if it is attempted to obtain sufficiently high accuracy of analysis, the number of voxels is increased, resulting in a problem that the computation load in the solver process is increased. A voxel method with boundary correction ends up using Vertex in calculating volumes of divisional regions etc. Therefore, generation of a calculation data model is affected by geometric shapes of divisional regions.

The concept of divisional regions is absent in particle methods as conventional numerical analysis methods, as shown in Fig. 3, neither Vertex nor Connectivity is necessary in calculating physical quantity values in the solver process. However, as described above, the computation load is increased by movement of particles which define a calculation data model, instead of divisional regions. Furthermore, in particle methods, it is difficult to calculate physical quantity values while satisfying a conservation law.

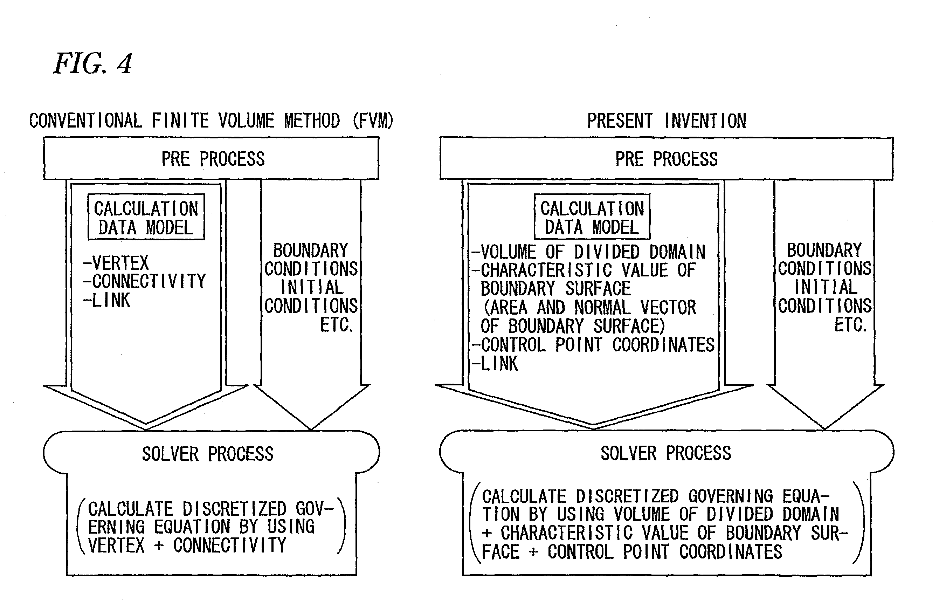

Next, the invention will be compared with conventional finite volume methods in more detail with reference to Fig. 4. In conventional finite volume methods, as described above, a calculation data model having Vertex and Connectivity for defining geometric shapes of divisional regions obtained by mesh division is generated in the pre process. In general, links of divisional regions are necessary in the solver process. Therefore, a calculation data model having Vertex and Connectivity is generated in the pre process.

In conventional finite volume methods, as shown in Fig. 4, a calculation data model having Vertex, Connectivity, and links and boundary conditions, initial conditions, etc. which will be necessary in the solver process are passed from the pre process to the solver process. The solver process calculates physical quantity values by solving a discretized governing equation using the Vertex, Connectivity, etc. that are included in the received calculation data model.

On the other hand, in the invention, a calculation data model having volumes of divisional regions arranged arbitrarily, characteristics of boundary surfaces (areas of the boundary surfaces and normal vectors of them), and links is generated in the pre process. As described later in detail, in the invention, if necessary, a calculation data model is given coordinates of control points that are placed inside divisional regions.

In the invention, as shown in Fig. 4, a calculation data model having volumes of divisional regions, characteristics of boundary surfaces, and links (and coordinates of control points, if necessary) and boundary conditions, initial conditions, etc. are passed from the pre process to the solver process. The solver process calculates physical quantity values by solving a discretized governing equation using the volumes of divisional regions, the characteristics of boundary surfaces, etc. that are included in the received calculation data model.

As seen from Fig. 4, the invention is much different from conventional finite volume methods in that physical quantity values are calculated in the solver process without using Vertex or Connectivity, which is an important feature of the invention. This feature is obtained because the solver process uses a discretized governing equation which uses only quantities that do not require Vertex or Connectivity.

As a result, as shown in Fig. 4, in the invention, it is not necessary to pass Vertex and Connectivity to the solver process. It suffices that the pre process generates a calculation data model not having Vertex or Connectivity. As a result, the invention makes it possible to generate a calculation data model far more easily than conventional finite volume methods, and to thereby reduce the work load of generation of a calculation data model.

There may occur a case that the shape of an analysis domain to be subjected to a numerical analysis varies with time, that is, an analysis domain includes a moving boundary. In this case, it is necessary to move and deform divisional regions according to the moving boundary.

In conventional finite volume methods, in the case where a moving boundary is included, physical quantity values are calculated by a method in which Vertex corresponding to each movement of a moving boundary are stored in advance or a method in which domain division is performed again when a calculation is disabled by excessive deformation of divisional regions. In contrast, in the invention, in the case where a moving boundary is included, physical quantity values can be calculated by a method in which volumes of divisional regions, characteristics of boundary surfaces, etc., instead of Vertex, are calculated and stored in advance or by re-execution of domain division.

In either of conventional finite volume methods and the invention, whichever of the above-mentioned methods is employed, it is necessary to generate plural calculation data models. However, in conventional finite volume methods, in many cases, the amount of work of generating plural calculation data models is beyond a practically bearable range (generation of even one calculation data model necessitates an enormous amount of work).

On the other hand, in the invention, a calculation data model can be generated at very high speed because a calculation data model need not have Vertex or Connectivity and it is not necessary to take the matching of Vertex and Connectivity into consideration in a domain division process.

Now, a supplemental description will be made of the above-described link. The link is information for correlating divisional regions with each other which exchange a physical quantity. Divisional regions that are correlated with each other need not always be adjacent to each other, that is, they may be spaced from each other. Such a link does not relate to Vertex or Connectivity and can be generated in far shorter time than Vertex or Connectivity.

Next, a detailed description will be made of the principle of the numerical analysis method according to the invention (hereinafter referred to as "this (or the) numerical analysis method"), that is, the principle of calculation of physical quantity values using a discretized governing equation derived according to a weighted residual integration method and volumes of divisional regions and characteristics of boundary surfaces. In the following description, a character enclosed by square brackets ([]) represents a vector which is represented by a bold character in drawings.

First, in this numerical analysis method, a calculation data model is defined using volumes of respective divisional regions obtained by dividing an analysis domain and characteristics of boundary surfaces between adjoining divisional regions. Fig. 5 is a conceptual diagram showing an example calculation data model of this numerical analysis method. In this figure, cells R1, R2, R3, ⋯ denote divisional regions which are obtained by dividing an analysis domain and have volumes $V_a$, $V_b$, and $V_c$, ..., respectively. A boundary surface E, which is a boundary surface of the invention, is a surface through which a physical quantity is exchanged between the cells R1 and R2. An area $S_{ab}$ is an area of the boundary surface E and is one of boundary surface characteristics of the invention. A symbol $[n]_{ab}$ represents a normal vector of the boundary surface E and is one of the boundary surface characteristics of the invention.

Control points a, b, c, ... are located inside (in Fig. 5, at the centers of gravity of) the respective cells R1, R2, R3, ⋯. However, the control points a, b, c, ⋯ need not always be located at the centers of gravity of the respective cells R1, R2, R3, ⋯. Character $\alpha$ represents the distance from the control point a to the boundary surface E in a case that the distance from the control point a to the control point b is assumed to be equal to 1, and is a ratio indicating an internally dividing point where the boundary surface E exists on the line segment connecting the control points a and b.

A boundary surface exists not only between the cells R1 and R2 but also between every pair of adjoining cells. And a normal vector and an area are given to every boundary surface.

An actual calculation data model is constructed as a data group having arrangement data of the respective control points a, b, c, ⋯, volume data indicating the volumes $V_a$, $V_b$, and $V_c$ ... of the cells R1, R2, R3, ⋯ where the control points a, b, c, ... exist, respectively, area data indicating the areas of the boundary surfaces, respectively, and normal vector data indicating the normal vectors of the boundary surfaces, respectively. That is, the calculation data model of this numerical analysis method is defined as having the volumes $V_a$, $V_b$, and $V_c$ ⋯ of the cells R1, R2, R3, ..., the areas of boundary surfaces which are characteristics of boundary surfaces between adjoining ones of the cells R1, R2, R3, ..., and the normal vectors of boundary surfaces which are characteristics of boundary surfaces between adjoining ones of the cells R1, R2, R3, ⋯.

Since the cells R1, R2, R3, ... have the respective control points a, b, c, ⋯, the volumes $V_a$, $V_b$, and $V_c$ ... of the cells R1, R2, R3, ⋯ can be dealt with as volumes of spaces (control volumes) occupied virtually by the control points a, b, c, ..., respectively. If necessary, the calculation data model of this numerical analysis method has ratio data indicating ratios $\alpha$ each of which indicates an internally dividing point where the boundary surface exists on the line segment connecting the control points located on both sides of the boundary surface.

In the following, a description will be made of an example of physical quantity calculation in which flow velocities in the respective cells (divisional regions) of an analysis domain are calculated using the above-described calculation data model. In this example, flow velocities at the respective control points are calculated as flow velocities in the respective cells.

First, in the case of a fluid analysis, the numerical analysis method of this physical quantity calculation uses a Navier-Stokes equation (following Equation (1)) and a continuity equation (following Equation (2)):

[Formula 1]

$$\frac{\partial}{\partial t}(\rho u_i) + \frac{\partial}{\partial x_j}(\rho u_j u_i) = -\frac{\partial P}{\partial x_i} + \frac{\partial}{\partial x_j}\left[\mu \frac{\partial u_i}{\partial x_j}\right] \quad \cdots (1)$$

[Formula 2]

$$\frac{\partial(\rho u_j)}{\partial x_j} = 0 \quad \cdots (2)$$

In Equations (1) and (2), t represents time, $x_i$ (i = 1, 2, 3) represents the Cartesian coordinates, p represents the density of a fluid, $u_i$ (i = 1, 2, 3) represents the flow velocity components of the fluid, P represents the pressure, $\mu$ represents the viscosity coefficient of the fluid, and the subscripts i (i = 1, 2, 3) and j (j = 1, 2, 3) indicate the direction components of the Cartesian coordinate system. It is assumed that the subscript j conforms to the summation notation.

Equations (1) and (2) are modified into the following respective Equations (3) and (4) when the former are integrated with respect to the volume of a control volume according to the weighted residual integration method:

[Formula 3]

$$\int_V \frac{\partial}{\partial t}(\rho u_i)dV + \int_S (\mathbf{n} \cdot \mathbf{u})u_i dS = -\int_S n_i P dS + \int_S \mu \frac{\partial u_i}{\partial n}dS \quad \cdots (3)$$

[Formula 4]

$$\int_S \rho \mathbf{n} \cdot \mathbf{u} dS = 0 \quad \cdots (4)$$

In Equations (3) and (4), V represents the volume of the control volume, $\int_V dV$ is an integral with respect to the volume V, S represents the area of the control volume, $\int_S dS$ is an integral with respect to the area S, [n] represents the normal vector of S, $n_i$ (i = 1, 2, 3) represents the components of the normal vector [n], and $\partial/\partial n$ means normal differentiation.

To simplify the description, the density p of the fluid and the viscosity coefficient $\mu$ are constants. However, the following formulation with these constants can be extended to a case that the material properties of the fluid vary with time, the position in space, temperature, or the like. Equations (3) and (4) are modified into the following respective Equations (5) and (6) when the former are converted into approximate formulae (algebraic equations) through disretization with respect to the area Sab of the boundary surface E for the control point a shown in Fig. 5:

[Formula 5]

$$V_a \cdot \rho \frac{\partial u_i}{\partial t} + \sum_{b=1}^{m}[S_{ab} \cdot (\mathbf{n}_{ab} \cdot \mathbf{u}_{ab})u_{iab}] = -\sum_{b=1}^{m}[S_{ab} \cdot n_{iab} \cdot P_{ab}]$$

$$+ \sum_{b=1}^{m}\left[S_{ab} \cdot \mu \cdot \left(\frac{\partial u_i}{\partial n}\right)_{ab}\right] \quad \cdots (5)$$

[Formula 6]

$$\sum_{b=1}^{m}[S_{ab}\cdot(\mathbf{n}_{ab}\cdot\mathbf{u}_{ab})]=0 \quad\cdots(6)$$

The parameters with the subscript ab, that is, $[n]_{ab}$, $[u]_{ab}$, $u_{iab}$, $n_{iab}$, $P_{ab}$, and $(\partial u_i/\partial n)_{ab}$, are physical quantities on the boundary surface E between the control points a and b. Symbol $n_{iab}$ represents the components of $[n]_{ab}$. Symbol m represents the number of all control points each having a connection relationship with the control point a (i.e., a relationship that a boundary surface exists between the control point concerned and the connection point a).
Equations (5) and (6) are modified into the following respective Equations (7) and (8) when the former are divided by Va which is the volume of the control volume of the control point a:
[Formula 7]

$$\rho\frac{\partial u_i}{\partial t}+\sum_{b=1}^{m}\left[\frac{S_{ab}}{V_a}\cdot(\mathbf{n}_{ab}\cdot\mathbf{u}_{ab})u_{iab}\right]=-\sum_{b=1}^{m}\left[\frac{S_{ab}}{V_a}\cdot n_{iab}\cdot P_{ab}\right]$$
$$+\sum_{b=1}^{m}\left[\frac{S_{ab}}{V_a}\cdot\mu\cdot\left(\frac{\partial u_i}{\partial n}\right)_{ab}\right] \quad\cdots(7)$$

[Formula 8]

$$\sum_{b=1}^{m}[\frac{S_{ab}}{V_a}\cdot(\mathbf{n}_{ab}\cdot\mathbf{u}_{ab})]=0 \quad\cdots(8)$$

Now, the following Equation (9) is used:
[Formula 9]

$$\phi_{ab}\equiv\frac{S_{ab}}{V_a} \quad\cdots(9)$$

Then, Equations (7) and (8) are modified into the following respective Equations (10) and (11):
[Formula 10]

$$\rho\frac{\partial u_i}{\partial t}+\sum_{b=1}^{m}[\phi_{ab}\cdot(\mathbf{n}_{ab}\cdot\mathbf{u}_{ab})u_{iab}]=-\sum_{b=1}^{m}[\phi_{ab}\cdot n_{iab}\cdot P_{ab}]$$
$$+\sum_{b=1}^{m}\left[\phi_{ab}\cdot\mu\cdot\left(\frac{\partial u_i}{\partial n}\right)_{ab}\right] \quad\cdots(10)$$

[Formula 11]

$$\sum_{b=1}^{m}[\phi_{ab}\cdot(\mathbf{n}_{ab}\cdot\mathbf{u}_{ab})]=0 \quad\cdots(11)$$

In Equations (10) and (11), each of $[u]_{ab}$, $u_{iab}$, $P_{ab}$, and $(\partial u_i/\partial n)_{ab}$ approximates a weighted average of physical quantity values at the control points a and b (in the case of an advective term, a weighted average calculated in an upwind scheme) and is determined depending on the distance between the control points a and b and the direction of the line segment connecting them, the positional relationship (i.e., the above-described ratio $\alpha$) between the control

points a and b and the boundary surface E located between them, and the direction of the normal vector of the boundary surface E. It is noted that $[u]_{ab}$, $u_{iab}$, $P_{ab}$, and $(\partial u_i/\partial n)_{ab}$ are quantities that are irrelevant to the geometric shape of the boundary surface E (i.e., quantities that do not require neither of Vertex and Connectivity that define a cell shape).

Furthermore, $\phi_{ab}$, which is defined by Equation (9), is a quantity of area/volume and hence is a quantity that is irrelevant to the geometric shapes of the control volumes (i.e., a quantity that require neither of Vertex and Connectivity that define a cell shape). That is, such Equations (10) and (11) are equations according to a weighted residual integration method which allow physical quantity values to be calculated using only quantities that require neither of Vertex and Connectivity that define a cell shape).

Therefore, it becomes possible to generate a calculation data model (described above) before a physical quantity calculation (solver process) and to calculate flow velocities not using geometric shapes of control volumes (i.e., using neither of Vertex and Connectivity that define cell shapes) at all in the physical quantity calculation by using the generated calculation data model and Equations (10) and (11) which are discretized governing equations in the physical quantity calculation.

Since as mentioned above flow velocities can be calculated not using Vertex or Connectivity at all in the physical quantity calculation, it is not necessary to give Vertex and Connectivity to a calculation data model. Therefore, a calculation data model can be generated without being bound by geometric shapes of cells and hence cell shapes can be set arbitrarily. As a result, in this numerical analysis method, as mentioned above, restrictions imposed on work of correcting 3D shape data can be relaxed greatly.

In solving Equations (10) and (11) actually, the physical quantities on the boundary surface E such as $[u]_{ab}$ and $P_{ab}$ are usually interpolated by linear interpolation. For example, with physical quantities at the control points a and b represented by $\psi_a$ and $\psi_b$, respectively, a physical quantity $\psi_{ab}$ on the boundary surface E can be calculated according to the following Equation (12):

[Formula 12]

$$\psi_{ab} = \frac{1}{2}(\psi_a + \psi_b) \quad \cdots (12)$$

The physical quantity $\psi_{ab}$ can also be calculated according to the following Equation (13) using the ratio $\alpha$ which indicates an internally dividing point where the boundary surface exists on the line segment connecting the control points located on both sides of the boundary surface.

[Formula 13]

$$\psi_{ab} = (1-\alpha)\cdot\psi_a + \alpha\cdot\psi_b \quad \cdots (13)$$

Therefore, where the calculation data model has ratio data showing the ratio $\alpha$, the physical quantity on the boundary surface E can be calculated by weighted averaging according to the distances from the control points a and b using Equation (13).

As seen from Equation (1), a continuum model equation (e.g., Navier-Stokes equation) includes first-order partial derivatives.

Now, the order of the derivatives of the continuum model equation is lowered by converting the volume integrals into surface integrals utilizing Gauss's divergence theorem or the generalized Green's theorem. As a result, the first-order derivatives can be converted into 0th-order derivatives (scalar or vector quantities). For example, according to the generalized Green's theorem, the relationship of the following Equation (14) holds for a physical quantity $\psi$:

[Formula 14]

$$\int_V \frac{\partial \psi}{\partial x_i} dV = \int_S \psi n_i dS \quad \cdots (14)$$

In Equation (14), $n_i$ (i = 1, 2, 3) is the i-direction components of a unit normal vector [n] of a surface S. By the conversion from volume integrals into surface integrals, on a boundary surface, first-order derivative terms of a continuum model equation come to be dealt with as scalar quantities or vector quantities. A value of each of these quantities can be interpolated using physical quantity values at respective control points by linear interpolation (mentioned above) or the like.

As described later, a continuum model equation may include a second-order derivative.

The following Equation (15) is obtained when the integrands of Equation (14) are differentiated once, and the second-order derivative term of the continuum model equation is expressed as in the following Equation (16) on the boundary E through conversion from the volume integral into a surface integral:

[Formula 15]

$$\int_V \frac{\partial^2 \psi}{\partial x_i \partial x_j} dV = \int_S \frac{\partial \psi}{\partial x_j} n_i dS = \int_S \frac{\partial \psi}{\partial n} n_i n_j dS \quad \cdots (15)$$

[Formula 16]

$$\int_{S_{ab}} \frac{\partial \psi}{\partial n_{ab}} \cdot n_{iab} \cdot n_{jab} dS \quad \cdots (16)$$

In Equation (15), $\partial/\partial n$ means normal differentiation. In Equation (16), $\partial/\partial n_{ab}$ means differentiation in the $[n]_{ab}$ direction. That is, by the conversion from the volume integral into a surface integral, the second-order derivative term of the continuum model equation is changed to a normal derivative (i.e., a derivative along the direction of the normal $[n]_{ab}$ to Sab) of the physical quantity $\psi$ multiplied by the components $n_{iab}$ and $n_{jab}$ of $[n]$.

The derivative $\partial \psi/\partial n_{ab}$ in Equation (16) is approximated as in the following Equation (17):

[Formula 17]

$$\frac{\partial \psi}{\partial n_{ab}} \cong \frac{\psi_b - \psi_a}{\mathbf{r}_{ab} \cdot \mathbf{n}_{ab}} \quad \cdots (17)$$

The inter-control-point vector $[r]_{ab}$ between the control points a and b is defined as the following Equation (18) using position vectors $[r]_a$ and $[r]_b$ of the respective control points a and b:

[Formula 18]

$$\mathbf{r}_{ab} \equiv \mathbf{r}_b - \mathbf{r}_a \quad \cdots (18)$$

Therefore, since the boundary surface has the area Sab, Equation (16) is modified into the following Equation (19) and Equation (16) can be calculated utilizing Equation (19):

[Formula 19]

$$\int_{S_{ab}} \frac{\partial \psi}{\partial n_{ab}} \cdot n_{iab} \cdot n_{jab} dS = S_{ab} \cdot \frac{\psi_b - \psi_a}{\mathbf{r}_{ab} \cdot \mathbf{r}_{ab}} \cdot n_{iab} \cdot n_{jab} \quad \cdots (19)$$

Incidentally, the following is seen from the derivation of Equation (16). Every linear partial differential equation is a linear sum of constants and terms which are products of a coefficient and a first-order, second-order, or any other partial derivative. When the physical quantity $\psi$ in each of Equations (15)-(18) is replaced by a first-order partial derivative of $\psi$, the volume integral of a higher-order partial derivative can be calculated by calculating a surface integral of a lower-order partial derivative as in Equation (14). By repeating this procedure in order from lowest-order partial derivatives, partial derivatives of all terms of a linear partial differential equation can be calculated from the physical quantity values $\psi$ at the respective control points, $\psi_{ab}$ which is a $\psi$ value on the boundary surface calculated according to Equation (12) or (13), the inter-control-point distance calculated from the inter-control-point vector defined by Equation (18), the area Sab of the boundary surface E (see Equation (5)), and the components $n_{iab}$ and $n_{jab}$ of the normal vector as shown in Equation (16).

Next, in the case of a nonlinear partial differential equation, for example, nonlinear terms in Formulae (20), that is, the product of $\psi$ and the first-order derivative of $\psi$ and the square of the first-order partial derivative of $\psi$, can be

calculated numerically by an iterative calculation. That is, it suffices that an iterative calculation be performed in such a manner that $\psi$ and its first-order partial derivative are approximated by one-step preceding calculation values in the iterative calculation. This method makes it possible to numerically calculate all nonlinear terms of a partial differential equation. Although the previous description was particularly directed to continuum model equations, it has become apparent from the above discussion that any other partial differential equation can be discretized without using Vertex or Connectivity. However, other conditions are necessary to satisfy a conservation law. This will be described later.

[Formulae 20]

$$\psi \cdot \frac{\partial \psi}{\partial x_i}, \quad \left( \frac{\partial \psi}{\partial x_i} \right)^2 \quad \cdots (20)$$

Incidentally, as mentioned above, neither Vertex nor Connectivity is necessary in performing a physical quantity calculation according to this numerical analysis method. Therefore, a flow velocity can be calculated without using any geometric shape of a control volume (i.e., any geometric shape of a cell) using the discretized governing equations of Equations (10) and (11) if a volume of the control volume and areas and normal vectors of boundary surfaces are calculated without using Vertex or Connectivity in generating a calculation data model (pre process).

However, in this numerical analysis method, it is not always necessary to calculate a volume of a control volume and areas and normal vectors of boundary surfaces without using a specific geometric shape of the control volume. That is, since no Vertex or Connectivity is used in the solver process, even if a specific geometric shape of a control volume (more specifically, Vertex and Connectivity) is used, as mentioned above a calculation data model can be generated easily because there are no restrictions relating to divisional regions as occur in conventional finite element methods or finite volume methods, that is, restrictions on deformation and a twist of a divisional region.

In this numerical analysis method, under a certain condition, the above-described normal vector can be replaced by a distance vector that connects the control volumes. The reasons for that will be described below. Where the normal vector $[n]_{ab}$ of the boundary surface E shown in Fig. 5 is in the same direction as a distance vector $[r]_{ab}$ which connected the control points a and b, the normal vector $[n]_{ab}$ can be expressed as the following Equation (21):

[Formula 21]

$$\mathbf{n}_{ab} = \frac{\mathbf{r}_{ab}}{|\mathbf{r}_{ab}|} \quad \cdots (21)$$

Therefore, where the normal vector $[n]_{ab}$ of the boundary surface E is in the same direction as a distance vector $[r]_{ab}$, discretized governing equations of the case that the normal vector $[n]_{ab}$ is in the direction of the line segment connecting the control points a and b are obtained by substituting Equation (21) into the discretized governing equations given by Equations (10) and (11). That is, where the boundary surface is perpendicular to the vector that connects the control points located on both sides of the boundary surface, the normal vector in the discretized governing equations can be replaced by the distance vector. With such discretized governing equations, a normal vector $[n]_{ab}$ of the boundary surface E can be determined only on the basis of position coordinates of the control points. The accuracy of calculation of physical quantity values is increased by making the angular relationship between the boundary surface E and the distance vector as close to a perpendicular relationship as possible. Therefore, the calculation accuracy can be increased by replacing the normal vector with the distance vector. Furthermore, the arbitrariness of the normal vector can be eliminated, that is, its direction can be fixed to the direction of the line segment connecting the control points.

However, when the arbitrariness of the normal vector is eliminated, it may become impossible to give a certain degree of freedom to the posture of the boundary surface. In such a case, the setting of the volume of the control volume and the boundary surface is restricted in generating a calculation data model more than in the case that the normal vector has arbitrariness. Furthermore, where the normal vector is replaced by the vector that connects the control points, a distance vector is necessary and coordinates of the control points are necessary to calculate the distance vector. It is therefore necessary that the calculation data model be given coordinate data of the control points and distance vector data. However, even in this case, in this numerical analysis method, neither Vertex nor Connectivity is necessary in a physical quantity calculation.

Next, to clarify the differences between the invention and particle methods, conditions for satisfaction of a conservation law of a physical quantity in a physical quantity calculation will be described.

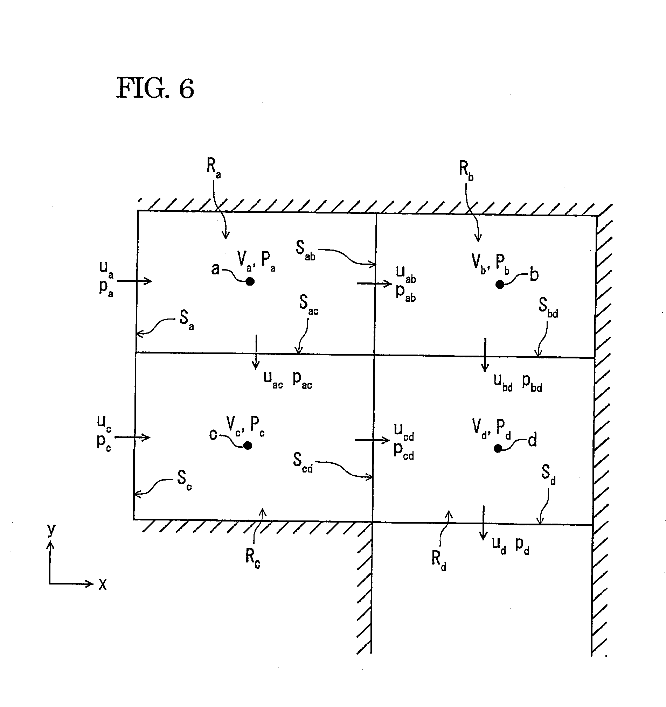

For example, as shown in Fig. 6, assume four cells $R_a$, $R_b$, $R_c$ and $R_d$ of an L-shaped flow passage. Control points a, b, c and d are placed inside, that is, at the centers of, the respective cells $R_a$, $R_b$, $R_c$ and $R_d$. It is assumed that flow velocity vectors at respective boundary surfaces are perpendicular to the boundary surfaces.

In Fig. 6, $V_a$, $V_b$, $V_c$ and $V_d$ represent the volumes of the cells $R_a$, $R_b$, $R_c$ and $R_d$ (i.e., volumes of control volumes of the control points a, b, c, and d), respectively; and $\rho_a$, $\rho_b$, $\rho_c$, and $\rho_d$ represent the densities in the cells $R_a$, $R_b$, $R_c$ and $R_d$, respectively. Symbols $S_a$, $S_b$, $S_c$ and $S_d$ represent the areas of boundary surfaces between the cells $R_a$, $R_b$, $R_c$ and $R_d$ and an external domain, respectively, $S_{ab}$ represents the area of a boundary surface between the cells $R_a$ and $R_b$, $S_{ac}$ represents the area of a boundary surface between the cells $R_a$ and $R_c$, $S_{bd}$ represents the area of a boundary surface between the cells $R_b$ and $R_d$, and $S_{cd}$ represents the area of a boundary surface between the cells $R_c$ and $R_d$. Symbols $u_a$, $u_c$, and $u_d$ represent the flow velocities at the boundary surfaces between the cells $R_a$, $R_c$ and $R_d$ and the external domain, respectively, $u_{ab}$ represents the flow velocity at the boundary surface between the cells $R_a$ and $R_b$, $u_{ac}$ represents the flow velocity at the boundary surface between the cells $R_a$ and $R_c$, $u_{bd}$ represents the flow velocity at the boundary surface between the cells $R_b$ and $R_d$, and $u_{cd}$ represents the flow velocity at the boundary surface between the cells $R_c$ and $R_d$. Symbol $\rho_a$ represents the density in the cell $R_a$, $\rho_{ab}$ represents the density at the boundary surface between the cells $R_a$ and $R_b$, $\rho_{ac}$ represents the density at the boundary surface between the cells $R_a$ and $R_c$, and $\rho_{bd}$ represents the density at the boundary surface between the cells $R_b$ and $R_d$.

Consideration will be given to discretization of a mass conservation equation at the four control points a, b, c, and d (four cells $R_a$, $R_b$, $R_c$ and $R_d$) shown in Fig. 6. A discretized governing equation of a mass conservation equation is Equation (43) (described later).

A discretized governing equation at the control point a is given by the following Equation (22):

[Formula 22]

$$V_a \cdot \frac{\partial \rho_a}{\partial t} + [-S_a \cdot \rho_a \cdot u_a + S_{ab} \cdot \rho_{ab} \cdot u_{ab} + S_{ac} \cdot \rho_{ac} \cdot u_{ac}] = 0 \quad \cdots (22)$$

A discretized governing equation at the control point b is given by the following Equation (23):

[Formula 23]

$$V_b \cdot \frac{\partial \rho_b}{\partial t} + [-S_{ab} \cdot \rho_{ab} \cdot u_{ab} + S_{bd} \cdot \rho_{bd} \cdot u_{bd}] = 0 \quad \cdots (23)$$

A discretized governing equation at the control point c is given by the following Equation (24):

[Formula 24]

$$V_c \cdot \frac{\partial \rho_c}{\partial t} + [-S_c \cdot \rho_c \cdot u_c - S_{ac} \cdot \rho_{ac} \cdot u_{ac} + S_{cd} \cdot \rho_{cd} \cdot u_{cd}] = 0 \quad \cdots (24)$$

A discretized governing equation at the control point d is given by the following Equation (25):

[Formula 25]

$$V_d \cdot \frac{\partial \rho_d}{\partial t} + [-S_{cd} \cdot \rho_{cd} \cdot u_{cd} - S_{bd} \cdot \rho_{bd} \cdot u_{bd} + S_d \cdot \rho_d \cdot u_d] = 0 \quad \cdots (25)$$

The following Equation (26) is obtained by adding up Equations (22)-(25):

[Formula 26]

$$\left[ V_a \frac{\partial \rho_a}{\partial t} + V_b \frac{\partial \rho_b}{\partial t} + V_c \frac{\partial \rho_c}{\partial t} + V_d \frac{\partial \rho_d}{\partial t} \right] + [-S_a \cdot \rho_a \cdot u_a - S_c \cdot \rho_c \cdot u_c$$
$$+ S_d \cdot \rho_d \cdot u_d] = 0 \quad \cdots (26)$$

Utilizing the fact that the volumes $V_a$, $V_b$, $V_c$ and $V_d$ of the control volumes of the control points a, b, c, and d are constant with respect to time, they are incorporated into the associated time derivatives, whereby Equation (26) is modified into the following Equation (27):

[Formula 27]

$$\frac{\partial}{\partial t}(\rho_a V_a + \rho_b V_b + \rho_c V_c + \rho_d V_d) + [-S_a \cdot \rho_a \cdot u_a - S_c \cdot \rho_c \cdot u_c + S_d \cdot \rho_d \cdot u_d] = 0 \quad \cdots (27)$$

The entire volume $V_{abcd}$ and the average density $\overline{\rho}_{abcd}$ of the control volumes of the control points a, b, c, and d are given by the following Equations (28) and (29), respectively:

[Formula 28]

$$V_{abcd} \equiv V_a + V_b + V_c + V_d \quad \cdots (28)$$

[Formula 29]

$$\overline{\rho}_{abcd} \equiv \frac{\rho_a V_a + \rho_b V_b + \rho_c V_c + \rho_d V_d}{V_{abcd}} \quad \cdots (29)$$

Therefore, Equation (27) is modified into the following Equation (30):

[Formula 30]

$$V_{abcd} \frac{\partial \overline{\rho}_{abcd}}{\partial t} + [-S_a \cdot \rho_a \cdot u_a - S_c \cdot \rho_c \cdot u_c + S_d \cdot \rho_d \cdot u_d] = 0 \quad \cdots (30)$$

Equation (30) means that the difference between the mass flux flowing into the entire region occupied by the control volumes of the control points a, b, c, and d and mass flux flowing out of the entire region is equal to the temporal variation in the unit time of the average density (i.e., the temporal variation of the mass) of the entire region occupied by the control volumes of the control points a, b, c, and d. That is, the same form of equation as the discretized mass conservation equation for each of the control points a, b, c, and d holds for the region occupied by the control volumes of all the control points. That is, an equation obtained by adding up discretized governing equations for the control volume regions of all control points should become an equation that satisfies a conservation law for the entire analysis domain as a subject of calculation.

Then, the following Equation (31) is obtained by adding up mass conservation equations (Equation (43)) for all of N control points:

[Formula 31]

$$\sum_{a=1}^{N}\left[V_a \frac{\partial \rho_a}{\partial t} + \sum_{b=1}^{m}\{S_{ab} \cdot \rho_{ab} \cdot (\mathbf{n}_{ab} \cdot \mathbf{u}_{ab})\}\right] = 0 \quad \cdots (31)$$

Assume that the area of the boundary surface between the control points a and b as viewed from the control point a is the same as that as viewed from the control point b. Then, in Equation (31), mass fluxes $(\rho[n] \cdot [u]) \cdot S$ that flow between each pair of control points a and b have the same absolute value and opposite signs and hence cancel out each other. That is, Equation (31) means that the difference between the mass flowing into the entire calculation domain and the mass flowing out of it is equal to a variation of the mass of the entire domain in the unit time. Therefore, Equation (31) is a mass conservation equation for the entire analysis domain. Therefore, for Equation (31) to satisfy the mass conservation law for the entire calculation domain, it is necessary that the condition that the areas of the boundary surface between two control points are the same and the condition that the absolute value of the normal vector as viewed from one control point is the same as that as viewed from the other control point be satisfied.

For the mass conservation law to be satisfied, the condition that the volume occupied by the control volumes of all control points which is given by the following Equation (32) is equal to the volume of the entire analysis domain should also be satisfied:

[Formula 32]

$$V_{total} = \sum_{a=1}^{N} V_a \quad \cdots (32)$$

This is understood easily because the density $\rho$ of a continuum is expressed by a single variable $\rho_1 = \rho_2 = ... = \rho$. Thus, for the mass conservation law to be satisfied, the condition that the sum of the volumes of the control volumes of all control points is equal to the volume of the analysis domain should be satisfied.

Although the description has been made above of the mass conservation law, the momentum and energy conservation laws should also hold for a continuum. For the conservation law of each of these physical quantities (i.e., an equation obtained by adding up equations similar to Equation (50) or (55) (described later) for all control points) to be satisfied, it is understood that the condition that the volume occupied by the control volumes of all control points is equal to the volume of the entire analysis domain, the condition that the areas of the boundary surface between two control points are the same, and the condition that the absolute value of the normal vector as viewed from one control point is the same as that as viewed from the other control point (their signs are opposite) should be satisfied.

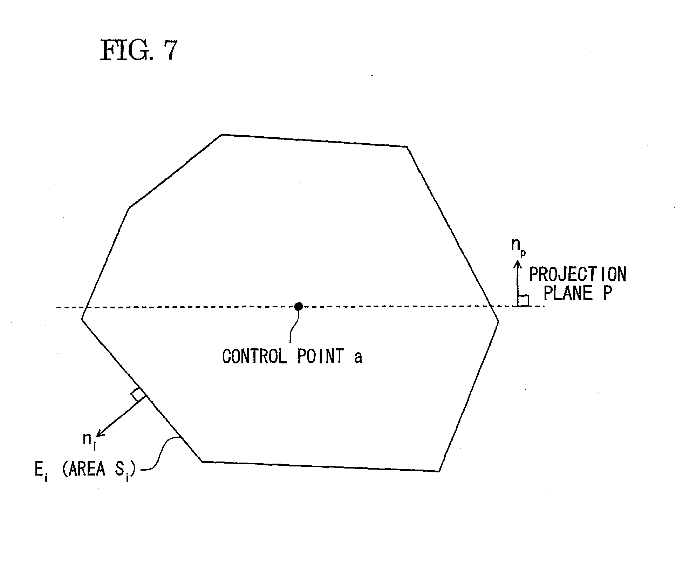

Now, as shown in Fig. 7, assume a control volume of a control point a and a projection plane P which extends infinitely, passes through the control point a, and has a unit normal vector $[n]_p$ extending in an arbitrary direction. For a control law to be satisfied, the condition that the following Equation (33) holds should be satisfied:

[Formula 33]

$$\sum_{i=1}^{m} [(\mathbf{n}_i \cdot \mathbf{n}_P) \cdot S_i] = 0 \quad \cdots (33)$$

In Fig. 7 and Equation (33), Si represents the area of a boundary surface Ei, $[n]_i$ is the unit normal vector of the boundary surface Ei, m is the total number of surfaces of the control volume.

Equation (33) indicates that a polyhedron that defines the control volume forms a closed space. Equation (33) holds even if part of the polyhedron that defines the control volume is recessed.

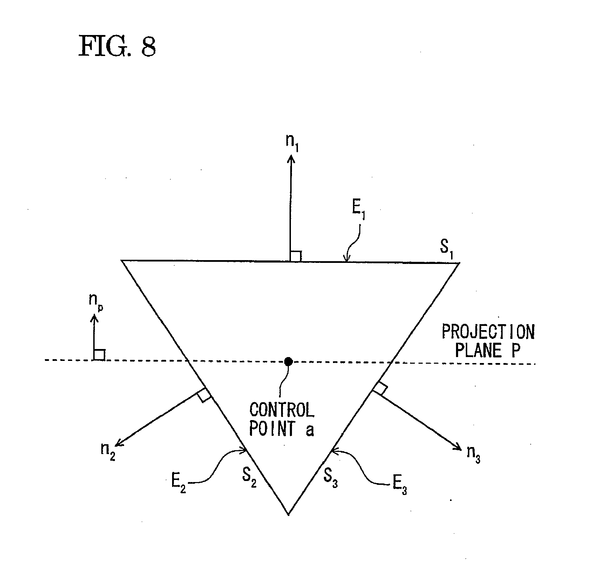

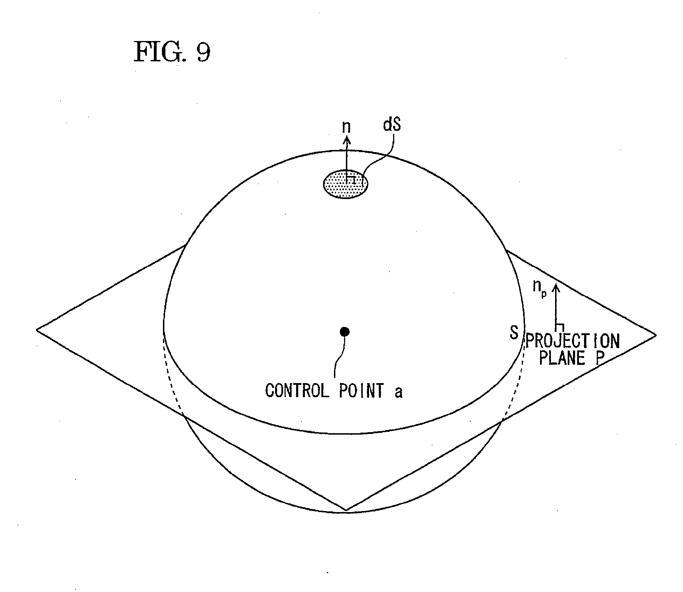

Equation (33) also holds for a two-dimensional triangle as shown in Fig. 8. And the following Equation (34) is obtained by assuming that one surface of the polyhedron is an infinitesimal surface dS and taking the limit that m is infinitely large. It is thus seen that Equation (33) also holds for a body having a closed curved surface as shown in Fig. 9.

[Formula 34]

$$\int_S \mathbf{n} \cdot \mathbf{n}_P dS = 0 \quad \cdots (34)$$

The condition that Equation (33) holds is necessary for satisfaction of Gauss's divergence theorem and the generalized Green's theorem (Equation (14)).

The generalized Green's theorem is a basic theorem for disretization of a continuum. Therefore, in discretization by converting volume integrals into surface integrals according to Green' s theorem, the condition that Equation (33) holds is indispensable for satisfaction of a conservation law.

As described above, when a numerical analysis is performed using a calculation data model and a physical quantity calculation method as described above, for satisfaction of a conservation law, the following three conditions should be satisfied:

(a) The sum of the volumes of control volumes of all control points (i.e., the volumes of all divisional regions) is equal to the volume of an analysis domain.
(b) The areas of the boundary surface between two control points are the same, and the absolute value of the normal vector as viewed from one control point (i.e., one of the divisional regions located on both sides of the boundary surface) is the same as that as viewed from the other control point (i.e., the other of the divisional regions located on both sides of the boundary surface).
(c) Equation (33) holds when a projection plane P which extends infinitely, passes through the control point, and has a unit normal vector $[n]_p$ extending in an arbitrary direction is assumed.

That is, for the conservation law to be satisfied, it is necessary to generate a calculation data model so that the above conditions are satisfied. However, in this numerical analysis method, a calculation data model can be generated easily so that the above three conditions are satisfied because as described above cell shapes can be deformed arbitrarily in generating the calculation data model.

Next, a detailed description will be made of why conservation laws cannot be satisfied and the computation load is high in the MPS (moving particle semi-implicit) method which is a conventional particle method and how this numerical analysis method is superior to particle methods.

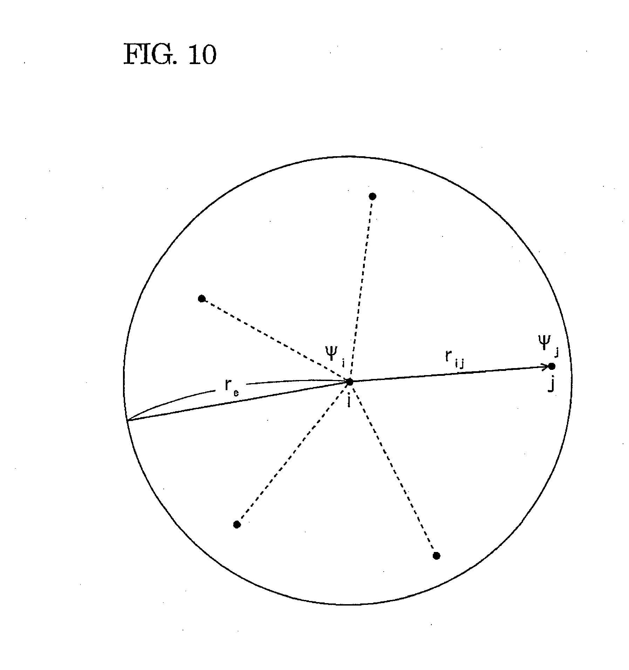

The MPS method is a method in which particles existing in a sphere having a properly set radius $r_e$ are detected and a calculation is performed by establishing connection relationships with them. For example, where as shown in Fig. 10 plural particles j exist around a particle i, a Laplacian $(\nabla^2 \psi)_i$ at the particle i is approximated as the following Equation (35):

[Formula 35]

$$(\nabla^2 \phi)_i = \frac{2d}{m} \cdot \sum_{j \neq i}^{m} \left[ \frac{\psi_j - \psi_i}{\left| \mathbf{r}_{ij} \right|^2} \cdot \omega(r) \right] \quad \cdots (35)$$

In Fig. 10, $\psi_i$ represents a physical quantity at the particle i, $\psi_j$ represents the physical quantity at the particle j, and $[r]_{ij}$ is the distance vector from the particle i to the particle j.

In Equation (35), d is a constant indicating a dimension number and is equal to 3 in the case of three dimensions. In Equation (35), $\omega(r)$ is a weighting function given by the following Equation (36). In Equation (35), m represents the number of particles in a connection relationship.

[Formula 36]

$$\omega(r) = \begin{cases} \dfrac{r_e}{r} - 1 & (0 \leq r \leq r_e) \\ 0 & (r_e \leq r) \end{cases} \quad \cdots (36)$$

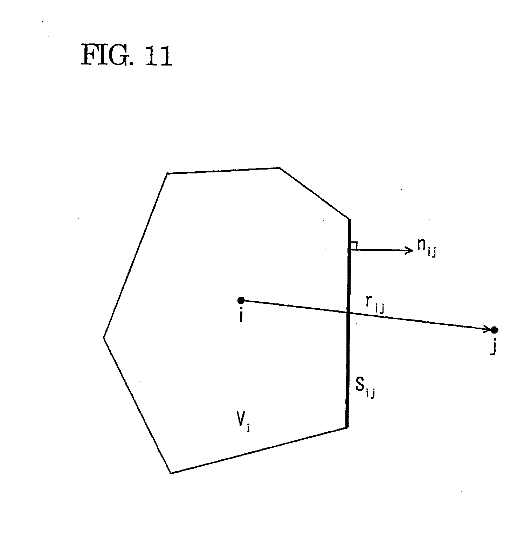

On the other hand, where as shown in Fig. 11 particles i and j are dealt with as control points, the control volume of the particle i is represented by Vi, the area of a boundary surface between the particles i and j is represented by Sij, the normal vector of the boundary surface between the particles i and j is denoted by $[n]_{ij}$, and the distance vector from the particle i to the particle j is denoted by $[r]_{ij}$, a Laplacian $(\nabla^2 \psi)_i$ at the particle i is approximated as the following Equation (37):

[Formula 37]

$$(\nabla^2 \psi)_i = \frac{1}{V_i} \cdot \sum_{j \neq i}^{m} \left[ \frac{\psi_j - \psi_i}{\left| \mathbf{r}_{ij} \cdot \mathbf{n}_{ij} \right|} \cdot S_{ij} \right] \quad \cdots (37)$$

If $[r]_{ij}$ and $[n]_{ij}$ are in the same direction, the following Equations (38) and (39) are obtained by comparing Equations (36) and (37):

$$\frac{S_{ij}}{V_i} \cdot \frac{1}{\left| \mathbf{r}_{ij} \cdot \mathbf{n}_{ij} \right|} = \frac{2d}{m} \cdot \frac{\omega(r)}{\left| \mathbf{r}_{ij} \right|^2} \quad \cdots (38)$$

[Formula 39]

$$\frac{S_{ij}}{V_i} = \frac{2d}{m} \cdot \frac{\omega(r)}{|\mathbf{r}_{ij}|} \quad \cdots (39)$$

The dimensions of the left side and the right side of Equation (39) are the same (1/distance). Therefore, the MPS method formulation (right side) can be construed as a method for calculating the quantity (area/volume) given by the following Equation (40) (i.e., the ratio defined by Equation (9)) only from the distance between the two particles i and j.

[Formula 40]

$$\phi_{ij} = \frac{S_{ij}}{V_i} \quad \cdots (40)$$

However, specific values of the area Sij of the boundary surface and the volume $V_i$ cannot be calculated only from the connection relationships between the m particles because the related equations available are insufficient: only the ratio of Equation (40) can be determined. Therefore, even if the area Sij of the boundary surface and the volume $V_i$ are calculated according to a discretized governing equation of the MPS method, it is not assured at all that the above-described conditions (a) - (c) for satisfaction of a conservation law are satisfied. This means that the MPS method has a serious problem in terms of satisfaction of conservation laws.

When a numerical analysis is applied to an engineering problem, in particular, a mechanical designing problem or a plant designing problem, evaluation of quantitative values (pressure, temperature, quantity of heat, etc.) is very important. However, if conservation laws are not satisfied in a numerical analysis, quantitativeness is not assured. That is, in the MPS method, it is not assured that the mass, momentum, and energy conservation laws are satisfied and hence quantitativeness is not assured. In contrast, according to this numerical analysis method, conservation laws can be satisfied and quantitativeness can be assured.

In the MPS method, since as mentioned above particles move as time elapses, it is necessary to, for example, execute, each time, a near-neighbor search process for detecting particles existing in the above-described sphere having the radius $r_e$. This increases the computation load of a physical quantity calculation. In contrast, in this numerical analysis method, control volumes and control points do not move even if time elapses. Therefore, as long as arrangement relationships between control volumes or control points are known in advance, a physical quantity calculation can be performed without executing near-neighbor search processes. As a result, the computation load of a physical quantity calculation can be made lower than in the MPS method. Even if neither arrangement relationships between control volumes nor arrangement relationships between control points are known in advance, it suffices to execute, only once at the beginning, a process of determining arrangement relationships between control volumes or control points.

The example of calculating physical quantity values using the discretized governing equations whish are derived from the Navier-Stokes equation and the continuity equation according to the weighted residual integration method was described above. However, the discretized governing equation used in this numerical analysis method is not limited to them. That is, any discretized governing equation which is derived from any of various equations (mass conservation equation, momentum conservation equation, energy conservation equation, advection diffusion equation, wave equation, etc.) according to the weighted residual integration method and can calculate physical quantity values using only quantities that do not require Vertex or Connectivity can be used in this numerical analysis method.

The characteristics of such a discretized governing equation enable a meshless calculation which does not require what is called a mesh unlike in conventional finite element methods and finite volume methods. Even if Vertex and Connectivity which define geometric shapes of cells are used in the pre process, the work load of generation of a calculation data model can be reduced because there are no restrictions on a mesh unlike in conventional finite element methods, finite volume methods, and voxel methods.

A description will be made below of that a discretized governing equation which uses only quantities that do not require Vertex or Connectivity can be derived from any of a mass conservation equation, a momentum conservation equation, an energy conservation equation, an advection diffusion equation, and a wave equation according to the weighted residual integration method, that is, other governing equations can be used in this numerical analysis method.

(1) Mass conservation equation

The mass conservation equation in the Eulerian coordinate system is given by the following Equation (41) which is in a differential form:

[Equation 41]

$$\frac{\partial \rho}{\partial t} + \frac{\partial \rho u_i}{\partial x_i} = 0 \quad \cdots (41)$$

In Equation (41), t represents time, $x_i$ (i = 1, 2, 3) represents the Cartesian coordinates, p represents the density, $u_i$ (i = 1, 2, 3) represents the deformation rate components, and the subscripts i (i = 1, 2, 3) indicate the direction components of the Cartesian coordinate system. It is assumed that the subscript i conforms to the summation notation. Equation (41) is modified into the following Equation (42) when the former is integrated with respect to the volume V of the control volume of a control point according to the weighted residual integration method:

[Formula 42]

$$\int_V \frac{\partial \rho}{\partial t} dV + \int_S \rho \mathbf{n} \cdot \mathbf{u} dS = 0 \quad \cdots (42)$$

Equation (42) is modified into the following Equation (43) when it is converted into an algebraic equation through discretization for the control point a shown in Fig. 5.

[Formula 43]

$$V_a \cdot \frac{\partial \rho_a}{\partial t} + \sum_{b=1}^{m} [S_{ab} \cdot \rho_{ab} \cdot (\mathbf{n}_{ab} \cdot \mathbf{u}_{ab})] = 0 \quad \cdots (43)$$

The parameters with the subscript ab, that is, $\rho_{ab}$ and $[n]_{ab}$, are physical quantities on the boundary surface E between the control points a and b. Symbol m represents the number of all control points each having a connection relationship with the control point a (i.e., a relationship that a boundary surface exists between the control point concerned and the connection point a).

The following Equation (44) is obtained by dividing Equation (43) by $V_a$ which is the volume of the control volume of the control point a, and the following Equation (46) which is a discretized version of the mass conservation equation is obtained when the following Equation (45) is used:

[Formula 44]

$$\frac{\partial \rho_a}{\partial t} + \sum_{b=1}^{m} \left[ \frac{S_{ab}}{V_a} \cdot \rho_{ab} \cdot (\mathbf{n}_{ab} \cdot \mathbf{u}_{ab}) \right] = 0 \quad \cdots (44)$$

[Formula 45]

$$\phi_{ab} = \frac{S_{ab}}{V_a} \quad \cdots (45)$$

[Formula 46]

$$\frac{\partial \rho_a}{\partial t} + \sum_{b=1}^{m} [\phi_{ab} \cdot \rho_{ab} \cdot (\mathbf{n}_{ab} \cdot \mathbf{u}_{ab})] = 0 \quad \cdots (46)$$

Being an equation which is derived according to the weighted residual integration method and uses only quantities that do not require Vertex or Connectivity, Equation (46) can be used as a discretized governing equation in this numerical analysis method.

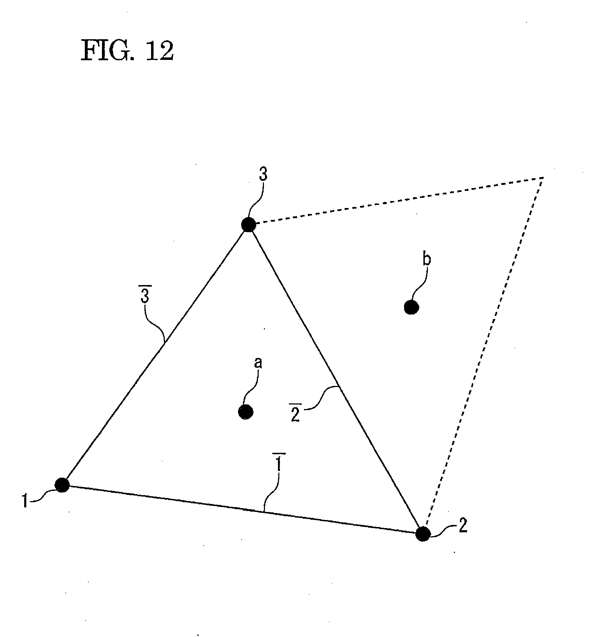

It was mentioned above that a discretized governing equation used this numerical analysis method is obtained by intentionally stopping, halfway, a process of deriving a conventional equation that uses quantities for defining geometric shapes according to the weighted residual integration method. That is, Equation (46) is obtained in the process of deriving an equation that uses Vertex etc. according to the weighted residual integration method. Fig. 12 is a schematic diagram showing a two-dimensional triangular cell. The following table shows an area of a triangle a shown in Fig. 12, a length of a side, and a normal vector. In the following table, symbol "×" means taking of a cross product.

[Table 1]

| Area of triangle a | $\dfrac{1}{2}\left\|\mathbf{r}_{12}\times\mathbf{r}_{13}\right\|$ |
|---|---|
| Length of side i | $\left\|\mathbf{r}_{i+1}-\mathbf{r}_i\right\|=\left\|\mathbf{r}_{ii+1}\right\|$ |
| Normal vector | $\dfrac{\mathbf{r}_{ii+1}\times(\mathbf{r}_i\times\mathbf{r}_{i+1})}{\left\|\mathbf{r}_{ii+1}\times(\mathbf{r}_i\times\mathbf{r}_{i+1})\right\|}$ |

In the case of two-dimensional triangular cells (see Fig. 12), a discretized governing equation using Vertex etc. is derived as the following Equation (47) from the mass conservation equation according to the weighted residual integration method:

[Formula 47]

$$\frac{\partial\rho_a}{\partial t}+\sum_{b=1}^{3}\left[\frac{\left|\mathbf{r}_{bb+1}\right|}{\left|\mathbf{r}_{12}\times\mathbf{r}_{13}\right|}\cdot\frac{\mathbf{r}_{bb+1}\times(\mathbf{r}_b\times\mathbf{r}_{b+1})}{\left|\mathbf{r}_{bb+1}\times(\mathbf{r}_b\times\mathbf{r}_{b+1})\right|}\cdot\rho_{ab}(\mathbf{u}_a+\mathbf{u}_b)\right]=0\quad\cdots(47)$$

In Equation (47), $[r]_i$ is the position vector of the Vertex i and symbol "×" means taking of a vector cross product. It is assumed that $\rho_{ab}$ and $\rho$ are fixed, and $[r]_{ij}$ is defined as $[r]_j$ - $[r]_i$ and $[r]_4$ is equal to $[r]_1$.

(2) Momentum conservation equation

The momentum conservation equation in the Eulerian coordinate system is given by the following Equation (48) which is in a differential form:

[Equation 48]

$$\frac{\partial}{\partial t}(\rho u_i)+\frac{\partial}{\partial x_j}(\rho u_j u_i)=\frac{\partial\sigma_{ij}}{\partial x_j}+\rho f_i\quad\cdots(48)$$

In Equation (48), $\sigma_{ij}$ (i = 1, 2, 3) represents the internal stress of a continuum and $f_i$ (i = 1, 2, 3) represents the external force (e.g., gravity) acting on the continuum. The other quantities are the same as in Equation (41). It is assumed that the subscript j conforms to the summation notation.

Equation (47) is a basic equation for a stress field in a structure, a material, a fluid, or the like.

Equation (47) is modified into the following Equation (49) when the former is integrated with respect to the volume V of the control volume of a control point according to the weighted residual integration method:

[Formula 49]

$$\int_V\frac{\partial\rho}{\partial t}(\rho u_i)dV+\int_S\rho(\mathbf{n}\cdot\mathbf{u})u_i dS=\int_S\sigma_{ij}\cdot n_j dS+\int_V\rho f_i\cdot dV\quad\cdots(49)$$

Equation (49) is modified into the following Equation (50) when it is converted into an algebraic equation through discretization for the control point a as shown in Fig. 5.

[Formula 50]

$$V_a \cdot \frac{\partial \rho_a u_{ia}}{\partial t} + \sum_{b=1}^{m}[S_{ab} \cdot \rho \cdot (\mathbf{n}_{ab} \cdot \mathbf{u}_{ab})u_{iab}]$$

$$= \sum_{b=1}^{m}[S_{ab} \cdot \sigma_{ijab} n_{jab}] + V_a \cdot f_{ia} \cdot \rho_a \quad \cdots (50)$$

The following Equation (51) which is a discretized version of the mass conservation equation is obtained by dividing Equation (50) by $V_a$ which is the volume of the control volume of the control point a and then introducing Equation (45):

[Formula 51]

$$\frac{\partial \rho_a u_{ia}}{\partial t} + \sum_{b=1}^{m}[\phi_{ab} \cdot \rho \cdot (\mathbf{n}_{ab} \cdot \mathbf{u}_{ab})u_{iab}]$$

$$= \sum_{b=1}^{m}[\phi_{ab} \cdot \sigma_{ijab} n_{jab}] + f_{ia} \cdot \rho \quad \cdots (51)$$

Considering the symmetry of the stress tensor in the momentum conservation equation, it is understood that an angular momentum conservation equation can be discretized in the same manner as the momentum conservation equation.

(3) Advection diffusion equation

A phenomenon of advection diffusion into a continuum of a certain substance C is expressed by the following Equation (52) which is an advection diffusion equation.

[Formula 52]

$$\frac{\partial}{\partial t}(\rho C) + \frac{\partial}{\partial x_j}(\rho u_j C) = \frac{\partial}{\partial x_j}\left[\mu_C \frac{\partial C}{\partial x_j}\right] + \rho \cdot q_C \quad \cdots (52)$$

In Equation (52), C represents the concentration of the substance C, $\mu_c$ is the diffusion coefficient of the substance C, $q_c$ is the source (sink) term of the substance C, p represents the density of the continuum, and $u_i$ represents the deformation rate of the continuum.

The following Equation (53) is obtained by integrating Equation (52) according to the weighted residual integration method and converting a resulting equation into a discretized governing equation by disretization:

[Formula 53]

$$\frac{\partial \rho_a C_a}{\partial t} + \sum_{b=1}^{m}[\phi_{ab} \cdot \rho \cdot (\mathbf{n}_{ab} \cdot \mathbf{u}_{ab}) \cdot C_{ab}]$$

$$= \sum_{b=1}^{m}\left[\phi_{ab} \cdot \mu_C \left(\frac{\partial C}{\partial n}\right)_{ab}\right] + V_a \cdot \rho_a \cdot q_{C_a} \quad \cdots (53)$$

The quantities with the subscript a, such as $C_a$, are physical quantities at the control point a, and the quantities with the subscript ab, such as $C_{ab}$, are physical quantities at the boundary between the control points a and b.

(4) Energy conservation equation

The energy conservation law is classified into the thermal energy conservation low and the kinetic energy conservation law. Since the kinetic energy conservation is included in the above-described momentum conservation, a generalized form of a thermal energy conservation equation is shown below as Equation (54).

[Formula 54]

$$\frac{\partial \rho U}{\partial t} + \frac{\partial}{\partial x_j}(\rho u_i \cdot U) = -\frac{\partial q_j}{\partial x_j} + \rho \cdot r + \sigma_{ij} \cdot D_{ij} \quad \cdots (54)$$

In Equation (54), U represents the internal energy of a continuum, $q_i$ is a heat flux vector, r is a heat source or the source (sink) term of thermal energy, $\sigma_{ij}$ is a stress tensor, and $D_{ij}$ is a deformation rate tensor. The double product term of the tensors $\sigma_{ij}$ and $D_{ij}$ is called a stress power. The summation notation is applied to the subscripts i and j. The following Equation (55) is obtained by integrating Equation (54) according to the weighted residual integration method and converting a resulting equation into a discretized governing equation by disretization:

[Formula 55]

$$\frac{\partial \rho_a U_a}{\partial t} + \sum_{b=1}^{m}[\phi_{ab} \cdot \rho \cdot (\mathbf{n}_{ab} \cdot \mathbf{u}_{ab}) \cdot U_{ab}]$$

$$= -\sum_{b=1}^{m}[\phi_{ab} \cdot (\mathbf{n}_{ab} \cdot \mathbf{q}_{ab})] + U_a \cdot \rho_a \cdot r_a + U_a \cdot (\mathbf{\sigma} : \mathbf{D}) \quad \cdots (55)$$

If flux vectors of all kinds of non-kinetic energy such as electric energy and chemical energy to the heat flux vector [q], a resulting energy conservation equation becomes an equation that expresses conservation of a very wide range of energy.

(5) Wave equation

Equations of physical laws which are in conservation forms such as the above-described mass conservation equation, momentum conservation equation, energy conservation equation, and advection diffusion equation are equations which have characteristics of both partial differential equations referred to as "parabolic" and "elliptic." On the other hand, wave equations each of which represents a manner of propagation of a wave or vibration is referred to as "hyperbolic" and has a general form that is given by the following Equation (56) :

[Formula 56]

$$\frac{\partial^2 u}{\partial t^2} = \alpha^2 \cdot \left[\frac{\partial^2 u}{\partial x^2} + \frac{\partial^2 u}{\partial y^2} + \frac{\partial^2 u}{\partial z^2}\right] \quad \cdots (56)$$

In Equation (56), u represents the amplitude or displacement and $\alpha$ represents the wave propagation velocity. The following Equation (57) is obtained by integrating Equation (56) according to the weighted residual integration method and converting a resulting equation into a discretized governing equation by disretization:

[Formula 57]

$$\frac{\partial^2 u_a}{\partial t^2} = \sum_{b=1}^{m}\left[\phi_{ab} \cdot \alpha^2 \cdot \left(\frac{\partial u}{\partial n}\right)_{ab}\right] \quad \cdots (57)$$

It is seen from Equation (56) that the discretization method that does not require geometric shapes of control volumes can be applied as it is in the spatial directions. However, a highly accurate time integration method is used because the equation includes the second-order derivative in the time direction.

Being equations which are derived according to the weighted residual integration method and use only quantities that do not require Vertex or Connectivity, Equations (46), (51), (53), (55), and (57) can be used as discretized governing equations in this numerical analysis method. The use of those discretized governing equations allows this numerical analysis method to numerical analyses of steady-state and non-steady-state physical phenomena of fluid dynamics, heat conduction, advection diffusion, structural mechanics, and waves as well as phenomena of combinations of some of them.

Incidentally, where this numerical analysis method is used, a numerical analysis can easily be performed on an assembly of components that have been designed in different of coordinate systems. This is because, in this numerical analysis method, no specific geometric shapes of control volumes are necessary (this is in contrast to the case of elements of finite element methods) and the distance between two adjoining control points need not be a distance in an absolute coordinate system and may be a "distance for calculation."

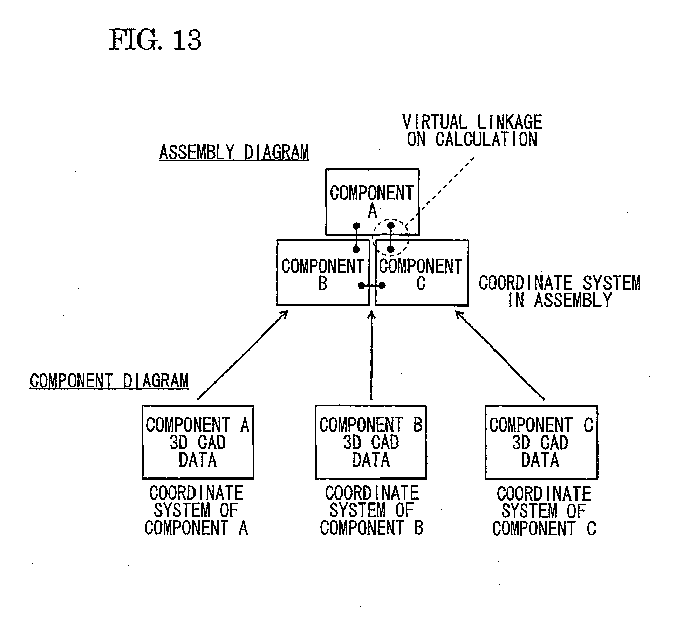

Therefore, as show in Fig. 13, this numerical analysis method makes it possible to perform a numerical analysis on an assembly of components A, B, and C that have been designed in different of coordinate systems without employing the same coordinate system for these components.

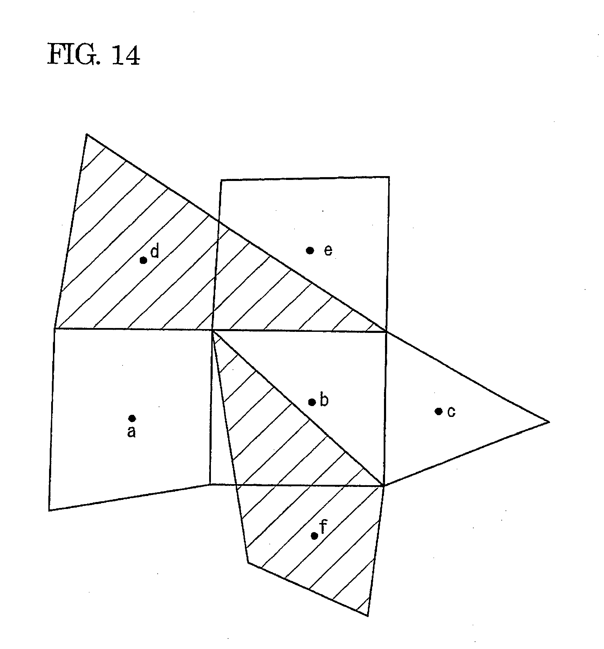

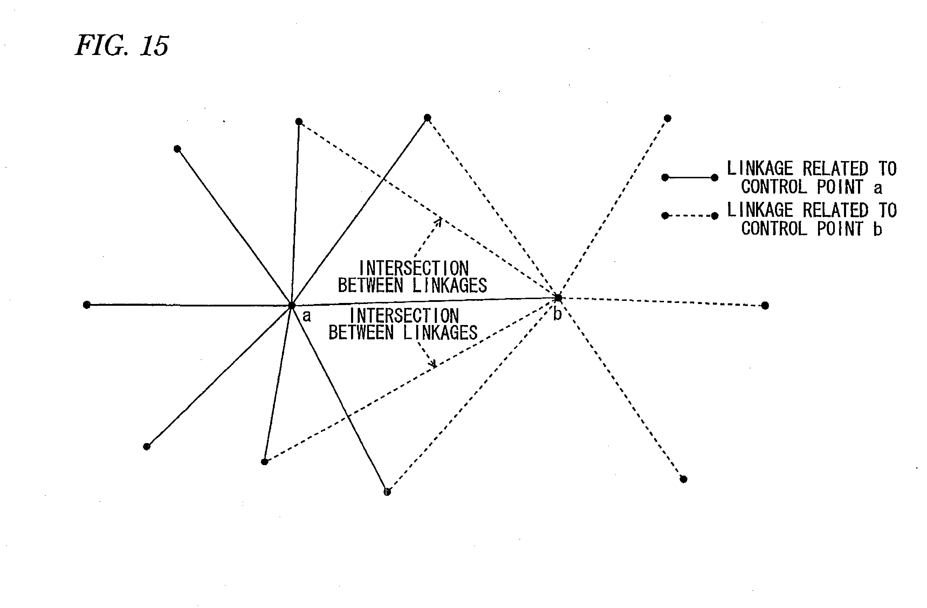

In numerical analysis methods generally called finite element methods, element crossings as shown in Figs. 14 and 15 are not permitted at all. Therefore, error output is made if an element crossing is found by application software used in a finite element method. As a result, as described above, in finite element methods, an enormous work load is necessary for generation of a calculation data model.

On the other hand, in this numerical analysis method, crossings as shown in Figs. 14 and 15 are permitted in connections between control points. Such pieces of information as volumes of control volumes (volumes of divisional regions) of respective control points, areas of boundary surfaces, and normal vectors of the boundary surface need not be associated with specific geometric shapes. Therefore, physical quantity values can be calculated even in the case where connections between control points cross each other.

As a result, the restrictions imposed on generation of a calculation data model are reduced and the degree of freedom of generation of a calculation data model is increased greatly. However, a physical phenomenon involving a fluid or the like has a nature that physical quantities at one control point are updated on the basis of pieces of information of control points that are close to the one control point. Therefore, connection with a distant control point may lower the calculation accuracy. Therefore, even in this numerical analysis method, it is preferable that connections be made between control points that are located within a proper range.

The present invention includes a patch data storage section for storing patch data in which an object to be subjected to a numerical analysis is expressed as plural polygons; a parameter storage section for storing parameters which are necessary for the numerical analysis; a voxel data storage section for storing voxel data obtained by dividing an analysis domain including the object into plural rectangular parallelepipeds; a voxel data generating section for defining the voxel data according to the parameters stored in the parameter storage section, giving voxel attributes to respective voxels, and storing the voxel attributes in the voxel data storage section; an initial point data storage section for storing initial point data to be used for domain division of the analysis domain; an initial point data generating section for generating the initial point data which are smaller in number than the voxels using center points of the voxels, and storing the generated initial point data in the initial point data storage section; a divisional region data storage section for storing divisional region data obtained by dividing the object into plural divisional regions; a divisional region data generating section for defining divisional regions in the obj ect which are plural ones of the voxels on the basis of the voxel attributes stored in the voxel data storage section and the initial point data stored in the initial point data storage section, and storing the divisional region data of the defined divisional regions in the divisional region data storage section; a calculation data storage section for storing calculation data to be used for the numerical analysis; and a calculation data generating section for generating boundary surface data of each divisional region on the basis of the divisional region data stored in the divisional region data storage section, and storing the generated boundary surface data in the calculation data storage section as the calculation data.

In the invention, the divisional region data generating section generates the divisional regions by determining a divisional region to which each voxel belongs by selecting an initial point having a shortest distance from the center point of each voxel among the initial point data stored in the initial point data storage section.

In the invention, the divisional region data generating section generates the divisional regions for all slicing surfaces in the analysis domain by defining the slicing surfaces being boundary surfaces of the voxels that are perpendicular to a prescribed axis, defining cross sections which are obtained when each of the slicing surfaces crosses spheres which have the initial points as their centers, defining potential solids which extend from the cross sections and have heights that vary depending on distances from the initial points, and defining divisional regions on the slicing surface on the basis of image data that are drawn by performing 3D hidden surface processing on the potential solids.

In the invention, the initial point data generating section selects inner voxels located inside the object from the voxels on the basis of the patch data stored in the patch data storage section and the voxel data stored in the voxel data storage section, defines spheres that are inscribed on inner voxels each of which lacks an adjacent voxel among the selected inner voxels, defines on-sphere points on the spheres and defines on-wall points on a wall of the object, defines division points between each pair of an on-sphere point and an on-wall point, and employs the division points and the center points of the voxels as the initial points.

The invention provides generating method for calculation data in a generating device for calculation data, the generating device including: a patch data storage section which is stored with patch data in which an object to be subjected to a numerical analysis is expressed as plural polygons; a parameter storage section for storing parameters which are necessary for the numerical analysis; a voxel data storage section for storing voxel data obtained by dividing an analysis domain including the object into plural rectangular parallelepipeds; an initial point data storage section for storing initial point data to be used for domain division of the analysis domain; a divisional region data storage section for storing divisional region data obtained by dividing the object into plural divisional regions; and a calculation data storage section for storing calculation data to be used for the numerical analysis, the generating method including: a voxel data generating step of defining the voxel data according to the parameters stored in the parameter storage section, giving voxel attributes to respective voxels, and storing the voxel attributes in the voxel data storage section; an initial point data generating step of generating the initial point data which are smaller in number than the voxels using center points of the voxels, and storing the generated initial point data in the initial point data storage section; a divisional region data generating step of defining, in the object, divisional regions which are plural ones of the voxels on the basis of the voxel attributes stored in the voxel data storage section and the initial point data stored in the initial point data storage section, and storing the divisional region data of the defined divisional regions in the divisional region data storage section; and a calculation data generating step of generating boundary surface data of each divisional region on the basis of the divisional region data stored in the divisional region data storage section, and storing the generated boundary surface data in the calculation data storage section as the calculation data.

In the invention, the divisional region data generating step generates the divisional regions by determining a divisional region to which each voxel belongs by selecting an initial point having a shortest distance from the center point of each voxel among the initial point data stored in the initial point data storage section.

In the invention, the divisional region data generating step generates the divisional regions for all slicing surfaces in the analysis domain by defining the slicing surfaces being boundary surfaces of the voxels that are perpendicular to a prescribed axis, defining cross sections which are obtained when each of the slicing surfaces crosses spheres which have the initial points as their centers, defining potential solids which extend from the cross sections and have heights that vary depending on distances from the initial points, and defining divisional regions on the slicing surface on the basis of image data that are drawn by performing 3D hidden surface processing on the potential solids.

In the invention, the initial point data generating step selects inner voxels located inside the object from the voxels on the basis of the patch data stored in the patch data storage section and the voxel data stored in the voxel data storage section, defines spheres that are inscribed on inner voxels each of which lacks an adjacent voxel among the selected inner voxels, defines on-sphere points on the spheres and defines on-wall points on a wall of the object, defines division points between each pair of an on-sphere point and an on-wall point, and employs the division points and the center points of the voxels as the initial points.

The invention provides generating program for calculation data for causing a computer to generate calculation data, the computer being provided in a generating device for calculation data, the generating device including: a patch data storage section which is stored with patch data in which an object to be subjected to a numerical analysis is expressed as plural polygons; a parameter storage section for storing parameters which are necessary for the numerical analysis; a voxel data storage section for storing voxel data obtained by dividing an analysis domain including the object into plural rectangular parallelepipeds; an initial point data storage section for storing initial point data to be used for domain division of the analysis domain; a divisional region data storage section for storing divisional region data obtained by dividing the object into plural divisional regions; and a calculation data storage section for storing calculation data to be used for the numerical analysis, the generating program causing the computer to execute: a voxel data generating step of defining the voxel data according to the parameters stored in the parameter storage section, giving voxel attributes to respective voxels, and storing the voxel attributes in the voxel data storage section; an initial point data generating step of generating the initial point data which are smaller in number than the voxels using center points of the voxels, and storing the generated initial point data in the initial point data storage section; a divisional region data generating step of defining, in the object, divisional regions which are plural ones of the voxels on the basis of the voxel attributes stored in the voxel data storage section and the initial point data stored in the initial point data storage section, and storing the divisional region data of the defined divisional regions in the divisional region data storage section; and a calculation data generating step of generating boundary surface data of each divisional region on the basis of the divisional region data stored in the divisional region data storage section, and storing the generated boundary surface data in the calculation data storage section as the calculation data.

In the invention, the divisional region data generating step generates the divisional regions by determining a divisional region to which each voxel belongs by selecting an initial point having a shortest distance from the center point of each voxel among the initial point data stored in the initial point data storage section.

In the invention, the divisional region data generating step generates the divisional regions for all slicing surfaces in the analysis domain by defining the slicing surfaces being boundary surfaces of the voxels that are perpendicular to a prescribed axis, defining cross sections which are obtained when each of the slicing surfaces crosses spheres which have the initial points as their centers, defining potential solids which extend from the cross sections and have heights that vary depending on distances from the initial points, and defining divisional regions on the slicing surface on the basis of image data that are drawn by performing 3D hidden surface processing on the potential solids.

In the invention, the initial point data generating step selects inner voxels located inside the object from the voxels on the basis of the patch data stored in the patch data storage section and the voxel data stored in the voxel data storage section, defines spheres that are inscribed on inner voxels each of which lacks an adjacent voxel among the selected inner voxels, defines on-sphere points on the spheres and defines on-wall points on a wall of the object, defines division points between each pair of an on-sphere point and an on-wall point, and employs the division points and the center points of the voxels as the initial points.

ADVANTAGEOUS EFFECTS OF THE INVENTION

The invention solves the problems of the conventional numerical analysis methods, that is, the finite element method, the finite volume method, the voxel method, the improved version of the voxel method, and the particle method, and thereby provides an advantage that the work load of generation of calculation data can be reduced which is to be input to a numerical analysis apparatus which can reduce the computation load in the solver process without lowering the accuracy of analysis.

BRIEF DESCRIPTION OF THE DRAWINGS

Fig. 1 is a conceptual diagram illustrating an example calculation data model of a conventional finite element method.
Fig. 2 is a conceptual diagram illustrating an example calculation data model of a conventional finite volume method.
Fig. 3 is a tale for comparison between the present invention and conventional numerical analysis method.
Fig. 4 is a chart for detailed comparison between the invention and a conventional finite volume method.
Fig. 5 is a conceptual diagram illustrating an example calculation data model of a numerical analysis method of the invention.
Fig. 6 is a schematic diagram showing plural divisional regions and serving to illustrate conditions for satisfaction of a conservation law of a physical quantity in the numerical analysis method of the invention.
Fig. 7 is a schematic diagram showing a projection plane which extends infinitely, passes through a control point, and has a unit normal vector extending in an arbitrary direction.
Fig. 8 is a schematic diagram illustrating a condition for satisfaction of a physical quantity in a case of a two-dimensional triangular control volume.
Fig. 9 is a schematic diagram illustrating a condition for satisfaction of a physical quantity in a case of a spherical control volume.
Fig. 10 is a schematic diagram illustrating near-neighbor search in a particle method.
Fig. 11 is a schematic diagram showing a control volume used in the numerical analysis method of the invention.
Fig. 12 is a schematic diagram showing a two-dimensional triangular cell.
Fig. 13 is a schematic diagram showing a state that components that have been designed in different coordinate systems are assembled.
Fig. 14 is a schematic diagram showing element crossings.
Fig. 15 is a schematic diagram showing control points connections between which have crossings.
Fig. 16 is a block diagram schematically showing the hardware configuration of a numerical analysis apparatus.
Fig. 17 is a flowchart showing a numerical analysis method.
Fig. 18 is a flowchart of a pre process which is executed in the numerical analysis method.
Fig. 19 is a flowchart of a solver process which is executed in the numerical analysis method.
Fig. 20 is a flowchart of a numerical analysis method of a case that an analysis includes a moving boundary.
Fig. 21 is a block diagram showing the configuration of a first embodiment.
Fig. 22 is a table showing a table structure of a parameter storage section 12 shown in Fig. 21.
Fig. 23 shows example shape data which is stored in a shape data storage section 15 shown in Fig. 21.
Fig. 24 shows a positional relationship between an analysis domain and an object to be analyzed.
Fig. 25 shows example patch data which is stored in a patch data storage section 17 shown in Fig. 21.
Fig. 26 is a table showing a table structure of a patch data storage section 17 shown in Fig. 21.
Fig. 27 shows the structure of a collection of voxels.
Fig. 28 is a table showing a table structure of a voxel data storage section 19 shown in Fig. 21.
Fig. 29 illustrates a method for calculating data which defines each voxel.

Fig. 30 is a table showing a table structure of an initial point data storage section 21 shown in Fig. 21.

Fig. 31 is a table showing a table structure of a divisional region data storage section 24 shown in Fig. 21.

Fig. 32 is a table showing a table structure of an interim data storage section 26 shown in Fig. 21.

Fig. 33 is a table showing a table structure of a calculation data storage section 27 shown in Fig. 21.

Fig. 34 is a flowchart showing a processing operation that a voxel data generating section 18 shown in Fig. 21 generates voxel data.

Fig. 35 is a flowchart showing a processing operation that a divisional region data generating section 23 generates divisional region data and stores them in the divisional region data storage section 24.

Fig. 36 is a flowchart showing a processing operation that a calculation data generating section 25 generates calculation data on the basis of the divisional region data and stores the generated calculation data in the calculation data storage section 27.

Fig. 37 is a block diagram showing the configuration of a second embodiment.

Fig. 38 shows the functional configuration of a graphic board 28 shown in Fig. 37.

Fig. 39 is a chart illustrating a coordinate system employed in the graphic board 28 shown in Fig. 37.

Fig. 40 is a chart illustrating the structure of a potential solid.

Fig. 41 is a chart illustrating the structure of triangle data which is input to the graphic board 28.

Fig. 42 is a chart illustrating triangle drawing processing performed in the graphic board 28.

Fig. 43 is a flowchart showing a processing operation of a divisional region generating section 231 shown in Fig. 37.

Fig. 44 is a flowchart showing a processing operation of a triangle drawing section of the graphic board 28 shown in Fig. 37.

Fig. 45 is a block diagram showing the configuration of a third embodiment.

Fig. 46 is a block diagram showing the configuration of an initial point data generating section 20 shown in Fig. 45.

Fig. 47 is a flowchart showing how a voxel data generating section 201 shown in Fig. 46 operates.

Fig. 48 is a flowchart showing how an on-wall point/on-sphere point data generating section 203 shown in Fig. 46 operates.

Fig. 49 is a flowchart showing how a division point data generating section 206 shown in Fig. 46 operates.

Fig. 50 is a flowchart showing how an initial point data output section 208 shown in Fig. 46 operates.

Fig. 51 is a block diagram showing a modification of the configuration shown in Fig. 46.

Fig. 52 is a flowchart showing how a inner voxel data modifying section 210 shown in Fig. 51 operates.

Fig. 53 is a chart illustrating inner voxel data.

Fig. 54 is a chart illustrating example on-sphere points.

Fig. 55 is a chart illustrating on-wall points, on-sphere points, and the center points of voxels.

Fig. 56 is a chart illustrating an operation of generating division points.

Fig. 57 is a chart illustrating example point groups for formation of a boundary layer.

Fig. 58 is a chart illustrating inner voxel data.

Fig. 59 is a chart illustrating example divisional region data.

MODES FOR CARRYING OUT THE INVENTION

First, a numerical analysis apparatus which can solve the problems of the conventional numerical analysis methods, that is, the finite element method, the finite volume method, the voxel method, the improved version of the voxel method, and the particle method, and thereby reduce the computation load in the solver process without lowering the accuracy of analysis will be described with reference to the drawings. A numerical analysis apparatus to which calculation data generated by a generating device for calculation data according to the present invention is input will be described below. The following description will be directed to a case of calculating air flow velocities in a vehicle compartment space.

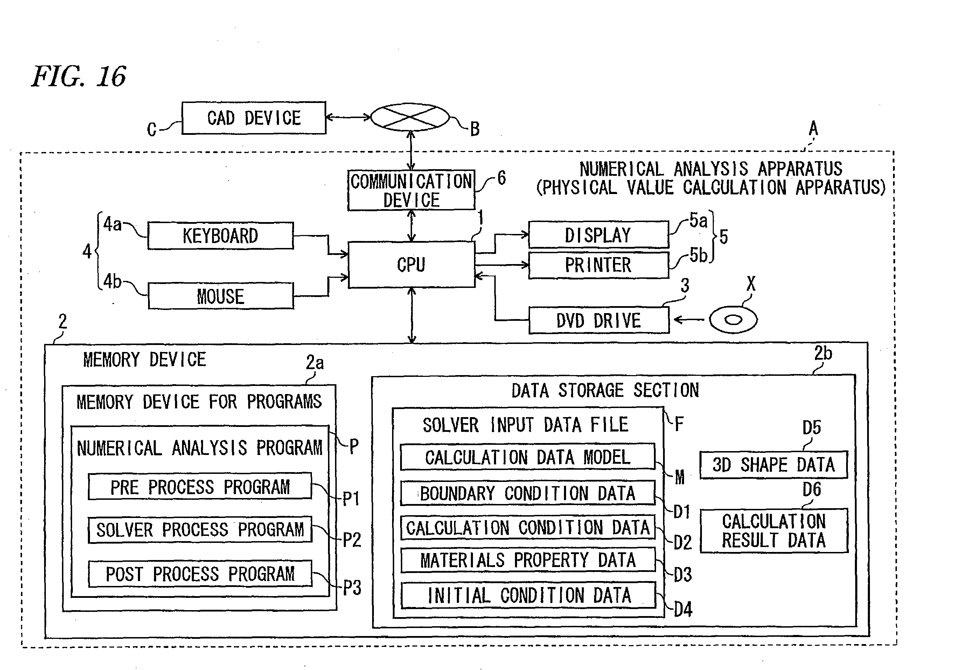

Fig. 16 is a block diagram schematically showing the hardware configuration of a numerical analysis apparatus A. As shown in this figure, the numerical analysis apparatus A is a computer such as a personal computer or a workstation and is equipped with a CPU 1, a memory device 2, a DVD (digital versatile disc) drive 3, input devices 4, output devices 5, and a communication device 6.

Electrically connected to the memory device 2, the DVD drive 3, the input devices 4, the output devices 5, and the communication device 6, the CPU 1 processes signals that are input from these devices and outputs processing results.

The memory device 2, which is an internal memory device such as a memory or an external memory device such as a hard disk drive, stores information that is input from the CPU 1 and outputs stored information according to an instruction that is input from the CPU 1.

The memory device 2 is provided with a program storage section 2a and a data storage section 2b.

The program storage section 2a is stored with a numerical analysis program P. The numerical analysis program P is an application program to be executed by a prescribed OS and serves to cause the numerical analysis apparatus A which is a computer to function so as to perform a numerical analysis. The numerical analysis program P causes the numerical analysis apparatus A to function as, for example, a calculation data model generating section and a physical quantity calculating section. As shown in Fig. 16, the numerical analysis program P has a pre process program P1, a solver process program P2, and a post process program P3.

The pre process program P1 is a program for causing the numerical analysis apparatus A to execute a pre process which is necessary for execution of a solver process, and causes the numerical analysis apparatus A to generate a calculation data model by letting it function as the calculation data model generating section. Furthermore, the pre process program P1 causes the numerical analysis apparatus A to set conditions that are necessary for execution of the solver process, and to generate a solver input data file F which is a collection of the above calculation data model and the thus-set conditions.

In causing the numerical analysis apparatus A to function as the calculation data model generating section, first, the pre process program P1 causes the numerical analysis apparatus A to acquire 3D shape data including an analysis space and to generate an analysis domain which indicates the analysis space included in the acquired 3D shape data.

Then, the pre process program P1 forms, for the numerical analysis apparatus A, a limited number of divisional regions of the analysis domain. As described later in detail, a discretized governing equation (which uses only quantities that do not require Vertex or Connectivity and is derived according to the weighted residual integration method) which was described in describing the numerical analysis method is used in the solver process. Therefore, in generating a calculation data model, arbitrary shapes of divisional regions can be selected under conditions for satisfaction of a conservation law.

In causing the numerical analysis apparatus A to function as the calculation data model generating section, the pre process program P1 causes the numerical analysis apparatus A to perform processing of virtually placing one control point inside each of the divisional regions which are included in the generated analysis domain indicating the compartment space, and to store control point arrangement information and volume data of control volumes of the control points.

In causing the numerical analysis apparatus A to function as the calculation data model generating section, the pre process program P1 causes the numerical analysis apparatus A to areas and normal vectors of boundary surfaces between the divisional regions and to store the calculated areas and normal vectors of the boundary surfaces.

Further, in causing the numerical analysis apparatus A to function as the calculation data model generating section, the pre process program P1 causes the numerical analysis apparatus A to generate links of the control volumes (control points) and to store the generated links.

Then, the pre process program P1 causes the numerical analysis apparatus A to generate a calculation data model by collecting together the volumes of the control volumes of the control points, the areas and the normal vectors of the boundary surfaces, the arrangement information (coordinates) of the control points (i.e., divisional regions), and the links.

In causing the numerical analysis apparatus A to set conditions that are necessary for execution of the solver process, the pre process program P1 causes the numerical analysis apparatus A to set material property values, boundary conditions, initial conditions, and calculation conditions. The material property values are the density, the viscosity coefficient, etc. of the air inside the compartment space. The boundary conditions are conditions that prescribe laws of exchange of physical quantities between the control points, and are a discretized governing equation (above-described Equation (10)) which is based on the Navier-Stokes equation and a discretized governing equation (above-described Equation (11)) which is based on the continuity equation. The boundary conditions include information indicating divisional regions that are adjacent to a boundary surface between the compartment space and an external space. The initial conditions are conditions that indicate first physical quantity values to be used when the solver process is executed, and are initial values of flow velocities in the respective divisional regions. The calculation conditions are conditions of a calculation in the solver process and are, for example, the number of iterations and a convergence criterion.

The pre process program P1 causes the numerical analysis apparatus A to form a GUI (graphical user interface). More specifically, the pre process program P1 causes a display 5a (one output device 5) to display a graphic image and establishes a state that manipulations can be performed using a keyboard 4a and a mouse 4b (input devices 4).

The solver process program P2 (physical quantity calculation program) is a program for causing the numerical analysis apparatus A to execute the solver process, and causes the numerical analysis apparatus A to function as a physical quantity calculating apparatus.

In causing the numerical analysis apparatus A to function as the physical quantity calculating apparatus, the solver process program P2 causes the numerical analysis apparatus A to calculate physical quantity values in the analysis domain using the solver input data file F which includes the volumes of the control volumes and the areas and the normal vectors of the boundary surfaces which are contained in the calculation data model.

In causing the numerical analysis apparatus A to function as the physical quantity calculating apparatus, the solver process program P2 causes the numerical analysis apparatus A to generate discrete coefficient matrices of the Navier-Stokes equation and the continuity equation which are contained in the solver input data file F and to generate data tables for matrix formation.

In causing the numerical analysis apparatus A to function as the physical quantity calculating apparatus, the solver process program P2 causes the numerical analysis apparatus A to formulate a large sparse matrix for matrix calculation given by the following Equation (58) on the basis of the discretized governing equation (above-described Equation (10)) which is based on the Navier-Stokes equation and the discretized governing equation (above-described Equation (11)) which is based on the continuity equation.

[Formula 58]

$$\mathbf{A} \cdot \mathbf{X} = \mathbf{B} \quad \cdots (58)$$

In Equation (58), [A] is a large sparse matrix, [B] is a boundary condition vector, and [X] is a flow velocity solution.

Where the above discretized governing equations have an appended condition such as incompressibility, the solver process program P2 causes the numerical analysis apparatus A to incorporate the appended condition into the matrix equation. And the solver process program P2 causes the numerical analysis apparatus A to acquire a final calculation result by calculating a solution of the matrix equation by a CG (conjugate gradient) method, for example, updating the solution using the following Equation (59), and a convergence condition judgment.

[Formula 59]

$$\mathbf{A}(\mathbf{X}^n) \cdot \mathbf{X}^{n+1} = \mathbf{B}(\mathbf{X}^n) \quad \cdots (59)$$

The post process program P3 is a program for causing the numerical analysis apparatus A to execute the post process, and causes the numerical analysis apparatus A to execute a process which is based on the calculation result acquired by the solver process. More specifically, the post process program P3 causes the numerical analysis apparatus A to execute a process of visualizing the calculation result and an extraction process. The visualization process is a process of causing the output devices 5 to make cross section contour display, vector display, equi-contour surface display, animation display, or the like. The extraction process is a process of causing the output devices 5 to extract quantitative values in a region specified by an operator and output them in the form of numerical values or a graph or to extract quantitative values in a region specified by an operator and output them as a file. Furthermore, the post process program P3 the numerical analysis apparatus A to perform automatic report generation and display and analyze calculation residuals.

As shown in Fig. 16, the data storage section 2b is to store a solver input data file F which contains a calculation data model M, boundary condition data D1 indicating boundary conditions, calculation condition data D2 indicating calculation conditions, material property data D3 indicating material property values, and initial condition data D4 indicating initial conditions, 3D shape data D5, calculation result data D6, etc. Furthermore, the data storage section 2b stores interim data which are generated in the process of computation of the CPU 1.

The DVD drive 3 is constructed so that a DVD medium X can be inserted into it, and outputs data stored in the DVD medium X according to an instruction that is input from the CPU 1. The numerical analysis program P is stored in the DVD medium X, and the DVD drive 3 outputs the numerical analysis program P stored in the DVD medium X according to an instruction that is input from the CPU 1.

The input devices 4 are man-machine interfaces between the numerical analysis apparatus A and an operator, and are the keyboard 4a and the mouse 4b which are pointing devices. The output devices 5 are to output, in a visualized manner, a signal that is input from the CPU 1, and are the display 5a and a printer 5b. The communication device 6 is to exchange data between the numerical analysis apparatus A and an external apparatus such as a CAD apparatus C, and is electrically connected to a network B such as a local area network.

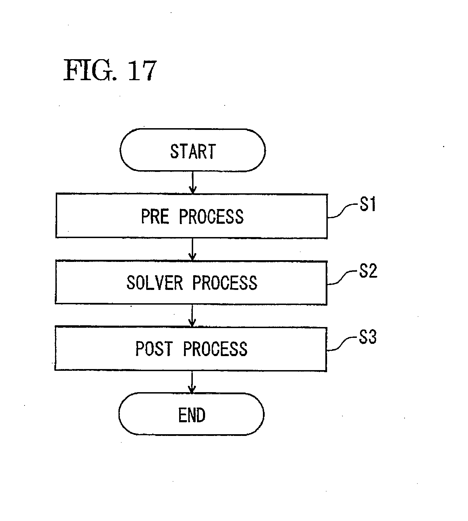

Next, a numerical analysis method using the above-configured numerical analysis apparatus A will be described with reference to flowcharts of Figs. 17-19.

As shown in the flowchart of Fig. 17, the numerical analysis method consists of the pre process (step S1), the solver process (step S2), and the post process (step S3).

Before performing the numerical analysis method, the CPU 1 takes out, from the DVD medium X which is inserted in the DVD drive 3, the numerical analysis program P stored therein, and stores it in the program storage section 2a of the memory device 2. When receiving a signal as an instruction to start a numerical analysis from the input devices 4, the CPU 1 performs a numerical analysis according to the numerical analysis program P stored in the memory device 2. More specifically, the CPU 1 executes the pre process (step S1) according to the pre process program P1 stored in the program storage section 2a, executes the solver process (step S2) according to the solver process program P2 stored in the program storage section 2a, and executes the post process (step S3) according to the post process program P3 stored in the program storage section 2a. As the CPU 1 executes the pre process (step S1) according to the pre process program P1, the numerical analysis apparatus A functions as the calculation data model generating section. As the CPU 1 executes the solver process (step S2) according to the solver process program P2, the numerical analysis apparatus A functions as the physical quantity calculating section.

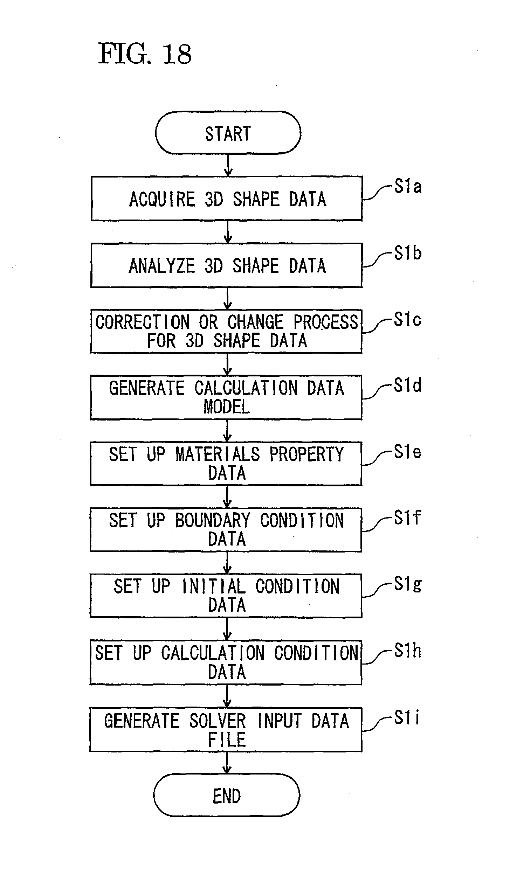

Fig. 18 is a flowchart of the pre process (step S1). As shown in this figure, upon a start of the pre process (step S1), the CPU 1 causes the communication device 6 to acquire 3D shape data D5 including vehicle compartment space data from the CAD apparatus C over the network B (step S1a). The CPU 1 stores the acquired 3D shape data D5 in the data storage section 2b of the memory device 2.

Then, the CPU 1 generates a calculation data model (step S1d). More specifically, first, in view of the 3D shape data D5, the CPU 1 generates an analysis domain which covers the entire domain of the analysis space and consists of divisional regions. As for divisional regions constituting an analysis domain, as described above in detail in describing the principle, since a calculation data model not having Vertex or Connectivity is to be generated, a calculation data model can be generated without imposing no restrictions on geometric shapes of divisional regions. That is, in generating a calculation data model, divisional regions constituting an analysis domain can be given arbitrary shapes.

Next, the CPU 1 virtually places one control point in each of the divisional regions which are included in the analysis domain indicating the compartment space. In this example, the CPU 1 calculates the center of gravity of each divisional region and virtually places one control point at the calculated center of gravity of each divisional region. Then, the CPU 1 calculates arrangement information of the control points and volumes of control volumes (i.e., volumes of the divisional regions where the control volumes are located) of the respective control points, and stores in the data storage section 2b of the memory device 2 temporarily. The CPU 1 calculates areas and normal vectors of boundary surfaces between the divisional regions, and stores the calculated areas and normal vectors of the boundary surfaces in the data storage section 2b of the memory device 2 temporarily. The CPU 1 generates links and stores them in the data storage section 2b of the memory device 2 temporarily.

Then, the CPU 1 generates a calculation data model M by forming a database using the arrangement information of the control points, the volumes of the control volumes of the respective control points, the areas and the normal vectors of the boundary surfaces, and the links which are stored in the data storage section 2b, and stores the generated calculation data model M in the data storage section 2b of the memory device 2.

At step S1d, a final analysis domain K2 is generated by dividing the analysis domain including the compartment space into divisional regions having the same shape, deleting divisional regions that stick out of the compartment space, and placing new divisional regions in the resulting gaps between the analysis domain and the compartment space. Thus, a state is established in which the entire domain of the compartment space is filled with the divisional regions which do not overlap with each other. As a result, the calculation data model satisfies the above-described three conditions (a)-(c) for satisfaction of a conservation law.

At step S1d, divisional regions are formed first. Then, control points are placed, and volumes of the divisional regions where the respective control points are placed are assigned to the respective control points.

However, it is also possible to place control points in the analysis domain first and then assign volumes to the respective control points. More specifically, for example, each control point is given a weight according to a radius at which the circumference reaches another control point and distances to control points with which the control point concerned has connection relationships (i.e., correlated by links). In this case, the volume $V^+$ to be assigned to a control point i is given by the following Equation (60) where $w_i$ represents the weight for the control point i and $V_i$ represents a reference volume:

[Formula 60]

$$V_i = w_i \cdot V^+ \quad \cdots (60)$$

Since the sum of the volumes $V_i$ of the respective control points is equal to the volume $V_{total}$ of the analysis domain, the following Equation (61) holds:

[Formula 61]

$$\sum_i V_i = V^+ \cdot \sum_i w_i = V_{total} \quad \cdots (61)$$

As a result, the reference volume $V^+$ can be calculated according to the following Equation (62):

[Formula 62]

$$V^+ = \frac{V_{total}}{\sum_i w_i} \quad \cdots (62)$$

Therefore, volumes to be assigned to the respective control points can be calculated according to Equations (61) and (62). In the pre process, this method makes it possible to calculate volumes of divisional regions to be used in a calculation data model without using Vertex or Connectivity.

In generating a calculation data model (step S1d), the CPU 1 forms a GUI. If an instruction (e.g., an instruction indicating a density of divisional regions or an instruction indicating shapes of divisional regions) through the GUI, the CPU 1 performs processing which reflects the instruction. Therefore, an operator can adjust the arrangement of control points and the shapes of divisional regions arbitrarily by manipulating the GUI. However, the CPU 1 checks an instruction that is input through the GUI whether or not it conforms to the three conditions for satisfaction of a conservation law which are stored in the numerical analysis program. If the instruction does not conform to those conditions, the CPU 1 causes the display 5a to display a message to that effect.

Subsequently, the CPU 1 sets material property data (step S1e). More specifically, the CPU 1 sets material property data by displaying a material property value input picture (GUI) on the display 5a and temporarily storing, as material property data D3, in the data storage section 2b, signals indicating material property values that are input using the keyboard 4a or the mouse 4b. The term "material property values" as used herein means property values of the fluid (i.e., air) existing in the compartment space, and are values of the density, the viscosity coefficient, etc. of the air.

Then, the CPU 1 sets boundary condition data (step S1f). More specifically, the CPU 1 sets boundary condition data by displaying a boundary condition input picture (GUI) on the display 5a and temporarily storing, as boundary condition data D1, in the data storage section 2b, signals indicating boundary conditions that are input using the keyboard 4a or the mouse 4b. The term "boundary conditions" as used herein means a discretized governing equation(s) which governs a physical phenomenon occurring in the compartment space, information indicating control points that are adjacent to the boundary surface between the compartment space and an external space, conditions of heat conduction between the compartment space and the external space, etc.

Since it is an object of the numerical analysis method to calculate flow velocities in the compartment space by a numerical analysis, the discretized governing equation (Equation (10)) which is based on the Navier-Stokes equation and the discretized governing equation (Equation (11)) which is based on the continuity equation are used as the above-mentioned discretized governing equations. For example, these discretized governing equations are selected from plural discretized governing equations that are contained in the numerical analysis program P in advance and displayed on the display 5a by an operator using the keyboard 4a or the mouse 4b.

Then, the CPU 1 sets initial condition data (step S1g). More specifically, the CPU 1 sets initial condition data by displaying an initial condition input picture (GUI) on the display 5a and temporarily storing, as initial condition data D4, in the data storage section 2b, signals indicating initial conditions that are input using the keyboard 4a or the mouse 4b. The term "initial conditions" as used herein means initial flow velocities at the respective control points (respective divisional regions).

Then, the CPU 1 sets calculation condition data (step S1h). More specifically, the CPU 1 sets calculation condition data by displaying a calculation condition input picture (GUI) on the display 5a and temporarily storing, as calculation condition data D2, in the data storage section 2b, signals indicating calculation conditions that are input using the keyboard 4a or the mouse 4b. The term "calculation conditions" as used herein means calculation conditions to be used in the solver process (step S2), and are the number of iterations and a convergence criterion, for example.

Subsequently, the CPU 1 generates a solver input data file F (step Sli). More specifically, the CPU 1 completes a solver input data file F by incorporating, into the solver input data file F, the calculation data model M that was generated at step S1d, the material property data D3 that was set at step S1e, the boundary condition data D1 that was set at step S1f, the calculation condition data D2 that was set at step S1g, and the calculation condition data D2 that was set at step S1h. The solver input data file F is stored in the data storage section 2b.

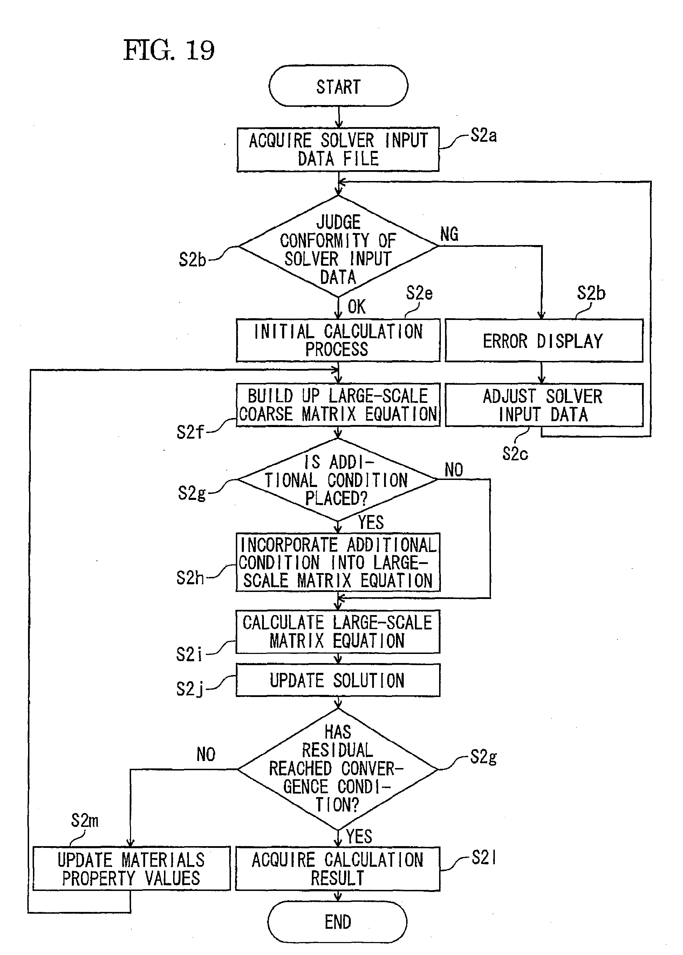

Upon completion of the above-described pre process (step S1) the CPU 1 executes the solver process (step S2) shown in the flowchart of Fig. 19 according to the solver process program P2. As shown in Fig. 19, upon a start of the solver process (step S2), at step S2a the CPU 1 acquires the solver input data file F that was generated in the pre process (step S1). Where the pre process and the solver process are executed by a single apparatus (numerical analysis apparatus A) as in the above-described numerical analysis method, step S2a can be omitted because the solver input data file F is already stored in the data storage section 2b. Where the pre process (step S1) and the solver process (step S2) are executed by different apparatus, step S2a needs to be executed because it is necessary to acquire a solver input data file F which is transmitted over a network or transported being stored in a removable disc.

Then, the CPU 1 judges compatibility of solver input data (step S2b). The solver input data is the data contained in the solver input data file F, that is, the calculation data model M, the boundary condition data D1, calculation condition data D2, the material property data D3, and the initial condition data D4. More specifically, the CPU 1 judges compatibility of the solver input data by analyzing whether or not the solver input data file F contains all solver input data that allow the solver process to perform a physical quantity calculation.

If judging that the solver input data is incompatible, the CPU 1 causes the display 5a to display an error message (step S2b) and a picture which allows input of data of an incompatible portion. Then, the CPU 1 adjusts the solver input data on the basis a signal that is input through a GUI (step S2c) and executes step S2a again.

On the other hand, if judging at step S2b that the solver input data is compatible, the CPU 1 executes an initial calculation process (step S2e). More specifically, the CPU 1 performs an initial calculation process by generating discrete coefficient matrices on the basis of the discretized governing equations contained in the boundary condition data D1 (i.e., the discretized governing equation (Equation (10)) which is based on the Navier-Stokes equation and the discretized governing equation (Equation (11)) which is based on the continuity equation) and further generating data tables for matrix calculation.

Then, the CPU 1 formulates a large sparse matrix equation (step S2f). More specifically, the CPU 1 formulates a large sparse matrix equation for matrix calculation given by the above-described Equation (58) on the basis of the discretized governing equation (Equation (10)) which is based on the Navier-Stokes equation and the discretized governing equation (Equation (11)) which is based on the continuity equation.

Then, the CPU 1 judges whether or not the discretized governing equations have an appended condition such as in compressibility or contact. Such an appended condition is contained in the solver input data file F as boundary condition data. If judging that the discretized governing equations have an appended condition, the CPU 1 incorporates the appended condition into the large sparse matrix equation (step S2h) and calculates the large sparse matrix equation (step S2i). On the other hand, if judging that the discretized governing equations do not have any appended condition, the CPU 1 calculates the large sparse matrix equation (step S2i) without incorporating any appended condition into the large sparse matrix equation (step S2h). The CPU 1 solves the large sparse matrix equation by a CG (conjugate gradient) method, for example, and updates the solution using the above-described Equation (59) (step S2j).

Subsequently, the CPU 1 judges whether or not residuals of Equation (59) have satisfied the convergence condition (step S2g). More specifically, the CPU 1 calculates residuals of Equation (59) and judges whether or not the residuals of Equation (59) have satisfied the convergence condition by comparing the residuals with the convergence condition contained in the calculation condition data D2. If judging that the residuals have not satisfied the convergence condition, the CPU 1 updates the material property values and executes step S2g again. That is, the CPU 1 executes steps S2f-S2g repeatedly while updating the material property values until the residuals of Equation (59) satisfy the convergence condition.

On the other hand, if judging that the residuals have satisfied the convergence condition, the CPU 1 acquires a calculation result (step S2l). More specifically, the CPU 1 acquires a calculation result by storing physical quantity solutions calculated at step S2i immediately before in the data storage section 2b as calculation result data. Air flow velocities in the compartment space are calculated by the above-described solver process (step S2).

Upon completion of the above solver process (step S2), the CPU 1 executes the post process (S3) according to the post process program P3. More specifically, for example, the CPU 1 generates, cross section contour data, vector data, equi-contour surface data, animation data, or the like on the basis of the calculation result data according to an instruction that is input through a GUI and causes the output devices 5 to visualize the generated data on the output.

The CPU 1 extracts quantitative values (calculation results) of a portion of the compartment space, converts them into numerical values or a graph, and causes the output devices 5 to visualize the numerical values or graph and output the numerical values or graph as a file according to an instruction that is input through a GUI. Furthermore, the CPU 1 generates a report automatically on the basis of calculation result data or displays and analyzes calculation residuals and outputs a result according to an instruction that is input through a GUI.

In the above-described numerical analysis apparatus A, numerical analysis method, and numerical analysis program, a calculation data model M having volumes of control volumes and areas and normal vectors of boundary surfaces is generated in the pre process and physical quantity values in the respective control values are calculated in the solver process using the volumes of the control volumes and the areas and the normal vectors of the boundary surfaces contained in the calculation data model M.

As described above in describing the numerical analysis method, according to the numerical analysis apparatus A, the numerical analysis method, and the numerical analysis program, a numerical analysis can be performed without generating a calculation data model having Vertex and Connectivity. Therefore, the restrictions imposed on work of modifying or changing 3D shape data are relaxed greatly and a calculation data model M can be generated far more easily than a calculation data model having Vertex and Connectivity. As a result, it becomes possible to reduce the work load of generation of a calculation data model M.

In the numerical analysis apparatus A, the numerical analysis method, and the numerical analysis program, unlike in conventional numerical analysis methods, it is not necessary for the solver process to calculate volumes of control volumes and areas and normal vectors of boundary surfaces using Vertex and Connectivity. Therefore, the computation load can be reduced in the solver process. As a result, according to the numerical analysis apparatus A, the numerical analysis method, and the numerical analysis program, it becomes possible to reduce the work load of generation of a calculation data model and the computation load in the solver process.

In the numerical analysis apparatus A, the numerical analysis method, and the numerical analysis program, an analysis domain is filled with divisional regions with no overlaps. Therefore, the above-described three conditions (a)-(c) for satisfaction of a conservation law are satisfied and flow velocities can be calculated while the conservation law is satisfied.

A calculation data model M can be generated easily on the basis of mesh data as used in a conventional finite volume method or finite element method, particle data as used in a conventional particle method, or mere group-of-points data. Even in this case, unlike in voxel methods, it is not necessary to modify divisional regions located in a boundary region with an external space. For example, a calculation data model can be generated easily from mesh data by dealing with individual elements as divisional regions (control volumes of control points). A calculation data model can be generated easily from particle data by dealing with, as divisional regions (control volumes of control points), closed spaces which surround respective control points arranged in an analysis domain and fill up the analysis domain.

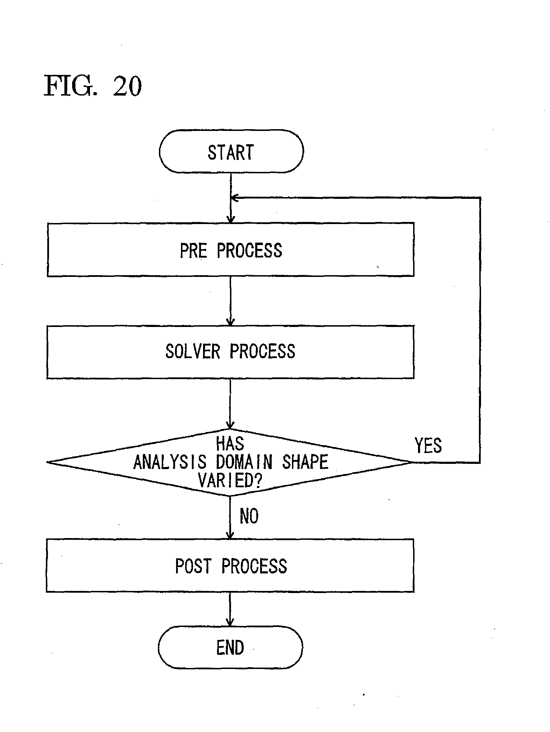

According to the numerical analysis apparatus A, the numerical analysis method, and the numerical analysis program, as described above, the work load of generation of a calculation data model is reduced greatly and the computation load in the solver process can be reduced. Therefore, even where the shape of an analysis domain varies with time, that is, the analysis domain includes a moving boundary, physical quantity values can be calculated in a practically allowable time by executing the pre process and the solver process every time the shape of the analysis domain varies, as shown in a flowchart of Fig. 20.

In calculating a flow velocity at a boundary surface in a physical quantity calculation, a value obtained by averaging flow velocities at the control points located on both sides of the boundary surface while giving them weights that depend on the ratio between the distances between the boundary surface and the control points may be employed as the flow velocity at the boundary surface.

This makes it possible to calculate flow velocities in the compartment space more accurately than in the case where a simple average of flow velocities at the control points located on both sides of each boundary surface as a flow velocity at the boundary surface. However, in this case, it is necessary that the calculation data model have, as data, ratios $\alpha$ each indicating where a boundary surface exists on the line segment that connects the control points. To this end, a calculation data model M which further includes ratios each being a ratio between the distances between the control points located inside adjoining control volumes and the boundary surface located between the control volumes is generated in the pre process. Flow velocities at boundary surfaces are calculated in the solver process according to those ratios.

If a vector connecting control points is perpendicular to the boundary surface located between the control points, a physical quantity calculation may be performed by replacing the normal vector with the unit vector of the distance vector connecting the control points. However, in this case, it is necessary that a calculation data model have data indicating the distance vector or position coordinates of the control points for calculation of the distance vector. To this end, a calculation data model M which further includes a distance vector connecting control points located inside adjoining control volumes or position coordinates of the control points for calculation of the distance vector is generated in the pre process. If a distance vector is perpendicular to the boundary surface located between the control points, a flow velocity is calculated by replacing the normal vector of the boundary surface with the distance vector.

The above description is directed to the configuration in which air flow velocities are calculated by a numerical analysis using the discretized governing equations that are derived from the Navier-Stokes equation which is a modified version of the momentum conservation equation and the continuity equation. However, the invention is not limited to such a case; physical quantity values can be calculated by a numerical analysis using a discretized governing equation (s) that is derived from at least one of the mass conservation equation, the momentum conservation equation, the angular momentum conservation equation, the energy conservation equation, the advection diffusion equation, and the wave equation.

The above description is directed to the configuration in which the area and the normal vector of each boundary surface are used as the above-mentioned boundary surface characteristics. However, the invention is not limited to such a case; another quantity (e.g., the contour length of a boundary surface) may be used as a boundary surface characteristic.

The above description is directed to the configuration in which a calculation data model is generated so that the above-described three conditions for satisfaction of a conversation law are satisfied. However, the invention is not limited to such a case; where it is necessary to satisfy a conservation law, a calculation data model need not always be generated so that the above-described three conditions for satisfaction of a conversation law are satisfied.

The above description is directed to the configuration in which the volume of a divisional region is employed as the volume of a control volume where a control point exists that is located inside the divisional region. However, the invention is not limited to such a case; it is not always necessary that a control point be placed inside a divisional region. Where no control point is located inside a divisional region, a numerical analysis can be performed by replacing the volume of a control volume where a control point should exist with the volume of the divisional region.

The above description is directed to the configuration in which the numerical analysis program P can be transported being stored in the DVD medium X. However, the invention is not limited to such a case; a configuration is possible in which the numerical analysis program P can be transported being stored in another kinds of removable medium. The pre process program P1 and the solver process program P2 may be made transportable by storing them in different removable media. The numerical analysis program P can be transmitted over a network.

<Embodiment 1>

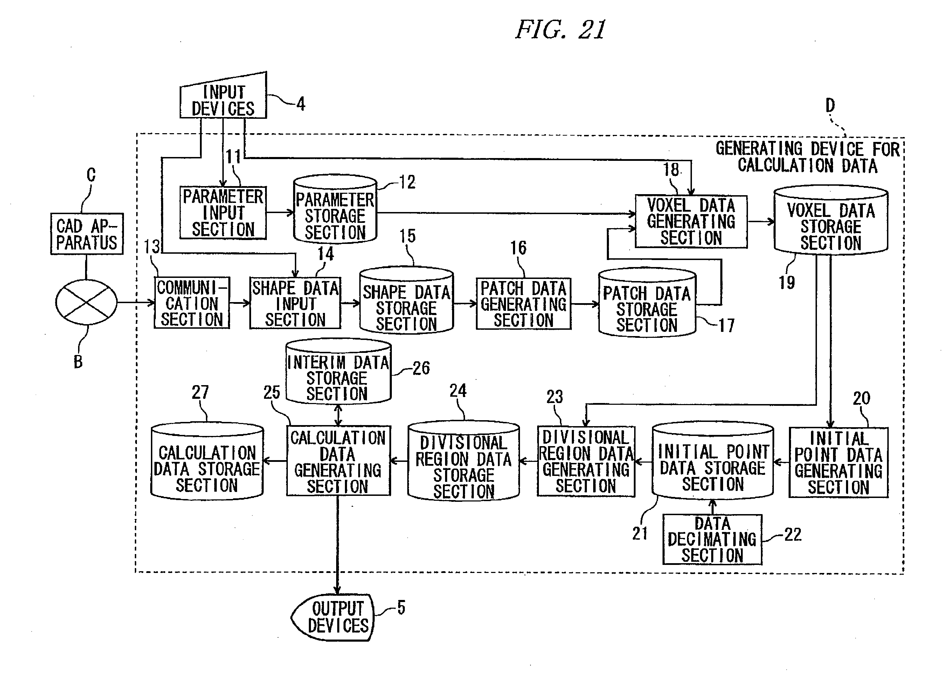

Next, a generating device for calculation data according to a first embodiment of the invention will be described. Fig. 21 is a block diagram showing the configuration of the first embodiment. In this figure, symbol D denotes a generating device for calculation data which generates calculation data and is a computer. The generating device D is connected to a computer network B and can perform an information communication with a CAD apparatus C which is connected to the computer network. Symbol 4 denotes input devices which are a keyboard and a mouse. Symbol 5 denotes output devices which are a liquid crystal display device etc.

Symbol 11 denotes a parameter input section which reads parameters inputted from the input devices 4. Symbol 12 denotes a parameter storage section which stores the parameters that are received by the parameter input section 11 and are necessary for a numerical calculation. Symbol 13 denotes a communication section which performs an information communication with the CAD apparatus C via a computer network B. Symbol 14 denotes a shape data input section which receives shape data of an object to be analyzed from the CAD apparatus C through the communication section 13. Symbol 15 denotes a shape data storage section which stores the shape data that are received by the shape data input section 14.

Symbol 16 designates a patch data generating section which receives the shape data stored in the shape data storage section 15 and generates patch data (data obtained by expressing the object using polygons) of the object to be analyzed. Symbol 17 denotes a patch data storage section which stores the patch data generated by the patch data generating section 16. Symbol 18 denotes a voxel data generating section which receives the parameters stored in the parameter storage section 12 and the patch data stored in the patch data storage section 17, and generates voxel data which defines an analysis domain.

Symbol 19 stands for a voxel data storage section which stores the voxel data generated by the voxel data generating section 18. Symbol 20 denotes an initial point data generating section which generates initial point data on the basis of the voxel data stored in the voxel data storage section 19. Symbol 21 denotes an initial point data storage section which stores the initial point data generated by the initial point data generating section 20. Symbol 22 denotes a data decimating section which updates the initial point data stored in the initial point data storage section 21 by decimating initial points stored in the initial point data storage section 21.

Symbol 23 designates a divisional region data generating section which receives the initial point data stored in the initial point data storage section 21 and the voxel data stored in the voxel data storage section 19 and generates divisional region data of the object to be analyzed. Symbol 24 denotes a divisional region data storage section which stores the divisional region data generated by the divisional region data generating section 23. Symbol 25 denotes a calculation data generating section which receives the divisional region data stored in the divisional region data storage section 24 and generates calculation data. Symbol 26 denotes an interim data storage section which stores interim data which occurs while the calculation data generating section 25 generates calculation data. Symbol 27 denotes a calculation data storage section which stores the calculation data generated by the calculation data generating section 25. The data stored in the calculation data storage section 27 becomes input data for a numerical analysis.

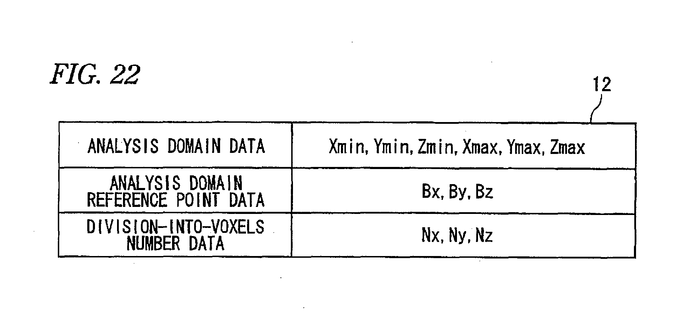

Next, a table structure of the parameter storage section 12 shown in Fig. 21 will be described with reference to Fig. 22. Fig. 22 is a table showing the table structure of the parameter storage section 12 shown in Fig. 21. The parameter storage section 12 serves to store parameters that are received from the input devices 4 by the parameter input section 11, that is, analysis domain data, analysis domain reference point data, and division-into-voxels number data. The analysis domain data is data for defining an analysis domain which is a rectangular parallelepiped and consists of coordinate values of two points of the rectangular parallelepiped. The analysis domain reference point data is coordinates of points located in an object to be analyzed, and serves for object inside/outside judgment. The division-into-voxels number data is division numbers, in the directions of the axes of the orthogonal coordinate system, of the rectangular parallelepiped (defined by the analysis domain data of two points $(Xmin, Ymin, Zmin)$ and $(Xmax, Ymax, Zmax)$) of the analysis domain which completely includes the object to be analyzed. These data are data that were input by an analysis operator through the input devices 4.

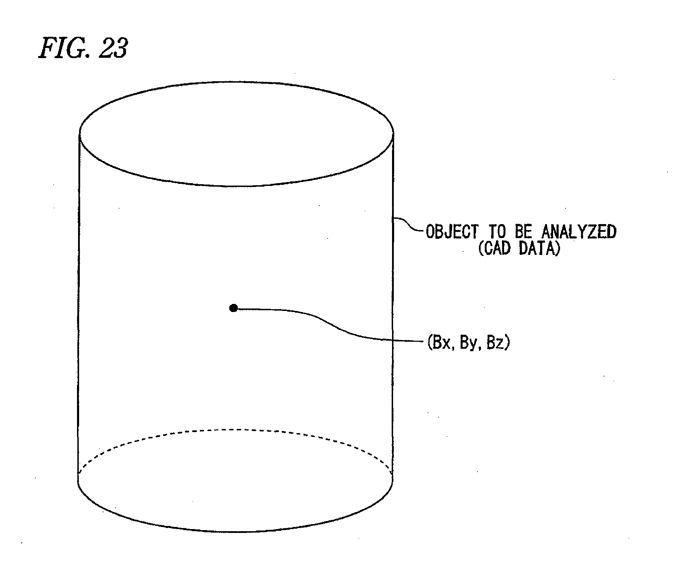

Next, shape data which is stored in the shape data storage section 15 shown in Fig. 21 will be described with reference to Fig. 23. Fig. 23 shows example shape data which is stored in the shape data storage section 15 shown in Fig. 21. Data which defines a shape of an object to be analyzed which has been designed by the CAD apparatus C is stored in the shape data storage section 15. To simplify the description, it is assumed that in the example of Fig. 23 the object to be analyzed has a cylindrical shape. For example, the shape data consists of coordinate values for defining ridgelines and other data. In this example, the shape data does not include data indicating the inside or outside of the object. Instead, an analysis domain reference point (Bx, By, Bz) is defined inside the cylinder and the side on which the analysis domain reference point is assumed to be the inside of the object.

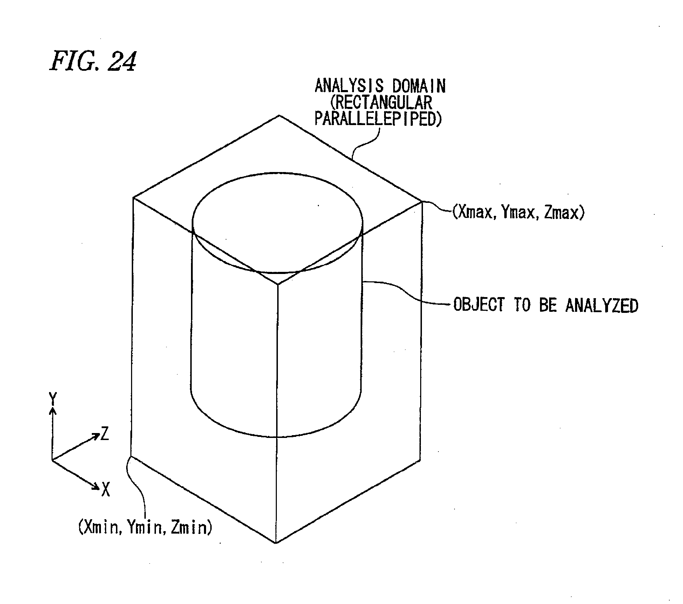

Next, a positional relationship between the analysis domain and the object to be analyzed will be described with reference to Fig. 24. Fig. 24 shows positional relationship between the analysis domain and the object to be analyzed. The object to be analyzed has such a positional relationship as to be completely enclosed by the rectangular parallelepiped which is defined by the analysis domain data.

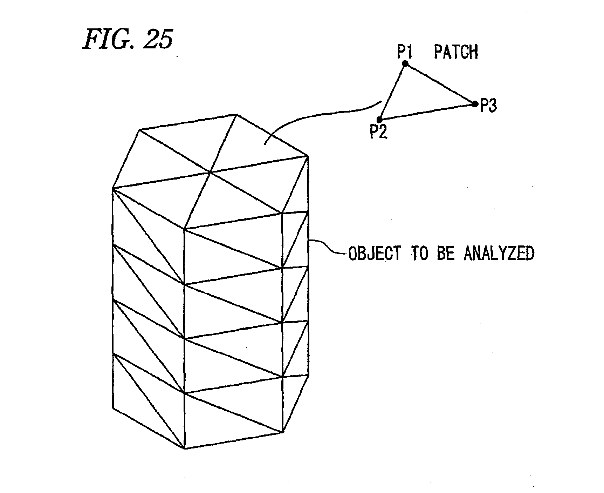

Next, patch data which is stored in the patch data storage section 17 shown in Fig. 21 will be described with reference to Fig. 25. Fig. 25 shows example patch data which is stored in the patch data storage section 17 shown in Fig. 21. The patch data is data which expresses the external form of an object to be analyzed in polygons. In this example, these polygons are called patches. The patch data generating section 16 reads shape data, generates patch data by a known method, and stores the generated patch data in the patch data storage section 17. Since any known patch data generating method can be used, a patch data generating process will not be described here in detail. Triangular patch data are generated in the example of Fig. 25. Each polygon (in this example, each triangle) is defined by coordinate values of apices P1, P2, and P3. To simplify the description, in Fig. 25 the cylinder is expressed as a hexagonal prism. However, actually, it is expressed as a polygonal prism which can attain desired calculation accuracy.

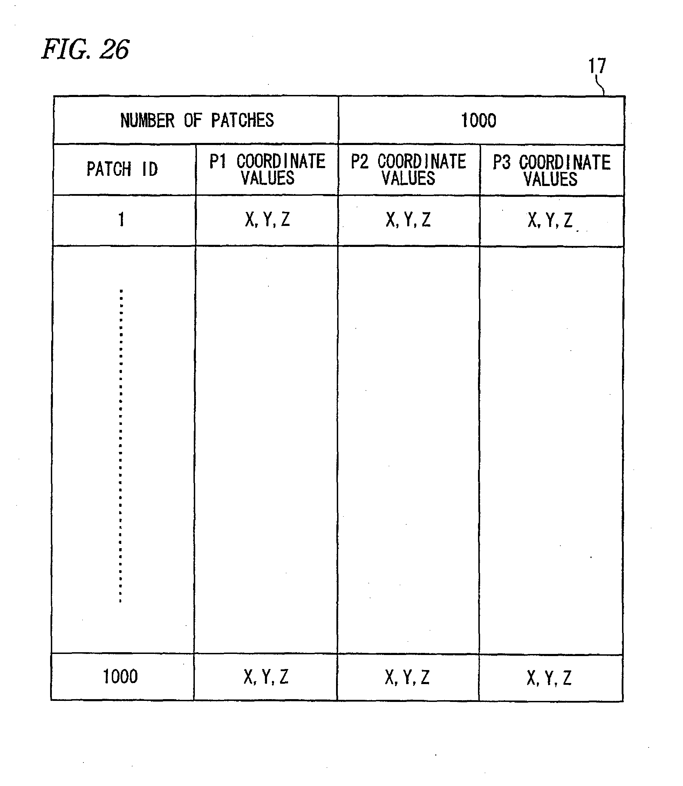

A table structure of the patch data storage section 17 shown in Fig. 21 will be described with reference to Fig. 26. Fig. 26 is a table showing a table structure of the patch data storage section 17 shown in Fig. 21. The number of patches generated on the object to be analyzed and 3D coordinate values of the apices of each patch (in this example, each triangle) are stored in the patch data storage section 17. The 3D coordinate values of the apices of each patch are stored so as to be correlated with a patch ID which enables unique identification of the patch.

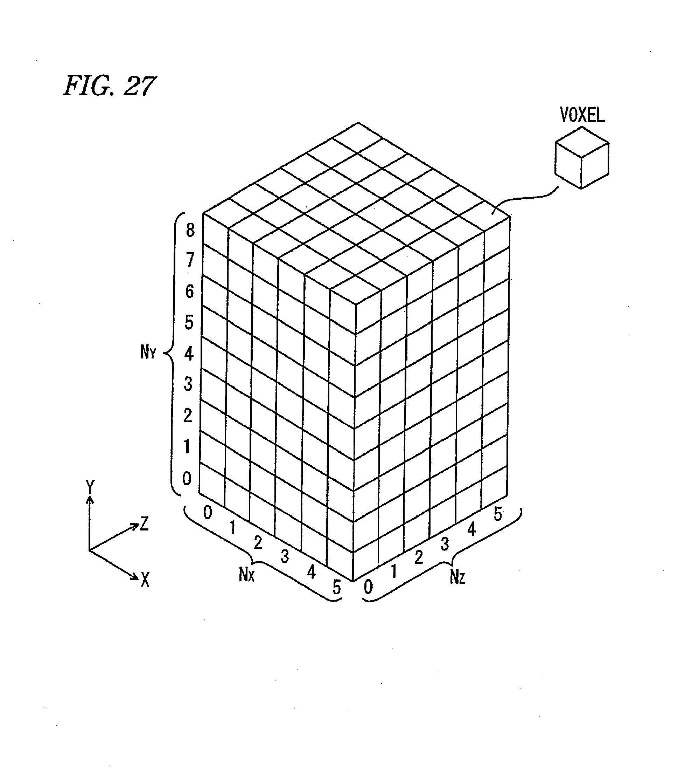

Next, voxel data will be described with reference to Fig. 27. Fig. 27 shows the structure of a collection of voxels. Voxels are small rectangular parallelepipeds obtained by dividing an analysis domain (rectangular parallelepiped domain) defined by analysis domain data according to division-into-voxels number data (Nx, Ny, and Nz). In the division example of Fig. 27, Nx, Ny, and Nz are equal to 6, 9, and 6, respectively.

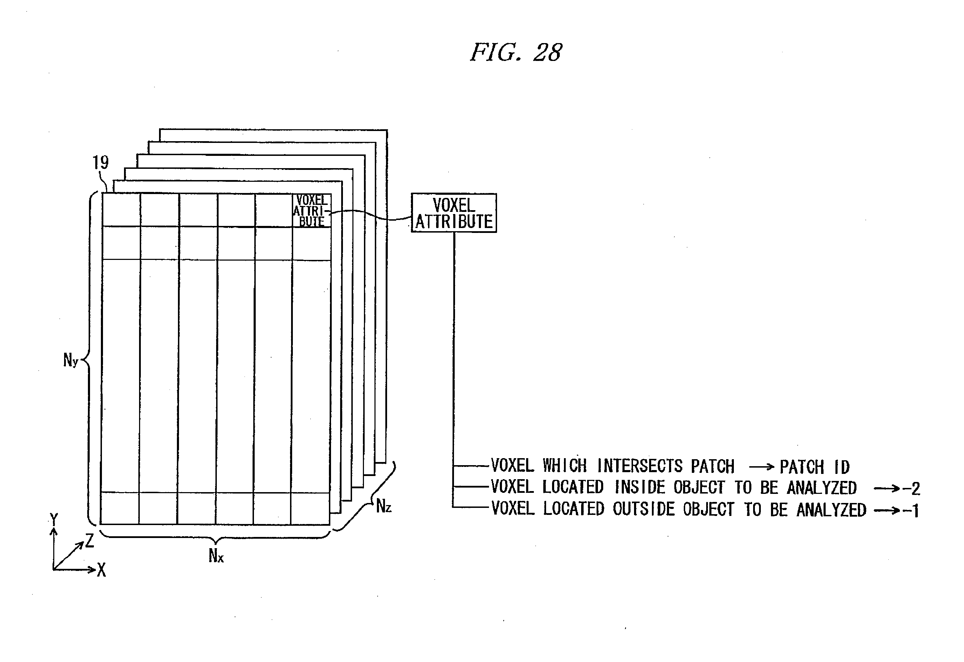

Next, a table structure of the voxel data storage section 19 shown in Fig. 21 will be described with reference to Fig. 28. Fig. 28 is a table showing a table structure of the voxel data storage section 19 shown in Fig. 21. The voxel data storage section 19 is provided with a 3D table capable of storing Nx x Ny x Nz voxel attribute data and has a table structure which conforms to the manner of division into voxels. A value indicating one of three attributes is stored as each voxel data. The first attribute indicates that the voxel intersects a patch, and the patch ID of the intersecting patch is stored. The second attribute indicates that the voxel is located inside the object to be analyzed, and "-2" is stored. The third attribute indicates that the voxel is located outside the object to be analyzed, and "-1" is stored.

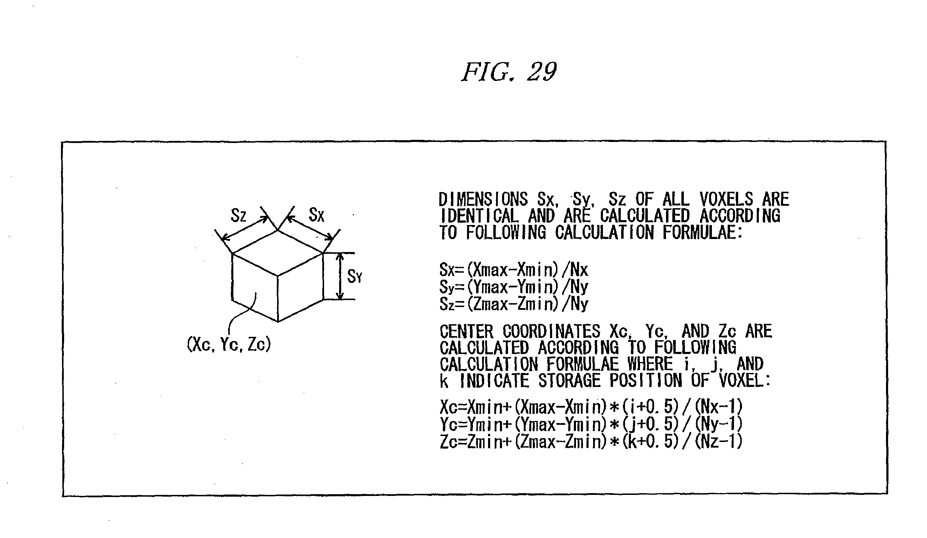

Next, data which defines each voxel will be described with reference to Fig. 29. Fig. 29 illustrates a method for calculating data which defines each voxel. Each voxel is defined by coordinate values of the center point and dimensions in the directions of the respective axes of the voxel. All the voxels have the same dimensions Sx, Sy, and Sz which are lengths of the sides of each voxel extending in the X, Y, and Z directions, respectively, and which can be calculated by dividing lengths of the division subject domain in the directions of the respective axes by the respective division-into-voxels numbers. The center coordinate values (Xc, Yc, Zc) can be calculated according to simple calculation formulae on the basis of positions (i, j, and k: a position (i.e., where the voxel stands in the series of voxels) in the X direction, a position in the Y direction, and a position in the Z direction) of the voxel, the size of the division subject domain, and the division-into-voxels numbers. Since data (center coordinate values and dimensions) for identification of one voxel can be calculated according to simple calculation formulae, they are calculated when necessary. The voxel data storage section 19 is stored with only the attribute data and is not stored with any center coordinate values or dimensions.

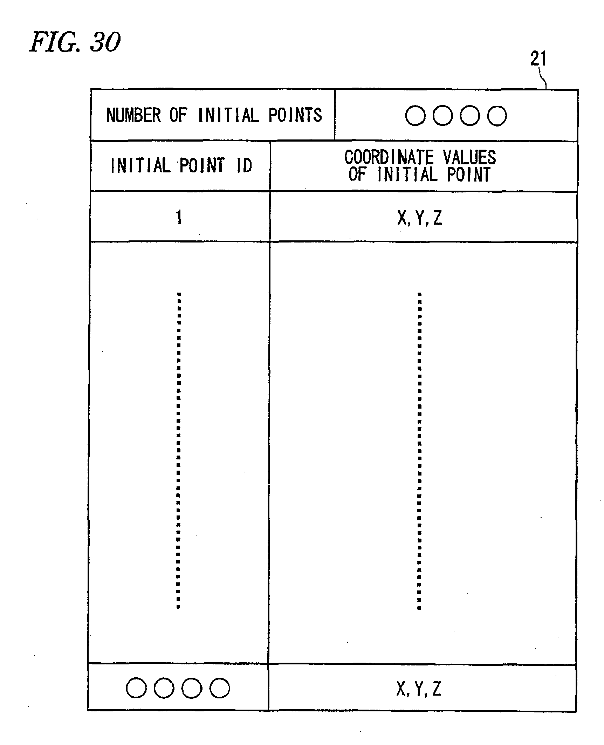

Next, a table structure of the initial point data storage section 21 shown in Fig. 21 will be described with reference to Fig. 30. Fig. 30 is a table showing a table structure of the initial point data storage section 21 shown in Fig. 21. The number of initial points is stored in the initial point data storage section 21. Furthermore, an initial point ID which enables unique identification of each initial point and a set of 3D coordinate values of the initial point are stored in the initial point data storage section 21 so as to be correlated with each other. Initial points are generated from the center points of the respective voxels, and initial point data that remain after the data decimating section 22 has deleted unnecessary initial points by decimation are stored.

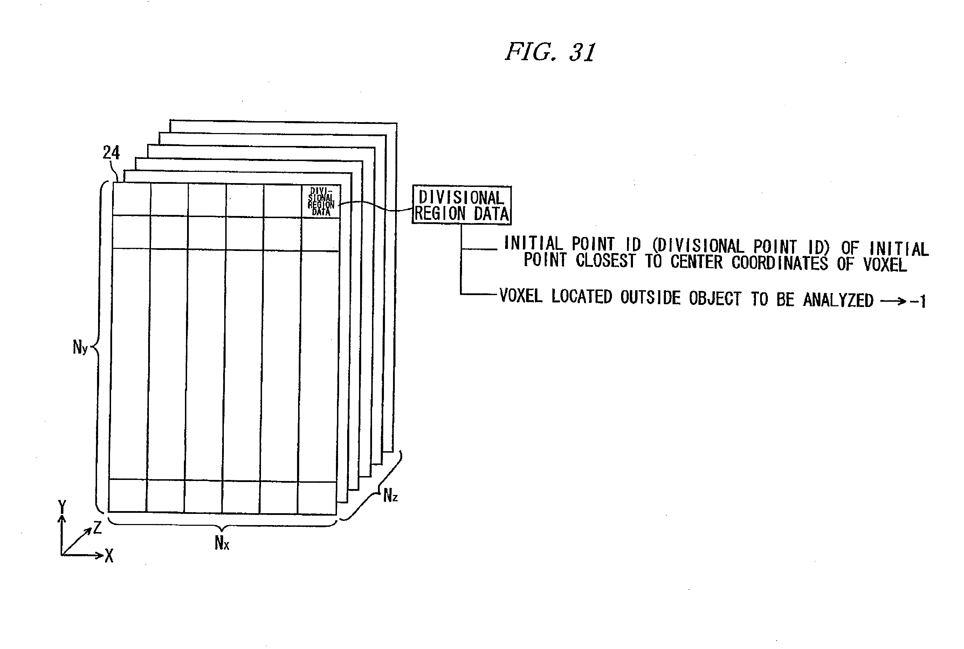

Next, a table structure of the divisional region data storage section 24 shown in Fig. 21 will be described with reference to Fig. 31. Fig. 31 is a table showing a table structure of the divisional region data storage section 24 shown in Fig. 21. The divisional region data storage section 24 is provided with a 3D table capable of storing Nx x Ny x Nz divisional region data (same in number as the voxels) and has a table structure which conforms to the manner of division into voxels. A value indicating one of two states is stored as each divisional region data. One state is a state that the voxel concerned is included in a divisional region, and the initial point ID of an initial point that is closest to the center coordinates of the voxel is stored. The initial point ID to be stored corresponds to the divisional region ID. The other state is a state that the voxel concerned is located outside the object to be analyzed, and "-1" is stored. The divisional regions are plural 3D regions obtained by dividing the object to be analyzed. For voxels located outside the object to be analyzed, their voxel attributes stored in the voxel data storage section 19 are stored as they are.

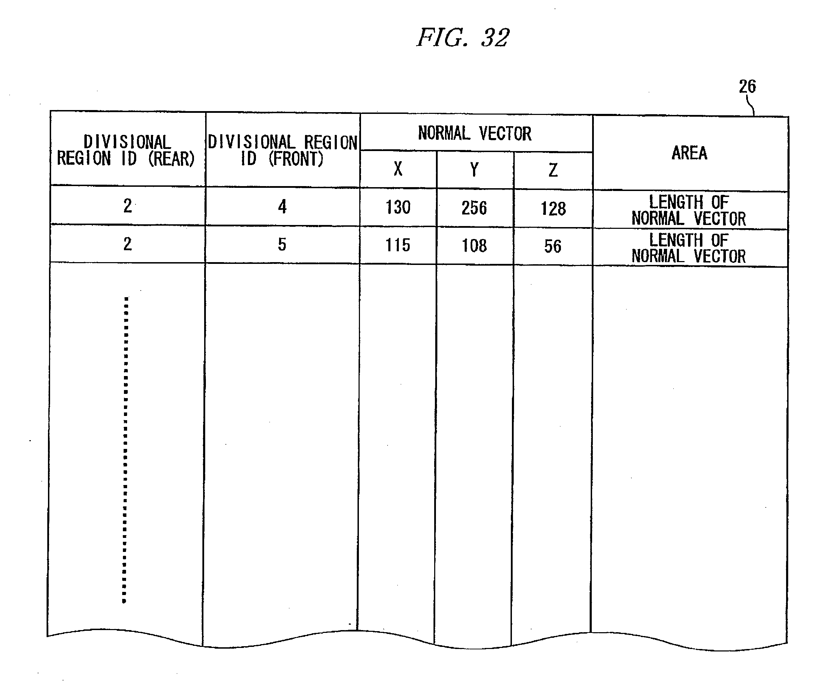

Next, a table structure of the interim data storage section 26 shown in Fig. 21 will be described with reference to Fig. 32. Fig. 32 is a table showing a table structure of the interim data storage section 26 shown in Fig. 21. The interim data storage section 26 is provided with regions for storing combinations of IDs of divisional regions to which adjoining voxels having different divisional region IDs belong, normal vectors, and areas of surface regions calculated from lengths of the normal vectors. These storage regions serve to store interim data which are produced in summarizing divisional region data stored in the divisional region data storage section 24 to generate calculation data.

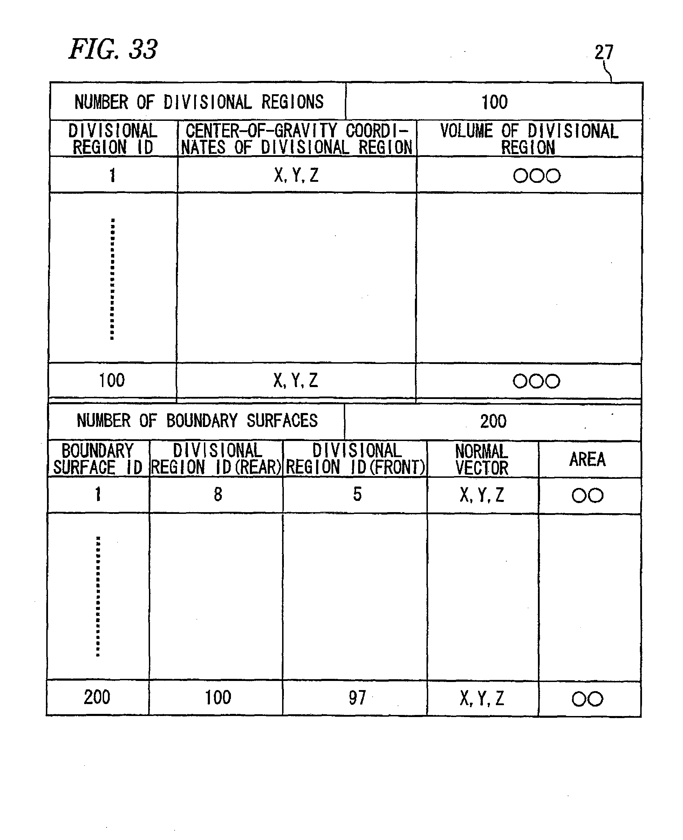

Next, a table structure of the calculation data storage section 27 shown in Fig. 21 will be described with reference to Fig. 33. Fig. 33 is a table showing a table structure of the calculation data storage section 27 shown in Fig. 21. The number of divisional regions (equal to the number of initial points) and center-of-gravity coordinates and volumes of the divisional regions are stored in the calculation data storage section 27. The center-of-gravity coordinates and the volumes of the divisional regions are stored so as to be correlated with the respective divisional region IDs which enable unique identification of the divisional regions. The number of boundary surfaces between the divisional regions, combinations of divisional region IDs, normal vectors, and areas of the boundary surfaces are also stored in the calculation data storage section 27. The combinations of divisional region IDs, the normal vectors, and the areas of the boundary surfaces are stored so as to be correlated with respective boundary surface IDs which enable unique identification of the boundary surfaces.

Next, processing operations of the generating device D shown in Fig. 21 will be described. First, an operator who is going to generate calculation data manipulates the input devices 4 to instruct the shape data input section 14 to receive shape data. The shape data input section 14 receives shape data of an object to be analyzed from the CAD apparatus C through the communication section 13, and stores the received shape data in the shape data storage section 15. Upon storage of the shape data in the shape data storage section 15, the patch data generating section 16 reads the shape data from the shape data storage section 15, generates patch data, and stores the generated patch data in the patch data storage section 17. As a result, the patch data storage section 17 is stored with the patch data as shown in Fig. 26.

Then, the operator inputs parameters through the input devices 4. In response, the parameter input section 11 reads the parameters that are input through the input devices and stores them in the parameter storage section 12. As a result, the parameter storage section 12 is stored with the parameters as shown in Fig. 22.

Then, the operator manipulates the input devices 4 to make an instruction to generate calculation data. In response, the voxel data generating section 18 receives the parameters stored in the parameter storage section 12 and the patch data stored in the patch data storage section 17 and generates voxel data.

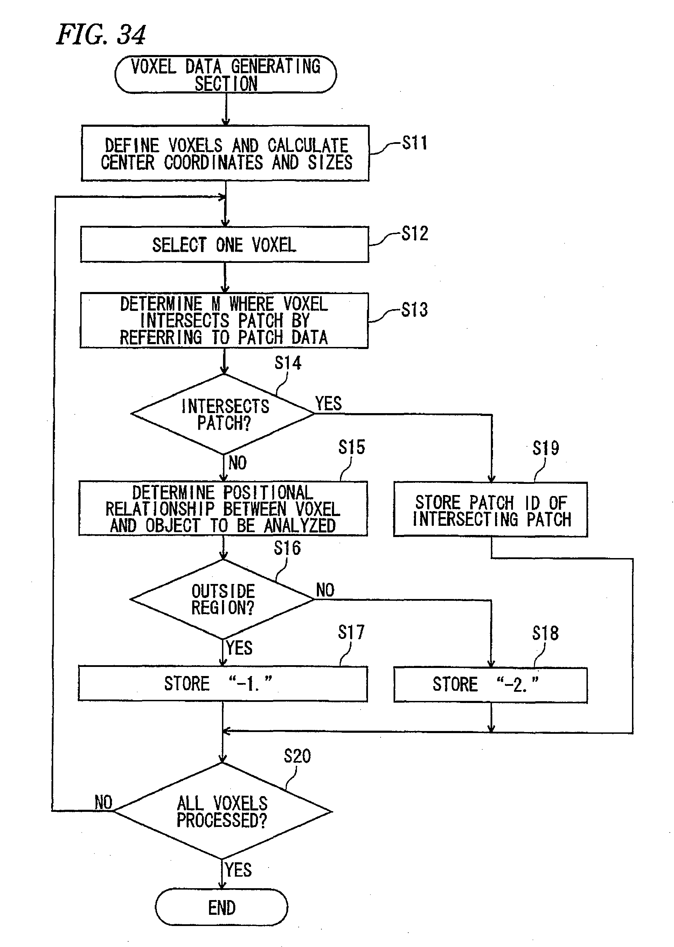

A processing operation that the voxel data generating section 18 shown in Fig. 21 generates voxel data will be described here with reference to Fig. 34. Fig. 34 is a flowchart showing a processing operation that the voxel data generating section 18 shown in Fig. 21 generates voxel data. First, the voxel data generating section 18 reads the analysis domain data and the division-into-voxels number data stored in the parameter storage section 12, defines voxels on the basis of these data, and calculates sets of center coordinates of the respective voxels, and voxel dimensions (step S11). Then, the voxel data generating section 18 selects one of the thus-defined voxels (step S12).

Then, by referring to the patch data stored in the patch data storage section 17, the voxel data generating section 18 performs a geometric calculation for determination as to whether or not the selected voxel intersects a patch (step S13) . Then, the voxel data generating section 18 judges whether or not the selected voxel intersects a patch (step S14). If the judgment result is negative, the voxel data generating section 18 determines a positional relationship between the selected voxel and the object to be analyzed (step S15) and judges whether or not the selected voxel is located outside the object to be analyzed (step S16) . If the judgment result is that the selected voxel is located outside the object to be analyzed, the voxel data generating section 18 stores a value "-1" (indicating that voxel is located outside the object to be analyzed) in the storage region, corresponding to the selected voxel, of the voxel data storage section 19 (step S17). If the judgment result is that the selected voxel is located inside the object to be analyzed, the voxel data generating section 18 stores a value "-2" (indicating that voxel is located inside the object to be analyzed) in the storage region, corresponding to the selected voxel, of the voxel data storage section 19 (step S18).

On the other hand, if the selected voxel intersects a patch, the voxel data generating section 18 stores the patch ID of the intersecting patch in the storage region, corresponding to the selected voxel, of the voxel data storage section 19 (step S19). Then, the voxel data generating section 18 judges whether all the defined voxels have been processed or not (step S20), and executes steps S12-S19 repeatedly until attribute data is stored for all the voxels. As a result of this processing operation, attribute data are stored in the voxel data storage section 19 so as to be correlated with all the voxels.

Upon completion of the storage of attribute data in the voxel data storage section 19, the initial point data generating section 20 calculates center coordinate values of each of the voxels whose voxel data are stored in the voxel data storage section 19 and employs the calculated center coordinate values as coordinate values of an initial point. The initial point data generating section 20 gives an initial point ID to each initial point and stores the coordinate values in the initial point data storage section 21. As a result, the initial point data storage section 21 is stored with initial point data which are the same in number as the voxels (see Fig. 30).

Then, the data decimating section 22 decimates the initial point data to reduce the number of initial point data stored in the initial point data storage section 21. This decimation processing is performed by a known method. For example, a prescribed number of initial point data located at a prescribed spatial interval may be deleted. The data decimating section 22 deletes, from the initial point data storage section 21, initial point data to be deleted, counts the number of remaining initial point data, and stores the count in the initial point data storage section 21 as the number of initial points.

Then, the divisional region data generating section 23 generates divisional region data by referring to the initial point data stored in the initial point data storage section 21 and the voxel data stored in the voxel data storage section 19, and stores the generated divisional region data in the divisional region data storage section 24.

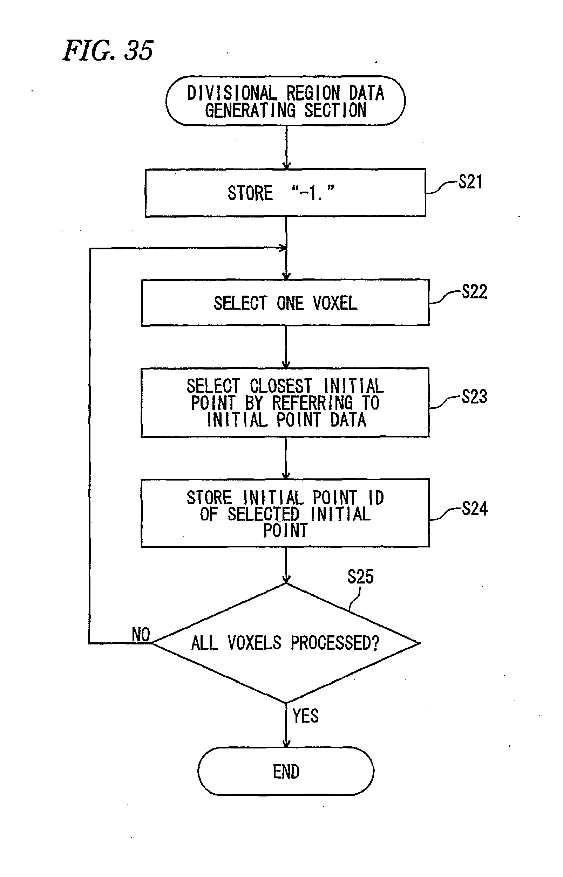

A processing operation that the divisional region data generating section 23 generates divisional region data and stores them in the divisional region data storage section 24 will be described here with reference to Fig. 35. Fig. 35 is a flowchart showing a processing operation that the divisional region data generating section 23 generates divisional region data and stores them in the divisional region data storage section 24. First, the divisional region data generating section 23 stores "-1" in all the storage regions of the table of the divisional region data storage section 24 (step S21). Then, the divisional region data generating section 23 selects one of the voxels that are stored in the voxel data storage section 19 and whose attribute data are "-2" or a patch ID (step S22), and calculates center coordinates of the selected voxel. Then, the divisional region data generating section 23 selects an initial point that is closest to the calculated voxel center coordinates (i.e., has a shortest straight-line distance) by referring to the initial point data storage section 21 (step S23), and stores the initial point ID of the selected initial point in the storage region of the selected voxel in the divisional region data storage section 24 (step S24).

Then, the divisional region data generating section 23 judges whether or not all the voxels have been processed or not (step S25), and executes steps S22-S24 repeatedly until divisional region data (initial point ID) is stored for all the voxels. As a result of this processing operation, an ID (initial point ID) of a divisional region to which a voxel belongs or "-1" is stored for every voxel in the divisional region data storage section 24.

Then, the calculation data generating section 25 reads the divisional region data stored in the divisional region data storage section 24, generates calculation data, and stores the generated calculation data in the calculation data storage section 27.

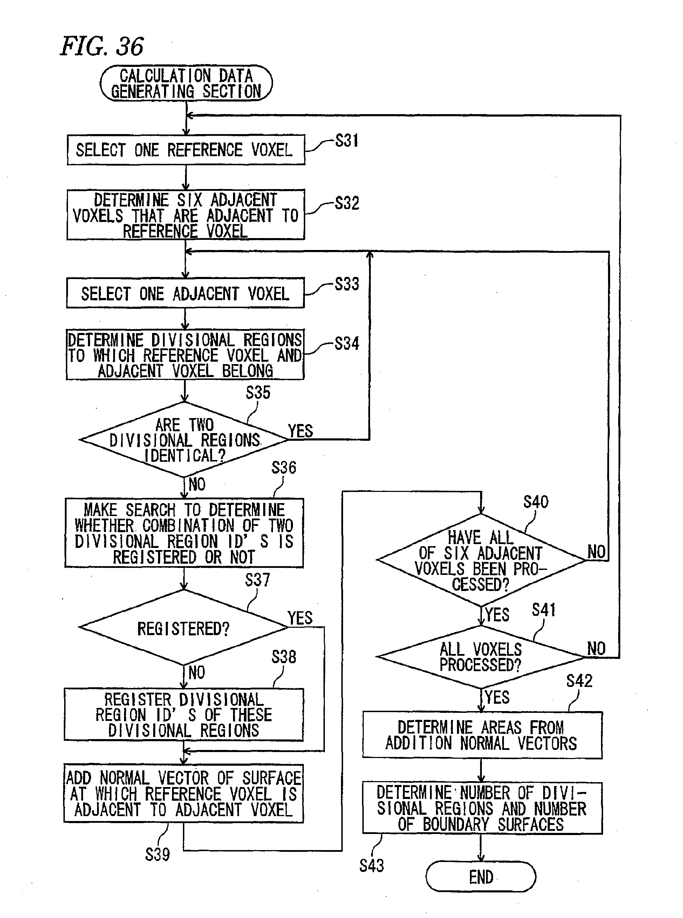

A processing operation that the calculation data generating section 25 generates calculation data on the basis of the divisional region data and stores the generated calculation data in the calculation data storage section 27 will be described here with reference to Fig. 36. Fig. 36 is a flowchart showing a processing operation that the calculation data generating section 25 generates calculation data on the basis of the divisional region data and stores the generated calculation data in the calculation data storage section 27. First, the calculation data generating section 25 selects one voxel to serve as a reference voxel from the voxels for each of which a divisional region ID (not "-1") is stored as divisional region data by referring to the divisional region data storage section 24 (step S31). Then, the calculation data generating section 25 determines six adjacent voxels that are adjacent to the selected reference voxel (in the top-bottom direction, left-right direction, and front-rear direction) by referring to the divisional region data storage section 24 (step S32).

Then, the calculation data generating section 25 selects one adjacent voxel from the determined six adjacent voxels (step S33), and determines respective divisional regions to which the reference voxel and the selected adjacent voxel belong. Divisional regions are determined using the divisional region IDs which are stored as the divisional region data. Then, the calculation data generating section 25 judges whether the two divisional region ID are identical or not (step S35). If the two divisional region ID are judged identical, the process returns to step S33 to select the next adjacent voxel.

On the other hand, it the two divisional region ID are not identical, the calculation data generating section 25 makes a search to determine whether the combination of the two divisional region IDs is already registered or not by referring to the interim data storage section 26 (step S36). Then, the calculation data generating section 25 judges whether the combination of the two divisional region IDs is already registered or not (step S37). If not registered, the calculation data generating section 25 stores the two divisional region IDs in the interim data storage section 26 (step S38). If it is judged that the combination of the two divisional region IDs is already registered, the calculation data generating section 25 does not register the divisional region IDs.

Then, the calculation data generating section 25 writes, in the interim data storage section 26, a normal vector of the surface at which the reference voxel and the selected adjacent voxel are in contact with each other. If a normal vector has already been written, the calculation data generating section 25 adds the newly determined normal vector to the already written normal vector and newly writes a resulting normal vector to the interim data storage section 26 (step S39).

Then, the calculation data generating section 25 judges whether all of the six adjacent voxels been processed or not (step S40). The calculation data generating section 25 executes steps S33-S39 repeatedly until all of the six adjacent voxels are processed. Upon completion of the steps to be executed for the six adjacent voxels, step S41 the calculation data generating section 25 judges whether all the voxels have been processed (selected as a reference voxel) or not (step S41). The calculation data generating section 25 executes steps S31-S40 repeatedly until all the voxels (non-"-1" voxels) are processed. As a result of this processing operation, an addition vector of normal vectors is obtained in the interim data storage section 26 for each combination of IDs of adjacent divisional regions.

Then, the calculation data generating section 25 calculates a length of a normal vector on the basis of the addition vector of normal vectors for each combination of two divisional region IDs, and stores the calculated length of the normal vector in the interim data storage section 26 as an area of the boundary surface (step S42). Then, the calculation data generating section 25 determines the number of divisional regions and the number of boundary surfaces on the basis of the combinations of two divisional region IDs stored in the interim data storage section 26 (step S43).

Then, the calculation data generating section 25 generates calculation data on the basis of the divisional region data stored in the divisional region data storage section 24 and the interim data stored in the interim data storage section 26, and stores the generated calculation data in the calculation data storage section 27. In doing so, the calculation data generating section 25 calculates sets of center-of-gravity coordinates of the respective divisional regions and a volume of the divisional regions (i.e., the product of the number of voxels and the voxel volume) on the basis of the divisional region data stored in the divisional region data storage section 24 and stores calculation results in the calculation data storage section 27. And the calculation data generating section 25 stores the interim data stored in the interim data storage section 26, and stores the number of divisional regions and the number of boundary surfaces (determined before) in the calculation data storage section 27. As a result of this processing operation, calculation data as shown in Fig. 33 is generated.

As described above, it becomes possible to generate calculation data by simple calculations and hence to reduce the work load of an analysis operator.

<Embodiment 2>

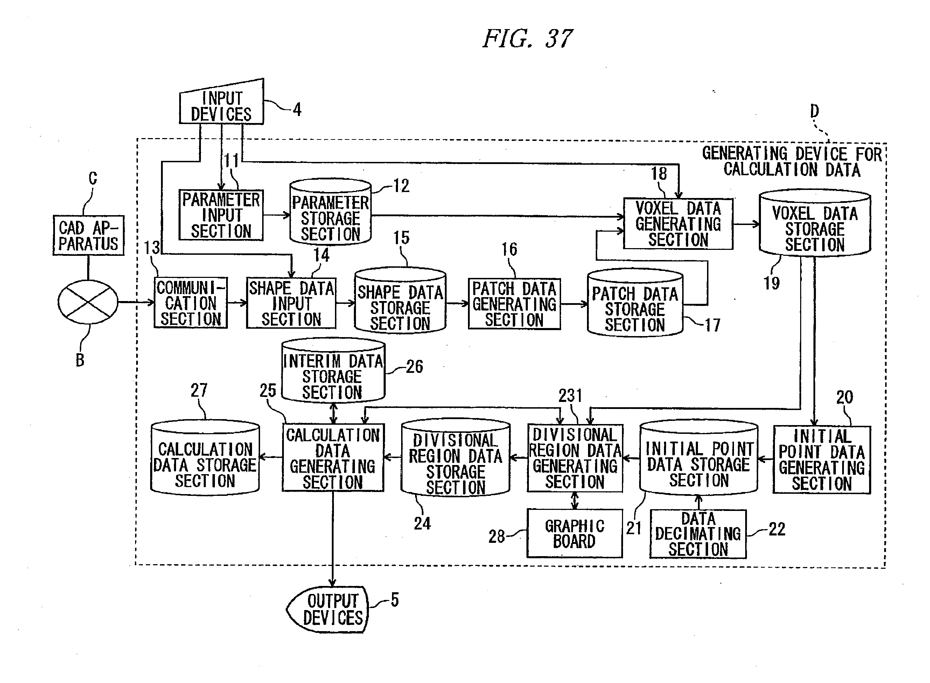

Next, a generating device for calculation data according to a second embodiment will be described. Fig. 37 is a block diagram showing the configuration of the second embodiment. Sections having the same sections in the apparatus according to the first embodiment shown in Fig. 21 are given the same symbols as the latter in this figure, and descriptions therefor will be omitted. The apparatus shown in this figure is different from the apparatus shown in Fig. 21 in that a graphic board 28 capable of color 3D image drawing is newly added and the processing operation of a divisional region generating section 231 is different accordingly.

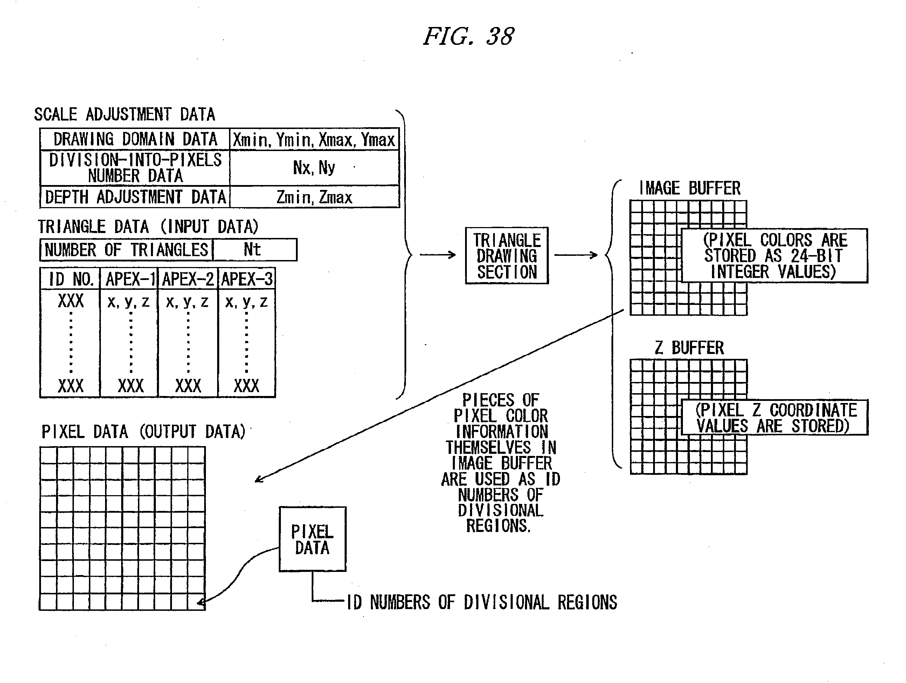

Next, the functional configuration of the graphic board 28 shown in Fig. 37 will be described with reference to Fig. 38. Fig. 38 shows the functional configuration of the graphic board 28 shown in Fig. 37. The graphic board 28 has a function of receiving scale adjustment data and triangle data and outputs pixel data as output data. A triangle drawing section in the graphic board 28 receives the scale adjustment data and triangle data and draws triangles in an image buffer. To store pieces of depth-direction information of triangles which are 3D shapes, a Z buffer for storing Z coordinates (coordinates in the depth direction) of pixels is provided. Division region generation processing is performed using, as divisional region IDs, pieces of pixel color information themselves that are obtained in the image buffer by drawing plural triangles.

The scale adjustment data consists of drawing domain data (analysis domain data minus Z coordinates), division-into pixels number data (division-into-voxels numbers minus Nz), and depth adjustment data (the Z coordinate values of the analysis domain data). The triangle data consists of sets of three-apex coordinate values of a certain number of triangles to be drawn.

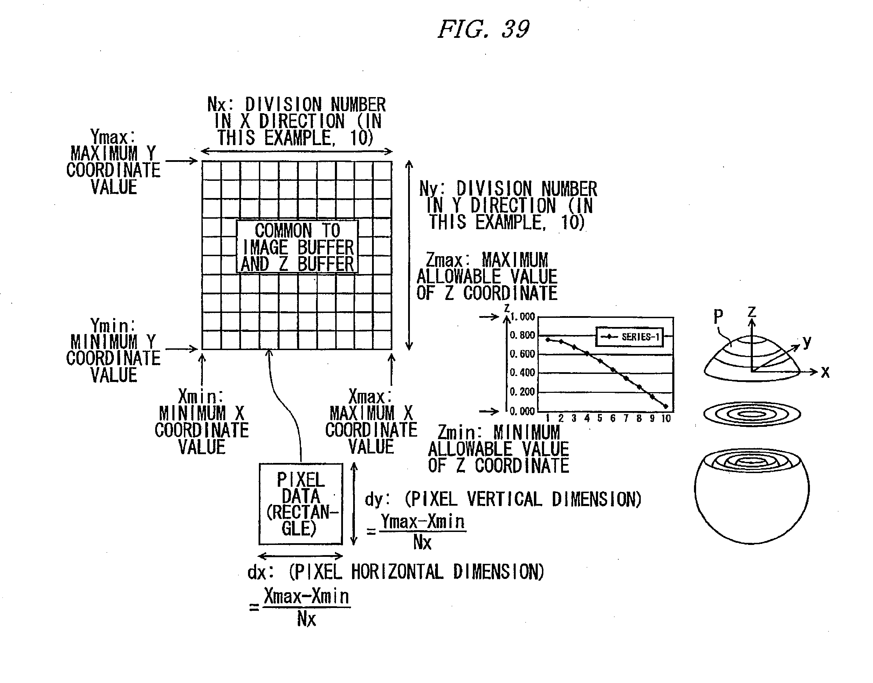

Next, a coordinate system employed in the graphic board 28 shown in Fig. 37 will be described with reference to Fig. 39. Fig. 39 is a chart illustrating a coordinate system employed in the graphic board 28 shown in Fig. 37. The image buffer and the Z buffer in the graphic board 28 have the same coordinate system which is determined by the drawing domain data Xmax, Xmin, Ymax, and Ymin which are output from the divisional region generating section 231. Individual pixel data are determined from the drawing domain data the division-into-pixels number data and are given the same dimensions as the voxels. A maximum allowable value and a minimum allowable value of the Z coordinate are determined from the depth adjustment data. A figure to be drawn by the graphic board 28 is a 3D body which is denoted by symbol P in Fig. 39 and called a potential solid here.

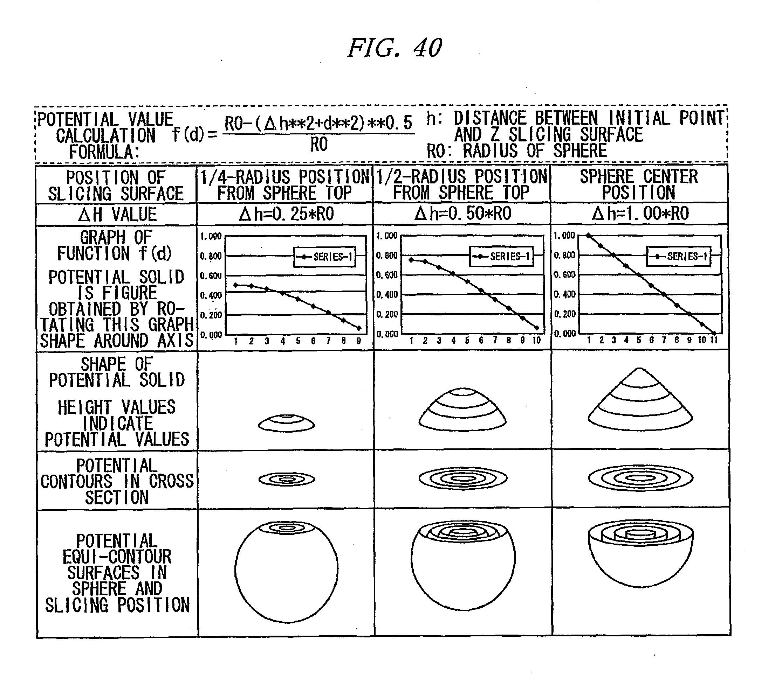

Next, the potential solid will be described with reference to Fig. 40. Fig. 40 is a chart illustrating the structure of the potential solid. The potential solid has a shape that is obtained by rotating, around the axis, a graph shape of a function f(d) which is defined by $f(d) = \{R0 - (\Delta h^{**}2 + d^{**}2)^{**}0.5\}/R0$, where $\Delta h$ is the distance between an initial point and the Z slicing surface and R0 is the radius of a sphere. How to determine the sphere will be described here. The center coordinates of the sphere are the coordinates of an initial point stored in the initial point data storage section 21. That is, the sphere is centered by the initial point and has a prescribed radius.

The radius is calculated in the following manner. First, let V0 and Npart represent the inside volume of an object to be analyzed (the product of the number of voxels whose voxel attributes are "-2" and the voxel volume) and the number of initial points, respectively; then, an average volume ΔV which is assigned to each initial point can be calculated by dividing V0 by the number Npart of initial points. In the case of a rectangular parallelepiped having the average volume ΔV, the length of its one side is calculated as a cube root of the average volume ΔV. The sphere to be determined is a sphere on which the rectangular parallelepiped having that side length is inscribed. That is, the distance between the center and each apex of the rectangular parallelepiped is equal to the radius of the sphere.

A cross section of the sphere taken at a Z slicing surface becomes the bottom surface of the potential solid. The potential solid is a mountain-shaped solid which is higher when the distance between the initial point and the Z slicing surface is shorter. The Z slicing surface is a surface that is obtained by slicing at a Z-direction boundary of the voxels in Fig. 27. That is, Z slicing surfaces exist in the same number as the division-into-voxels number Nz.

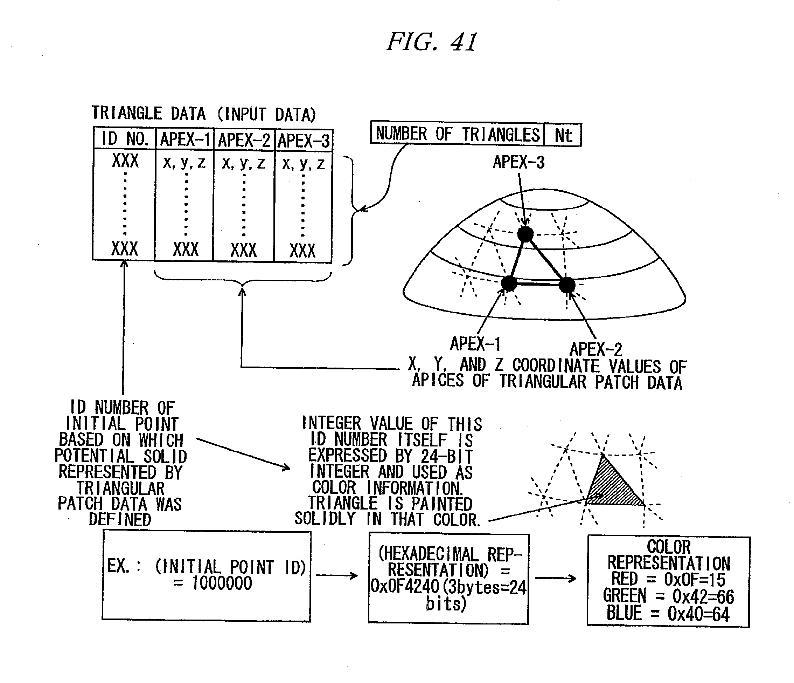

Next, triangle data which is input to the graphic board 28 will be described with reference to Fig. 41. Fig. 41 is a chart illustrating the structure of triangle data which is input to the graphic board 28. The triangle data is data in which the surface of each potential solid is expressed by plural triangular patch data. Each triangle is expressed by 3D coordinate values of the three apices, that is, apex-1, apex-2, and apex-3. In addition to these apex coordinate values, each triangle is given, as a triangle ID, the initial point ID of the initial point that is located at the center of the sphere that was used in defining the triangle. That is, all triangles that are used to express one potential solid are given the same triangle ID (initial point ID).

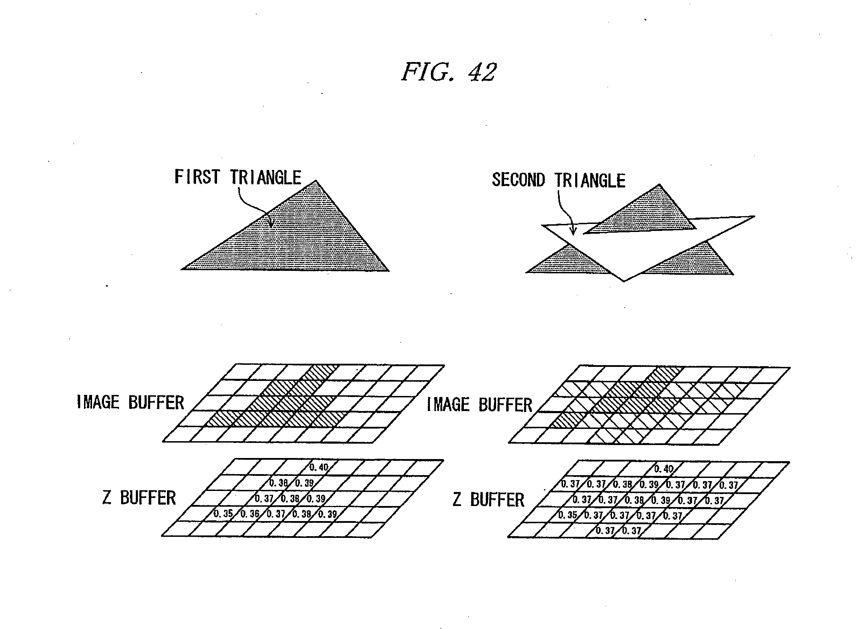

The graphic board 28 performs drawing processing on the basis of the above triangle data. Triangle drawing processing performed in the graphic board 28 will be described here with reference to Fig. 42. Fig. 42 is a chart illustrating triangle drawing processing performed in the graphic board 28. First, the triangle drawing section draws a first triangle in the image buffer. The triangle drawing section draws the triangle using the triangle ID value as a display color. Furthermore, the triangle drawing section writes Z coordinates values of the triangle in the Z buffer. In drawing a second triangle, the triangle drawing section compares the values stored in the Z buffer with values of the triangle that the triangle drawing section is going to write newly, and updates values in the Z buffer only if the new Z coordinate value is larger. And the new triangle ID value is written to the image buffer as display color only at the Z-buffer-value-updated pixels. Repetition of the above processing produces the same result as would be obtained by hidden surface processing. Then, the contents of the image buffer are output as output data. This data is equivalent to data that would be obtained when divisional regions are generated for respective initial points in a Z slicing surface.

The processing operations of storing voxel data in the voxel data storage section 19 and storing initial point data in the initial point data storage section 21 in the second embodiment are the same as the corresponding ones in the first embodiment, and hence will not be described in detail. Only processing operations that are different than in the first embodiment will be described below.

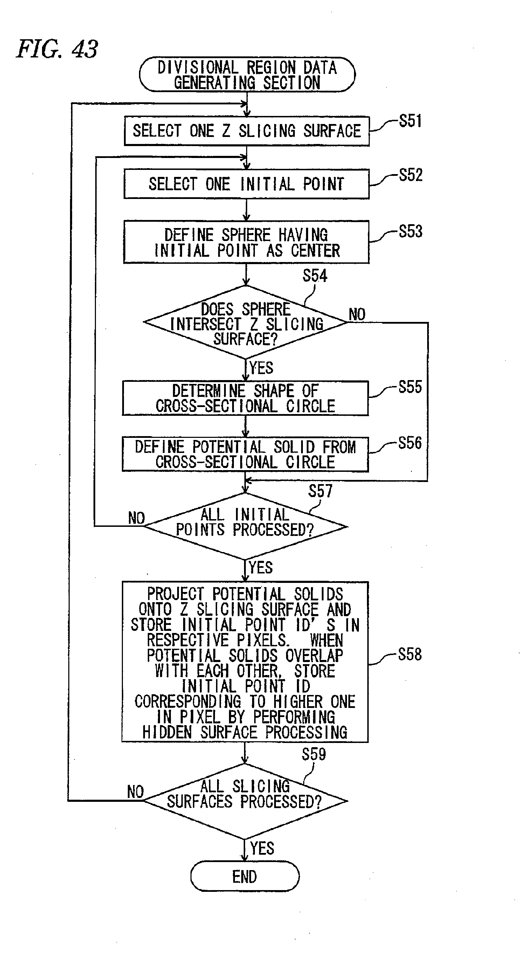

Next, a processing operation of the divisional region generating section 231 shown in Fig. 37 will be described with reference to Fig. 43. Fig. 43 is a flowchart showing a processing operation of the divisional region generating section 231 shown in Fig. 37. First, the divisional region generating section 231 selects one Z slicing surface (step S51). Then, the divisional region generating section 231 selects one initial point and defines a sphere having the selected initial point as the center (step S53).

Then, the divisional region generating section 231 judges whether or not the thus-defined sphere intersects the selected Z slicing surface (step S54). If the judgment result is that the sphere intersects the selected Z slicing surface, the divisional region generating section 231 determines a shape of a cross-sectional circle (step S55) and defines a potential solid (described above) from this cross-sectional circle (step S56). On the other hand, if the judgment result is that the sphere does not intersect the selected Z slicing surface, the divisional region generating section 231 does not define a potential solid (steps S55 and S56).

Then, the divisional region generating section 231 judges whether all initial points have been processed or not (step S57). The divisional region generating section 231 executes steps S52-S56 until a potential solid is defined for every initial point.

Then, the divisional region generating section 231 outputs, to the graphic board 28, triangle data that are defined on the basis of all of the thus-defined potential solids. Receiving the triangle data, the graphic board 28 projects the potential solids onto the Z-slicing surface and stores the initial point IDs. At this time, when potential solids overlap with each other, the graphic board 28 stores an initial point ID corresponding to a higher one in the pixel by performing hidden surface processing. The graphic board 28 outputs the contents of the image buffer obtained by drawing all the triangle data to the divisional region generating section 231.

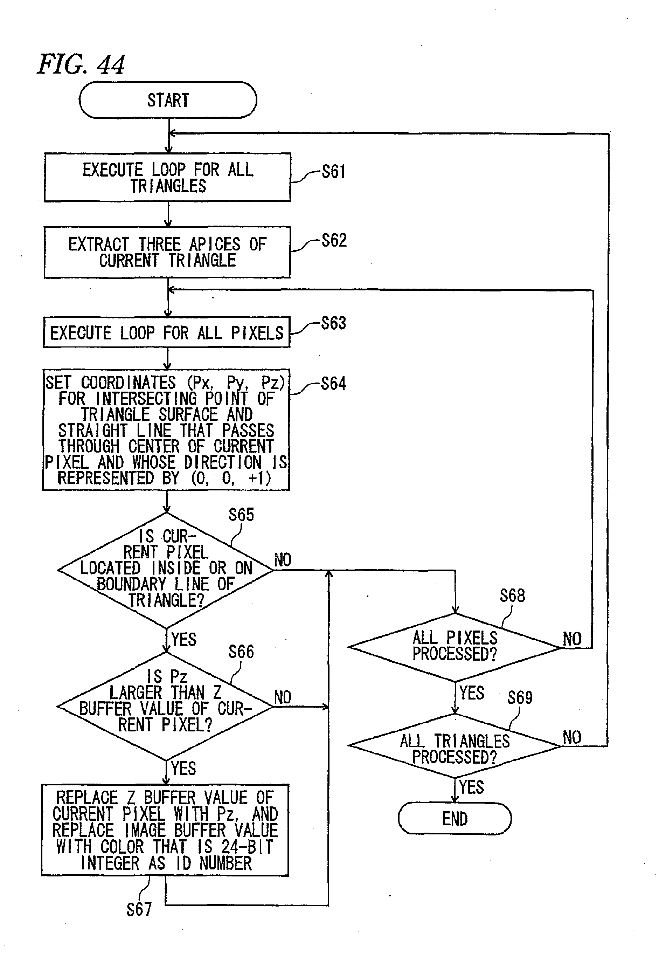

A processing operation of the triangle drawing section of the graphic board 28 shown in Fig. 37 will be described here with reference to Fig. 44. Fig. 44 is a flowchart showing a processing operation of the triangle drawing section of the graphic board 28 shown in Fig. 37. First, the triangle drawing section performs processing repeatedly for all triangles (step S61). Then, the triangle drawing section extracts the three apices of a current triangle (step S62) and performs processing repeatedly for all pixels (step S63). Then, the triangle drawing section sets coordinates (Px, Py, Pz) for an intersecting point of the triangle surface and a straight line that passes through the center of the current pixel and whose direction is represented by (0, 0, +1) (step S64).

Then, the triangle drawing section judges whether or not the current pixel is located inside or on a boundary line of the triangle (step S65). If the judgment result is that the current pixel is located inside or on a boundary line of the triangle, the triangle drawing section judges whether or not Pz is larger than a Z buffer value of the pixel (step S66). If the judgment result is that Pz is larger than the Z buffer value of the pixel, the triangle drawing section replaces the Z buffer value of the pixel with Pz and replaces the value of the image buffer with a color that is a 24-bit integer as an ID number (step S67). The triangle drawing section executes the above steps until all the pixels are processed (step S68). Furthermore, the triangle drawing section executes the above steps until all the triangles are processed (step S69). All the triangles can be drawn by executing the above process. The resulting contents of the image buffer are equivalent to a result that would be obtained when each Z slicing surface is divided on an initial-point-by-initial-point basis. Thus, the divisional region generating section 231 stores the resulting data (initial point IDs) in the divisional region data storage section 24.

Then, the divisional region generating section 231 judges whether all the Z slicing surfaces have been processed or not (step S59). The divisional region generating section 231 executes steps S51-S58 until all the Z slicing surfaces are processed. As a result of execution of the above process, the same divisional region data as obtained in the above-described first embodiment is obtained in the divisional region data storage section 24. The processing operation of the calculation data generating section 25 is the same as in the first embodiment and hence will not be described in detail.

In the second embodiment, where the radius of spheres is small, a voxel that is not included in any divisional region may occur. In such a case, a satisfactory result is obtained by performing the above-described processing operation again after increasing the radius of the spheres. In the second embodiment, the processing operations of the divisional region generating section 231 and the calculation data generating section 25 are such that the latter generates calculation data after the former generates all divisional region data. Alternatively, generation of divisional regions and generation of calculation data may be performed for each Z slicing surface in the following manner. Upon generation of divisional region data of one Z slicing surface, calculation data is generated on the basis of those divisional region data. Then, divisional region data are generated for the next Z slicing surface and calculation data is generated on the basis of those divisional region data. This makes it possible to the amount of data stored in the interim data storage section 26 and to thereby make the related processing easier.

<Embodiment 3>

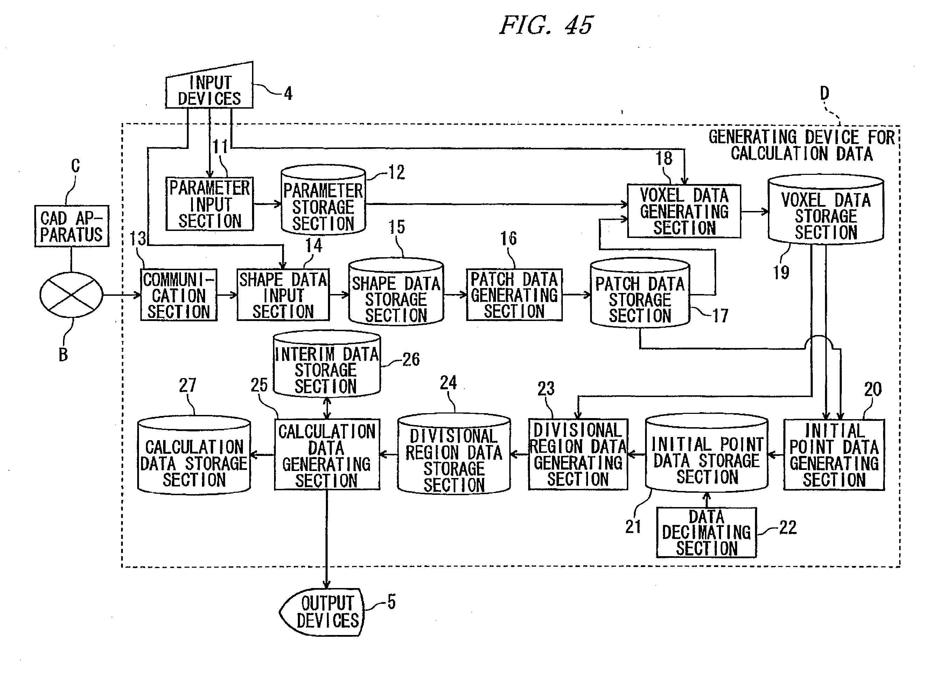

Next, a generating device for calculation data according to a second embodiment will be described. Fig. 45 is a block diagram showing the configuration of the second embodiment. Sections having the same sections in the apparatus according to the first embodiment shown in Fig. 21 are given the same symbols as the latter in this figure, and descriptions therefor will be omitted. The apparatus shown in this figure is different from the apparatus shown in Fig. 21 in that the initial point data generating section 20 reads data of the patch data storage section 17 and generates initial points. In particular, the initial point data generating section 20 used in the third embodiment is characterized by generating initial points that are dense in the vicinity of a wall (in a boundary layer) of an object to be analyzed.

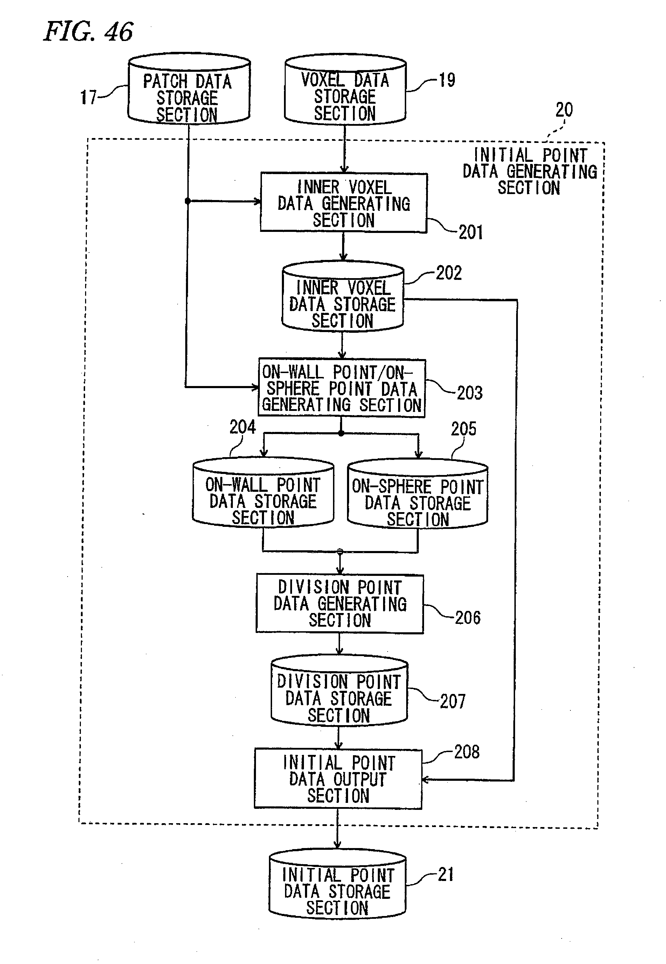

Next, the configuration of the initial point data generating section 20 shown in Fig. 45 will be described with reference to Fig. 46. Fig. 46 shows the configuration of the initial point data generating section 20 shown in Fig. 45. In Fig. 46, symbol 201 denotes an inner voxel data generating section which generates inner voxel data of voxels located inside an object to be analyzed. Symbol 202 denotes an inner voxel data storage section which stores the inner voxel data generated by the inner voxel data generating section 201. Symbol 203 denotes an on-wall point/on-sphere point data generating section which generates point data on walls and spheres. Symbol 204 denotes an on-wall point data storage section which stores on-wall point data generated by the on-wall point/on-sphere point data generating section 203, and symbol 205 denotes an on-sphere point data storage section which stores on-sphere point data generated by the on-wall point/on-sphere point data generating section 203. Symbol 206 designates a division point data generating section which generates division point data by referring to the on-wall point data and the on-sphere point data. Symbol 207 stands for a division point data storage section which stores the division point data generated by the division point data generating section 206. Symbol 208 denotes an initial point data output section which generates initial points on the basis of the division point data and the inner voxel data, outputs the generated initial points, and stores them in the initial point data storage section 21.

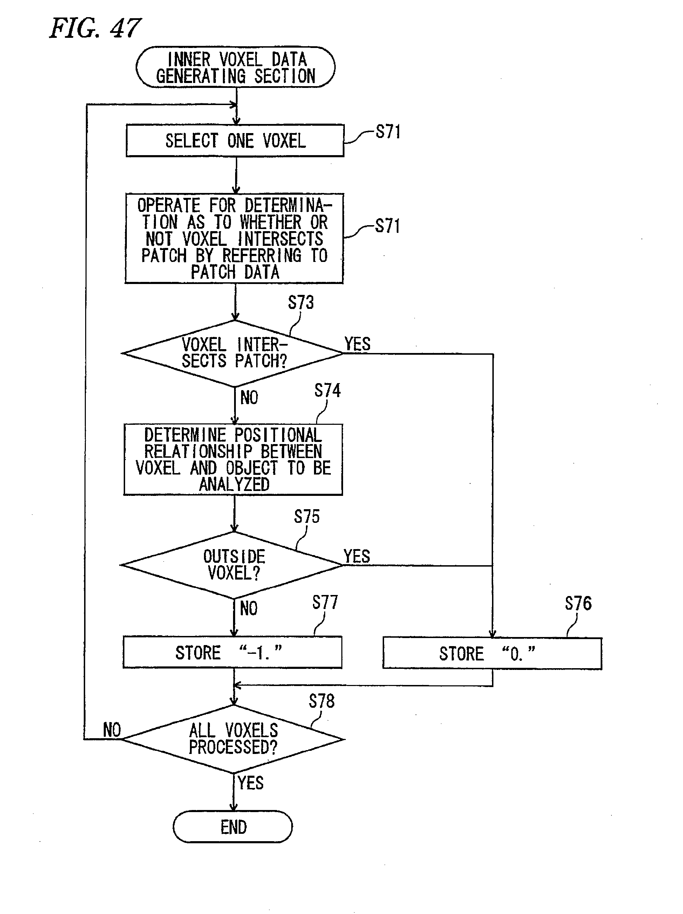

Next, how the inner voxel data generating section 201 shown in Fig. 46 operates will be described with reference to Fig. 47. First, the inner voxel data generating section 201 selects one voxel by referring to voxel data stored in the voxel data storage section 19 (step S71). Then, the inner voxel data generating section 201 operates for determination as to whether or not the selected voxel intersects a patch by referring to the patch data storage section 17 (step S72), and judges whether or not the selected voxel intersects a patch (step S73). If the judgment result is that the selected voxel intersects a patch, the inner voxel data generating section 201 stores a value "-1" (indicating that the voxel is located inside the object to be analyzed) in a storage region for the selected voxel of the inner voxel data storage section 202 (step S76).

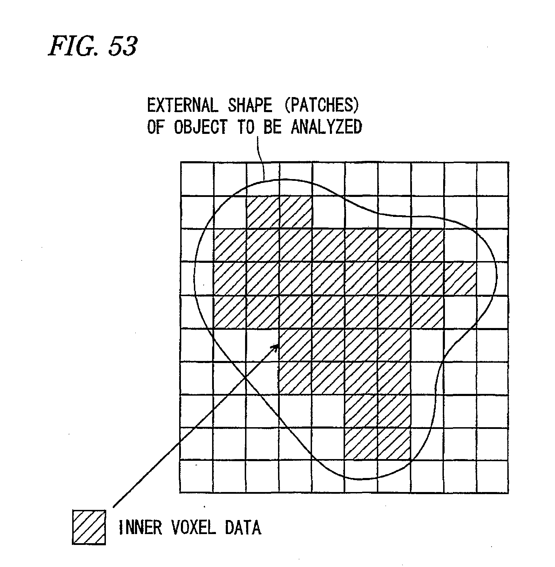

On the other hand, if the selected voxel does not intersect a patch, the inner voxel data generating section 201 determines a positional relationship between the voxel and the object to be analyzed (step S74) and judges whether or not the selected voxel is located outside the object to be analyzed (step S75). If the judgment result is that the voxel is located outside the object to be analyzed, the inner voxel data generating section 201 stores a value "-1" (indicating that the voxel is located outside the object to be analyzed) in the storage region for the selected voxel of the inner voxel data storage section 202 (step S76). If the judgment result is that the voxel is located inside the object to be analyzed, the inner voxel data generating section 201 stores a value "0" (indicating that the voxel is located inside the object to be analyzed) in the storage region for the selected voxel of the inner voxel data storage section 202 (step S77). Then, the inner voxel data generating section 201 judges whether all the voxels have been processed or not (step S78). The inner voxel data generating section 201 executes steps S71-S76 until all the voxels are processed. As a result of execution of the above process, as shown in Fig. 53, data of voxels that are located inside the object to be analyzed are stored in the inner voxel data storage section 202.

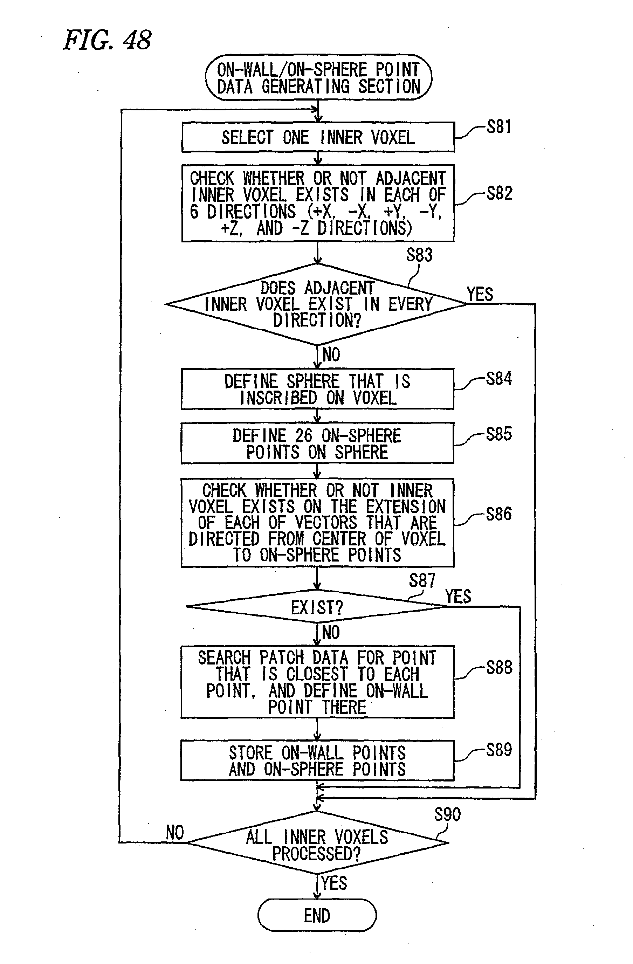

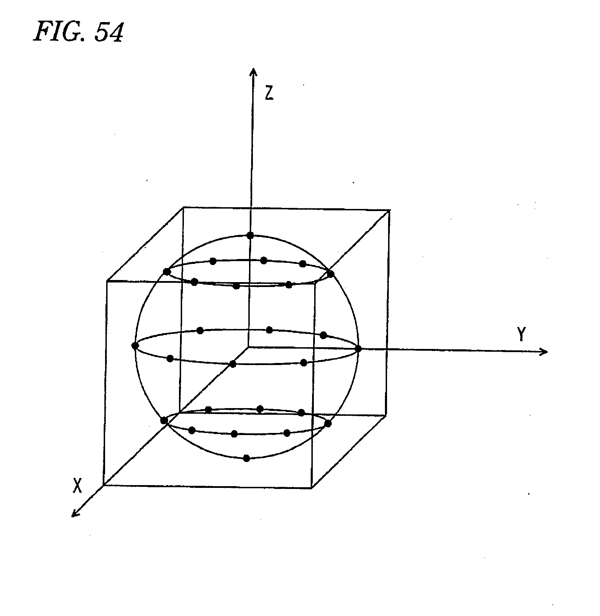

Next, how the on-wall point/on-sphere point data generating section 203 shown in Fig. 46 operates will be described with reference to Fig. 48. First, the on-wall point/on-sphere point data generating section 203 selects one inner voxel by referring to the inner voxel data storage section 202 (step S81), checks whether or not an adjacent inner voxel exists in each of the six directions (i.e., +X, -X, +Y, -Y, +Z, and -Z directions) (step S82), and judges whether or not an adjacent inner voxel exists in every direction (step S83). If the judgment result is that an adjacent inner voxel does not exist in every direction, the on-wall point/on-sphere point data generating section 203 defines a sphere that is inscribed on the selected voxel (step S84). Then, the on-wall point/on-sphere point data generating section 203 defines 26 on-sphere points on the sphere as shown in Fig. 54 (step S85), checks whether or not an inner voxel exists on the extension of each of vectors which are directed from the center of the voxel to the respective on-sphere points (step S86), and judges whether or not such an inner voxel exists (step S87).

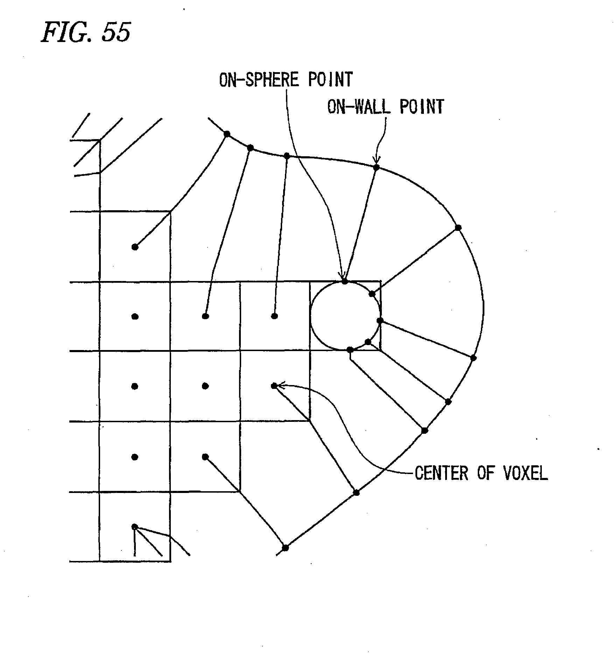

If the judgment result is that such an inner voxel does not exist, the on-wall point/on-sphere point data generating section 203 searches the shape data for a point that is closest to each point and defines an on-wall point there (step S88) and stores the thus-defined on-wall points and on-sphere points in the on-wall point data storage section 204 and the on-sphere point data storage section 205, respectively (step S89). Then, the on-wall point/on-sphere point data generating section 203 judges whether all the voxels have been processed or not (step S90). The on-wall point/on-sphere point data generating section 203 executes steps S81-S89 until all the voxels are processed. As a result of the above process, as shown in Fig. 55, the defined on-wall points and on-sphere points are stored in the on-wall point data storage section 204 and the on-sphere point data storage section 205, respectively.

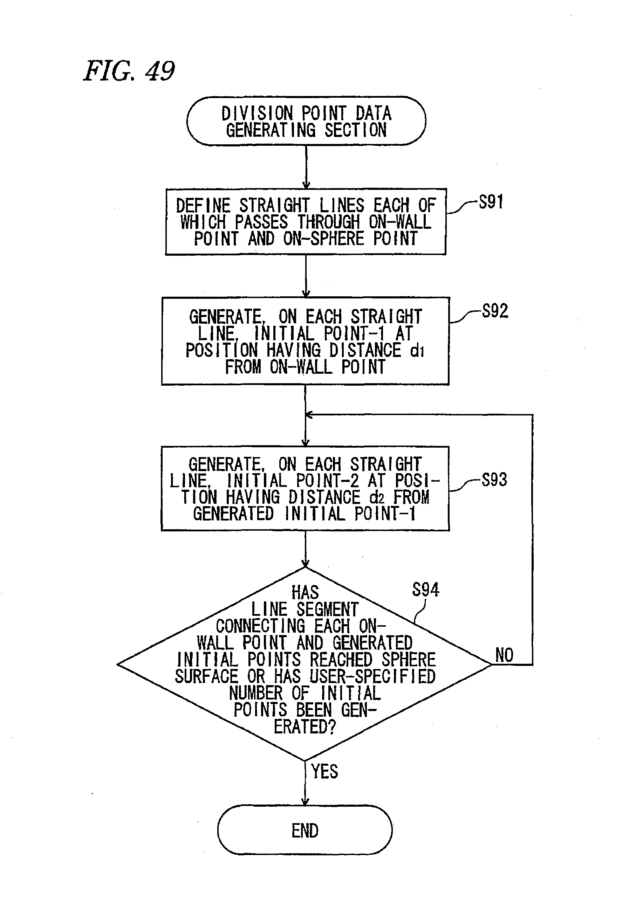

Next, how the division point data generating section 206 shown in Fig. 46 operates will be described with reference to Fig. 49. First, the division point data generating section 206 defines straight lines each passing through an on-wall point and a on-sphere point by referring to the on-wall point data storage section 204 and the on-sphere point data storage section 205 (step S91), and generates, on each straight line, an initial point-1 at a position having a distance d1 from the on-wall point (step S92).

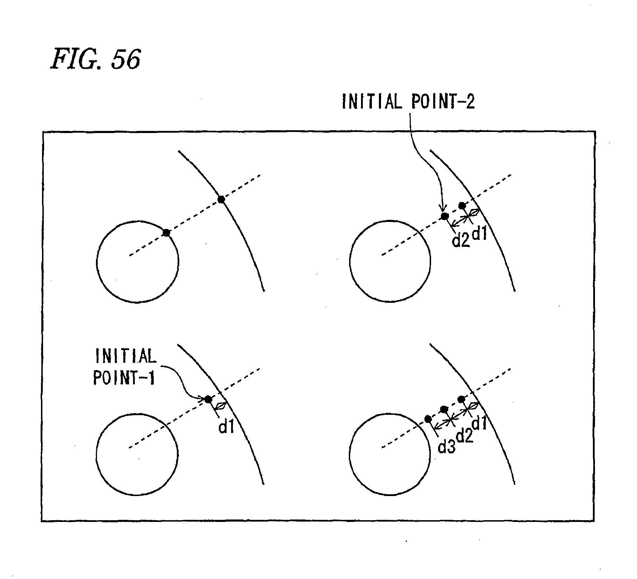

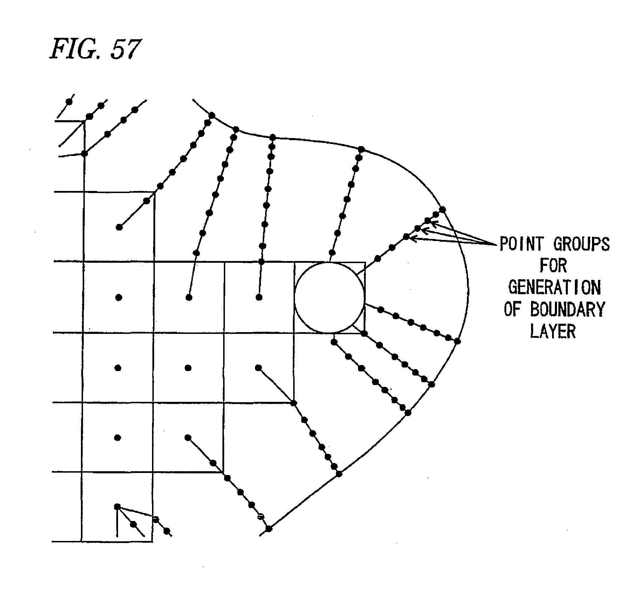

Then, the division point data generating section 206 generates, on each defined straight line, an initial point-2 at a position having a distance d2 from the initial point-1 (step S93). Then, the division point data generating section 206 judges whether or not the line segment that connects each on-wall point and the generated initial points has intersected the sphere surface or a user-specified number of initial points have been generated on each straight line (step S94). Step S93 is executed repeatedly until either condition is satisfied, whereby an initial point-3, an initial point-4, ··· are generated (see Fig. 56). The generated initial point groups are stored in the division point data storage section 207. Which of the repetition judging condition should be employed is determined in advance. As a result of the above process, as shown in Fig. 57, initial point groups for generation of a boundary layer are generated on the respective straight lines which connect the on-sphere points and the on-wall points, respectively.

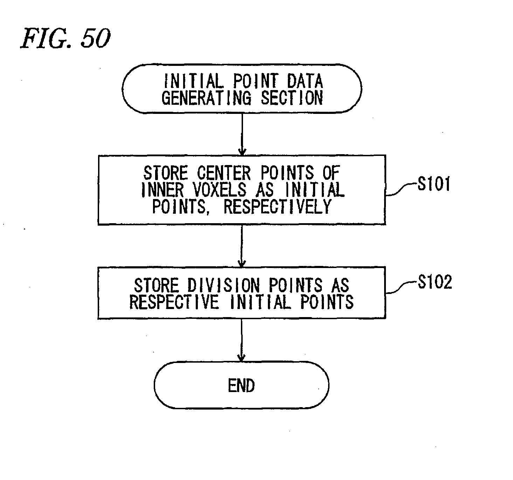

Next, how the initial point data output section 208 shown in Fig. 46 operates will be described with reference to Fig. 50. First, the initial point data output section 208 reads out the voxel data stored in the inner voxel data storage section 202, and stores the center points of the respective voxels in the initial point data storage section 21 as initial points (step S101). Then, the initial point data output section 208 reads out the division point data stored in the division point data storage section 207, and stores the read-out division point data in the initial point data storage section 21 as initial points (step S102). As a result of this process, the center points of the voxels located inside the object to be analyzed are stored as initial data and the division points are stored as initial data for formation of a boundary layer.

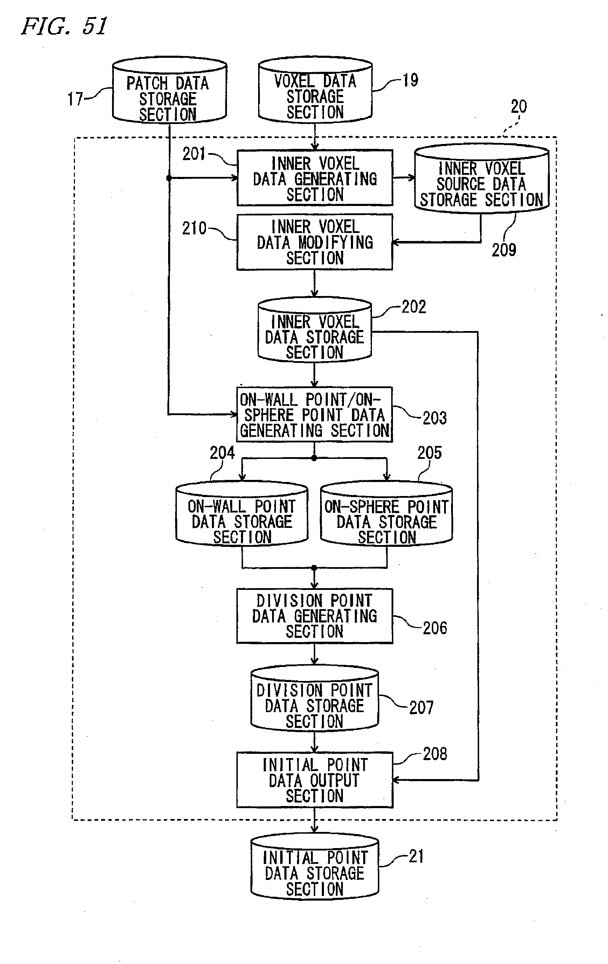

Next, a modification of the configuration of Fig. 46 will be described with reference to Fig. 51. Sections having the same sections in the configuration of Fig. 46 are be given the same symbols as the latter, and descriptions therefor will be omitted. The configuration of Fig. 51 is different from that of Fig. 46 in that an inner voxel source data storage section 209 and an inner voxel data modifying section 210 are newly provided which serve to generate such initial points as to form a thick boundary layer. The inner voxel source data storage section 209 corresponds to the inner voxel data storage section 202 shown in Fig. 46, and stores voxel data of voxels that are located inside the object to the analyzed. To increase the thickness of a boundary layer, the inner voxel data modifying section 210 performs processing of removing voxel data of voxels that are located close to the boundary layer from the voxel data stored in the inner voxel source data storage section 209.

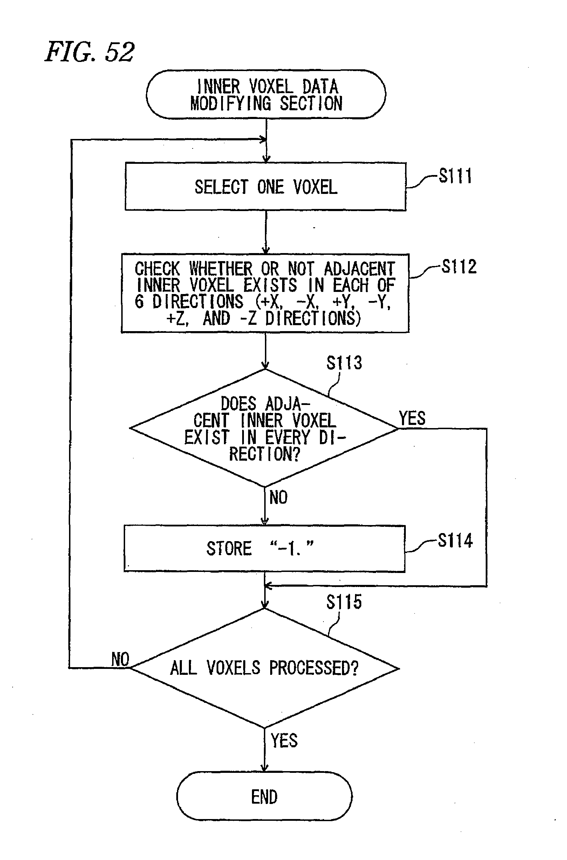

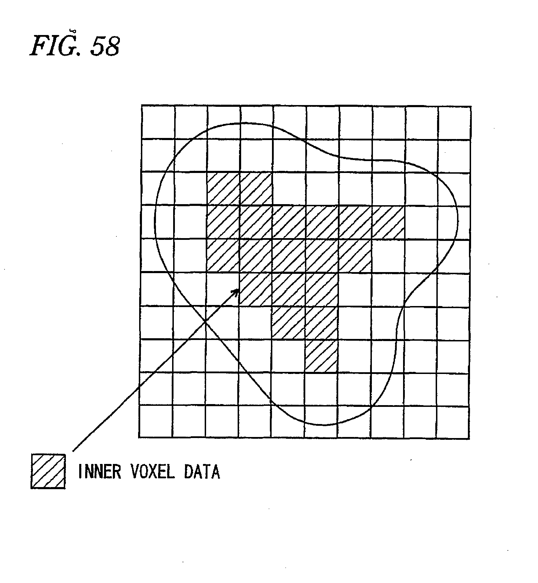

Next, how the inner voxel data modifying section 210 shown in Fig. 51 operates will be described with reference to Fig. 52. First, the inner voxel data modifying section 210 selects one inner voxel by referring to the voxel data stored in the inner voxel source data storage section 209 (step S111), checks whether or not an adjacent inner voxel exists in each of the six directions (i.e., +X, -X, +Y, -Y, +Z, and -Z directions) (step S112), and judges whether or not an adjacent inner voxel exists in every direction (step S113). If the judgment result is that an adjacent inner voxel does not exist in every direction, the inner voxel data modifying section 210 stores "-1" in the storage region, corresponding to the selected voxel, of the inner voxel data storage section 202 (step S114). Then, the inner voxel data modifying section 210 judges whether all the voxels have been processed or not (step S115). The inner voxel data modifying section 210 executes steps S111-S114 repeatedly until all the voxels are processed. As a result of this process, the data of the voxels located inside the object to the analyzed are stored in the inner voxel data storage section 202. However, the voxels that are close to a boundary layer are removed. As a result, the data of the voxels located inside the object to the analyzed are stored in the inner voxel data storage section 202 in the manner shown in Fig. 58. However, the collection of the voxel data stored in the inner voxel data storage section 202 is smaller in volume (in the figures, area) than the collection of the voxel data shown in Fig. 53, and the space where the boundary layer is defined is increased accordingly. The following processing operation is the same as described above.

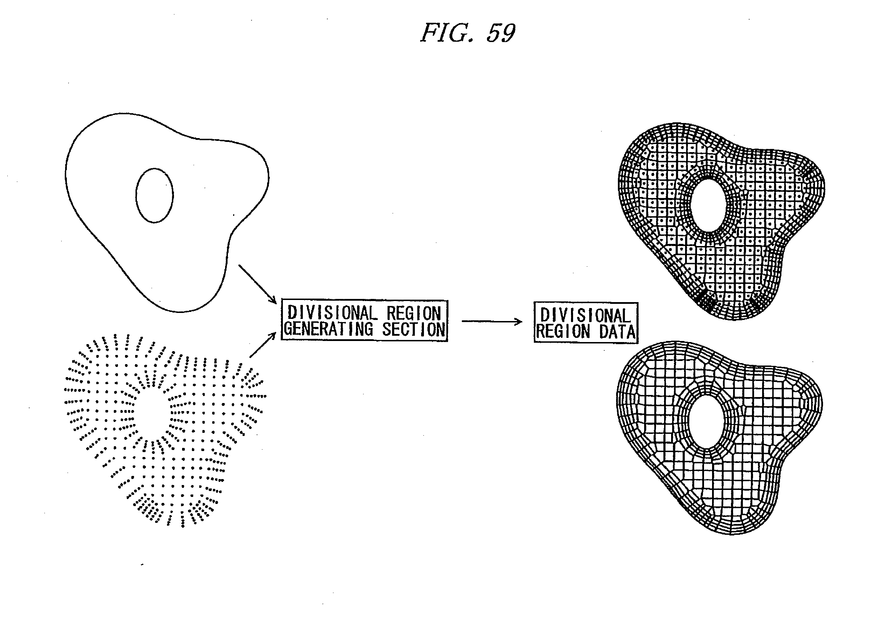

The initial point data generated according to the third embodiment is stored in the initial point data storage section 21, and the divisional region generating section 23 generates divisional region data by the above-described processing operation on the basis of the initial point data stored in the initial point data storage section 21. As a result, divisional region data as shown in Fig. 59 can be defined. Dividing a boundary layer into dense divisional regions in the above-described manner makes it possible to increase the accuracy of analysis in the boundary layer.

Calculation data generation processing may be performed by recording programs for realizing the functions of the processing units shown in Fig. 21, 37, or 45 in a computer-readable recording medium and causing a computer system to read and run the programs stored in this recording medium. The term "computer system" as used herein includes an OS and such hardware as peripheral device, and encompasses a WWW system which is provided with a homepage providing environment (or display environment). The term "computer-readable recording medium" encompasses portable media such as a flexible disk, a magneto-optical disc, a ROM, and a CD-ROM, a hard disk incorporated in a computer system, and the like, and also encompasses media which hold a program for a prescribed time such as a volatile memory (RAM) provided inside a computer system to serve as a server or a client when a program has been transmitted to it over a network such as the Internet or a communication line such as a telephone line.

The above-mentioned programs may be transmitted to another computer system from a computer system in which the programs are stored in a storage device or the like over a transmission medium or by transmission waves of a transmission medium. The "transmission medium" for transmission of the programs encompasses media having a function of transmitting information such as a network (communication network) as exemplified by the Internet and a communication line such as a telephone line. The above-mentioned programs may be ones for implementing part of the above-described functions. Furthermore, the above-mentioned programs may be ones capable of implementing the above-described functions in such a manner as to be combined with programs that are already recorded in a computer system, that is, what is called differential files (differential programs).

Although this application has been described in detail by referring to the particular embodiments, it is apparent to those skilled in the art that various changes and modifications are possible without departing from the spirit and scope of the invention.

This application is based on Japanese Patent application No. 2010-187309 filed on August 24, 2010 and Japanese Patent application No. 2010-284878 filed on December 21, 2010, the disclosures of which are incorporated here by reference.

INDUSTRIAL APPLICABILITY

The invention can also be applied to uses in which it is indispensable to generate calculation data to be input to a numerical analysis apparatus which can solve the problems of the conventional numerical analysis methods, that is, the finite element method, the finite volume method, the voxel method, the improved version of the voxel method, and the particle method, and thereby reduce the computation load in the solver process without lowering the accuracy of analysis.

DESCRIPTION OF REFERENCE NUMERALS

A ··· Numerical analysis apparatus (physical quantity calculating apparatus)
P ··· Numerical analysis program
P1 ··· Pre process program
P2 ··· Solver process program (physical quantity calculation program)
P3 ··· Post process program
M ··· Calculation data model
$V_i$ ··· Volume occupied virtually by a particle i
$S_{ij}$ ··· Area of the boundary between particles i and j
$r_{ij}$ ··· Distance vector from i to j
$n_{ij}$ ··· Normal vector of $S_{ij}$
1 ··· CPU
2 ··· Storage device
2a ··· Program storage section
2b ··· Data storage section
3 ··· DVD drive
4 ··· Input devices
4a ··· Keyboard
4b ··· Mouse
5 ··· Output devices
5a ··· Display
5b ··· Printer
D ··· Generating device for calculation data
11 ··· Parameter input section
12 ··· Parameter storage section
13 ··· Communication section
14 ··· Shape data input section
15 ··· Shape data storage section
16 ··· Patch data generating section
17 ··· Patch data storage section
18 ··· Voxel data generating section
19 ··· Voxel data storage section
20 ··· Initial point data generating section
21 ··· Initial point data storage section
22 ··· Data decimating section
23, 231 ··· Divisional data generating section
24 ··· Divisional data storage section
25 ··· Calculation data generating section
26 ··· Interim data storage section
27 ··· Calculation data storage section
28 ··· Graphic board

**Claims**

1.  A generating device for calculation data, comprising:

    a patch data storage section for storing patch data in which an object to be subjected to a numerical analysis is expressed as plural polygons;
    a parameter storage section for storing parameters which are necessary for the numerical analysis;
    a voxel data storage section for storing voxel data obtained by dividing an analysis domain including the object into plural rectangular parallelepipeds;
    a voxel data generating section for defining the voxel data according to the parameters stored in the parameter storage section, giving voxel attributes to respective voxels, and storing the voxel attributes in the voxel data storage section;

an initial point data storage section for storing initial point data to be used for domain division of the analysis domain;

an initial point data generating section for generating the initial point data which are smaller in number than the voxels using center points of the voxels, and storing the generated initial point data in the initial point data storage section;

a divisional region data storage section for storing divisional region data obtained by dividing the object into plural divisional regions;

a divisional region data generating section for defining divisional regions in the object which are plural ones of the voxels on the basis of the voxel attributes stored in the voxel data storage section and the initial point data stored in the initial point data storage section, and storing the divisional region data of the defined divisional regions in the divisional region data storage section;

a calculation data storage section for storing calculation data to be used for the numerical analysis; and

a calculation data generating section for generating boundary surface data of each divisional region on the basis of the divisional region data stored in the divisional region data storage section, and storing the generated boundary surface data in the calculation data storage section as the calculation data.

2. The generating device for calculation data according to claim 1, wherein
the divisional region data generating section generates the divisional regions by determining a divisional region to which each voxel belongs by selecting an initial point having a shortest distance from the center point of each voxel among the initial point data stored in the initial point data storage section.

3. The generating device for calculation data according to claim 1, wherein
the divisional region data generating section generates the divisional regions for all slicing surfaces in the analysis domain by defining the slicing surfaces being boundary surfaces of the voxels that are perpendicular to a prescribed axis, defining cross sections which are obtained when each of the slicing surfaces crosses spheres which have the initial points as their centers, defining potential solids which extend from the cross sections and have heights that vary depending on distances from the initial points, and defining divisional regions on the slicing surface on the basis of image data that are drawn by performing 3D hidden surface processing on the potential solids.

4. The generating device for calculation data according to any one of claims 1 to 3, wherein
the initial point data generating section selects inner voxels located inside the object from the voxels on the basis of the patch data stored in the patch data storage section and the voxel data stored in the voxel data storage section, defines spheres that are inscribed on inner voxels each of which lacks an adjacent voxel among the selected inner voxels, defines on-sphere points on the spheres and defines on-wall points on a wall of the object, defines division points between each pair of an on-sphere point and an on-wall point, and employs the division points and the center points of the voxels as the initial points.

5. A generating method for calculation data in a generating device for calculation data, the generating device including: a patch data storage section which is stored with patch data in which an object to be subjected to a numerical analysis is expressed as plural polygons; a parameter storage section for storing parameters which are necessary for the numerical analysis; a voxel data storage section for storing voxel data obtained by dividing an analysis domain including the object into plural rectangular parallelepipeds; an initial point data storage section for storing initial point data to be used for domain division of the analysis domain; a divisional region data storage section for storing divisional region data obtained by dividing the object into plural divisional regions; and a calculation data storage section for storing calculation data to be used for the numerical analysis, the generating method comprising:

a voxel data generating step of defining the voxel data according to the parameters stored in the parameter storage section, giving voxel attributes to respective voxels, and storing the voxel attributes in the voxel data storage section;

an initial point data generating step of generating the initial point data which are smaller in number than the voxels using center points of the voxels, and storing the generated initial point data in the initial point data storage section;

a divisional region data generating step of defining, in the object, divisional regions which are plural ones of the voxels on the basis of the voxel attributes stored in the voxel data storage section and the initial point data stored in the initial point data storage section, and storing the divisional region data of the defined divisional regions in the divisional region data storage section; and

a calculation data generating step of generating boundary surface data of each divisional region on the basis of the divisional region data stored in the divisional region data storage section, and storing the generated boundary surface data in the calculation data storage section as the calculation data.

**6.** The generating method for calculation data according to claim 5, wherein
the divisional region data generating step generates the divisional regions by determining a divisional region to which each voxel belongs by selecting an initial point having a shortest distance from the center point of each voxel among the initial point data stored in the initial point data storage section.

**7.** The generating method for calculation data according to claim 5, wherein
the divisional region data generating step generates the divisional regions for all slicing surfaces in the analysis domain by defining the slicing surfaces being boundary surfaces of the voxels that are perpendicular to a prescribed axis, defining cross sections which are obtained when each of the slicing surfaces crosses spheres which have the initial points as their centers, defining potential solids which extend from the cross sections and have heights that vary depending on distances from the initial points, and defining divisional regions on the slicing surface on the basis of image data that are drawn by performing 3D hidden surface processing on the potential solids.

**8.** The generating method for calculation data according to any one of claims 5 to 7, wherein
the initial point data generating step selects inner voxels located inside the object from the voxels on the basis of the patch data stored in the patch data storage section and the voxel data stored in the voxel data storage section, defines spheres that are inscribed on inner voxels each of which lacks an adjacent voxel among the selected inner voxels, defines on-sphere points on the spheres and defines on-wall points on a wall of the object, defines division points between each pair of an on-sphere point and an on-wall point, and employs the division points and the center points of the voxels as the initial points.

**9.** A generating program for calculation data for causing a computer to generate calculation data, the computer being provided in a generating device for calculation data, the generating device including: a patch data storage section which is stored with patch data in which an object to be subjected to a numerical analysis is expressed as plural polygons; a parameter storage section for storing parameters which are necessary for the numerical analysis; a voxel data storage section for storing voxel data obtained by dividing an analysis domain including the object into plural rectangular parallelepipeds; an initial point data storage section for storing initial point data to be used for domain division of the analysis domain; a divisional region data storage section for storing divisional region data obtained by dividing the object into plural divisional regions; and a calculation data storage section for storing calculation data to be used for the numerical analysis, the generating program causing the computer to execute:

a voxel data generating step of defining the voxel data according to the parameters stored in the parameter storage section, giving voxel attributes to respective voxels, and storing the voxel attributes in the voxel data storage section;
an initial point data generating step of generating the initial point data which are smaller in number than the voxels using center points of the voxels, and storing the generated initial point data in the initial point data storage section;
a divisional region data generating step of defining, in the object, divisional regions which are plural ones of the voxels on the basis of the voxel attributes stored in the voxel data storage section and the initial point data stored in the initial point data storage section, and storing the divisional region data of the defined divisional regions in the divisional region data storage section; and
a calculation data generating step of generating boundary surface data of each divisional region on the basis of the divisional region data stored in the divisional region data storage section, and storing the generated boundary surface data in the calculation data storage section as the calculation data.

**10.** The generating program for calculation data according to claim 9, wherein
the divisional region data generating step generates the divisional regions by determining a divisional region to which each voxel belongs by selecting an initial point having a shortest distance from the center point of each voxel among the initial point data stored in the initial point data storage section.

**11.** The generating program for calculation data according to claim 9, wherein
the divisional region data generating step generates the divisional regions for all slicing surfaces in the analysis domain by defining the slicing surfaces being boundary surfaces of the voxels that are perpendicular to a prescribed axis, defining cross sections which are obtained when each of the slicing surfaces crosses spheres which have the initial points as their centers, defining potential solids which extend from the cross sections and have heights that vary depending on distances from the initial points, and defining divisional regions on the slicing surface on the

# EP 2 610 772 A1

basis of image data that are drawn by performing 3D hidden surface processing on the potential solids.

12. The generating program for calculation data according to any one of claims 9 to 11, wherein
the initial point data generating step selects inner voxels located inside the object from the voxels on the basis of the patch data stored in the patch data storage section and the voxel data stored in the voxel data storage section, defines spheres that are inscribed on inner voxels each of which lacks an adjacent voxel among the selected inner voxels, defines on-sphere points on the spheres and defines on-wall points on a wall of the object, defines division points between each pair of an on-sphere point and an on-wall point, and employs the division points and the center points of the voxels as the initial points.

FIG. 1

# FIG. 2

# FIG. 3

| | PRESENT INVENTION | FINITE ELEMENT METHOD AND FINITE VOLUME METHOD |
|---|---|---|
| PRE PROCESS | -CALCULATION DATA MODEL<br>: NOT REQUIRING VERTEX AND CONNECTIVITY<br>-ANALYSIS DOMAIN<br>: INCLUDING DIVIDED DOMAINS OTHER THAN ORTHOGONAL GRID SHAPE | -CALCULATION DATA MODEL<br>: REQUIRING VERTEX AND CONNECTIVITY<br>-ANALYSIS DOMAIN<br>: INCLUDING DIVIDED DOMAINS OTHER THAN ORTHOGONAL GRID SHAPE |
| SOLVER PROCESS | -PHYSICAL VALUE CALCULATION<br>: NOT REQUIRING VERTEX AND CONNECTIVITY | -PHYSICAL VALUE CALCULATION<br>: REQUIRING VERTEX AND CONNECTIVITY |

| | VOXEL METHOD | VOXEL METHOD (BOUNDARY CORRECTION) | PARTICLE METHOD |
|---|---|---|---|
| PRE PROCESS | -CALCULATION DATA MODEL<br>: NOT REQUIRING VERTEX AND CONNECTIVITY<br>-ANALYSIS DOMAIN<br>: DIVIDED DOMAINS HAVE ONLY ORTHOGONAL GRID SHAPE | -CALCULATION DATA MODEL<br>: REQUIRING VERTEX AND CONNECTIVITY<br>-ANALYSIS DOMAIN<br>: INCLUDING DIVIDED DOMAINS OTHER THAN ORTHOGONAL GRID SHAPE | -CALCULATION DATA MODEL<br>: NOT REQUIRING VERTEX AND CONNECTIVITY<br>: REQUIRING POSITIONS OF PARTICLES AND LINKAGE RELATION BETWEEN PARTICLES<br>-ANALYSIS DOMAIN<br>: DIVIDED DOMAINS ARE ABSENT |
| SOLVER PROCESS | -PHYSICAL VALUE CALCULATION<br>: NOT REQUIRING VERTEX AND CONNECTIVITY | -PHYSICAL VALUE CALCULATION<br>: REQUIRING VERTEX AND CONNECTIVITY | -PHYSICAL VALUE CALCULATION<br>: NOT REQUIRING VERTEX AND CONNECTIVITY<br>: REQUIRING TIME-DEPENDENT NEAR-NEIGHBOR ALGORITHMS |

EP 2 610 772 A1

*FIG. 4*

CONVENTIONAL FINITE VOLUME METHOD (FVM)

PRE PROCESS

CALCULATION DATA MODEL
- VERTEX
- CONNECTIVITY
- LINK

BOUNDARY CONDITIONS
INITIAL CONDITIONS
ETC.

SOLVER PROCESS

(CALCULATE DISCRETIZED GOVERNING EQUATION BY USING VERTEX + CONNECTIVITY)

PRESENT INVENTION

PRE PROCESS

CALCULATION DATA MODEL
- VOLUME OF DIVIDED DOMAIN
- CHARACTERISTIC VALUE OF BOUNDARY SURFACE (AREA AND NORMAL VECTOR OF BOUNDARY SURFACE)
- CONTROL POINT COORDINATES
- LINK

BOUNDARY CONDITIONS
INITIAL CONDITIONS
ETC.

SOLVER PROCESS

(CALCULATE DISCRETIZED GOVERNING EQUATION BY USING VOLUME OF DIVIDED DOMAIN + CHARACTERISTIC VALUE OF BOUNDARY SURFACE + CONTROL POINT COORDINATES)

FIG. 5

FIG. 6

FIG. 7

FIG. 8

PROJECTION
PLANE P

CONTROL
POINT a

FIG. 9

# FIG. 10

FIG. 11

FIG. 12

# FIG. 13

ASSEMBLY DIAGRAM

VIRTUAL LINKAGE
ON CALCULATION

COMPONENT
A

COMPONENT
B

COMPONENT
C

COORDINATE SYSTEM
IN ASSEMBLY

COMPONENT DIAGRAM

COMPONENT A
3D CAD
DATA

COORDINATE
SYSTEM OF
COMPONENT A

COMPONENT B
3D CAD
DATA

COORDINATE
SYSTEM OF
COMPONENT B

COMPONENT C
3D CAD
DATA

COORDINATE
SYSTEM OF
COMPONENT C

FIG. 14

FIG. 15

INTERSECTION
BETWEEN LINKAGES

INTERSECTION
BETWEEN LINKAGES

a

b

LINKAGE RELATED TO
CONTROL POINT a

LINKAGE RELATED TO
CONTROL POINT b

EP 2 610 772 A1

FIG. 16

C — CAD DEVICE ⟷ ⊗ ⟍ B

A — NUMERICAL ANALYSIS APPARATUS (PHYSICAL VALUE CALCULATION APPARATUS)

COMMUNICATION DEVICE — 6

4 { 4a — KEYBOARD
4b — MOUSE }

CPU — 1

DISPLAY — 5a
PRINTER — 5b
} 5

DVD DRIVE — 3 ← ⊙ X

2 — MEMORY DEVICE

MEMORY DEVICE FOR PROGRAMS — 2a

NUMERICAL ANALYSIS PROGRAM — P

PRE PROCESS PROGRAM — P1

SOLVER PROCESS PROGRAM — P2

POST PROCESS PROGRAM — P3

DATA STORAGE SECTION — 2b

SOLVER INPUT DATA FILE — F

CALCULATION DATA MODEL — M

BOUNDARY CONDITION DATA — D1

CALCULATION CONDITION DATA — D2

MATERIALS PROPERTY DATA — D3

INITIAL CONDITION DATA — D4

3D SHAPE DATA — D5

CALCULATION RESULT DATA — D6

FIG. 17

```
        ┌─────────────┐
        │    START    │
        └─────────────┘
               │
               ▼
  ┌──────────────────────────┐
  │       PRE PROCESS        │───S1
  └──────────────────────────┘
               │
               ▼
  ┌──────────────────────────┐
  │      SOLVER PROCESS      │───S2
  └──────────────────────────┘
               │
               ▼
  ┌──────────────────────────┐
  │       POST PROCESS       │───S3
  └──────────────────────────┘
               │
               ▼
        ┌─────────────┐
        │     END     │
        └─────────────┘
```

## FIG. 18

```
        ┌─────────────────┐
        │      START      │
        └─────────────────┘
                 │
                 ▼
   ┌───────────────────────────┐
   │   ACQUIRE 3D SHAPE DATA    │──── S1a
   └───────────────────────────┘
                 │
                 ▼
   ┌───────────────────────────┐
   │   ANALYZE 3D SHAPE DATA    │──── S1b
   └───────────────────────────┘
                 │
                 ▼
   ┌───────────────────────────┐
   │ CORRECTION OR CHANGE PROCESS│──── S1c
   │    FOR 3D SHAPE DATA       │
   └───────────────────────────┘
                 │
                 ▼
   ┌───────────────────────────┐
   │  GENERATE CALCULATION DATA │──── S1d
   │          MODEL            │
   └───────────────────────────┘
                 │
                 ▼
   ┌───────────────────────────┐
   │  SET UP MATERIALS PROPERTY │──── S1e
   │          DATA             │
   └───────────────────────────┘
                 │
                 ▼
   ┌───────────────────────────┐
   │  SET UP BOUNDARY CONDITION │──── S1f
   │          DATA             │
   └───────────────────────────┘
                 │
                 ▼
   ┌───────────────────────────┐
   │   SET UP INITIAL CONDITION │──── S1g
   │          DATA             │
   └───────────────────────────┘
                 │
                 ▼
   ┌───────────────────────────┐
   │ SET UP CALCULATION CONDITION│──── S1h
   │          DATA             │
   └───────────────────────────┘
                 │
                 ▼
   ┌───────────────────────────┐
   │ GENERATE SOLVER INPUT DATA │──── S1i
   │          FILE             │
   └───────────────────────────┘
                 │
                 ▼
        ┌─────────────────┐
        │       END       │
        └─────────────────┘
```

## FIG. 19

```
                    ┌─────────────┐
                    │    START    │
                    └──────┬──────┘
                           ▼
              ┌─────────────────────────┐
              │  ACQUIRE SOLVER INPUT   │──── S2a
              │      DATA FILE          │
              └───────────┬─────────────┘
                          ▼
                  ╱───────────────╲
                 ╱     JUDGE        ╲      NG
        S2b ────╱   CONFORMITY OF    ╲─────────────────┐
                ╲   SOLVER INPUT     ╱                  │
                 ╲      DATA        ╱                   │
                  ╲───────┬───────╱                    │
                          │ OK      S2e       S2b       │
                          ▼                   ▼         ▼
              ┌─────────────────────┐   ┌──────────────────┐
              │ INITIAL CALCULATION │   │  ERROR DISPLAY   │
              │      PROCESS        │   └────────┬─────────┘
              └─────────────────────┘            │
                          │                      ▼
                          ▼             ┌──────────────────┐
              ┌─────────────────────┐   │  ADJUST SOLVER   │
              │  BUILD UP LARGE-    │   │   INPUT DATA     │
              │ SCALE COARSE MATRIX │   └────────┬─────────┘
              │     EQUATION        │       S2c
        S2f ──└──────────┬──────────┘
                          ▼
                  ╱───────────────╲
                 ╱   IS ADDI-      ╲     NO
        S2g ────╱  TIONAL CONDITION ╲──────────────┐
                ╲     PLACED?       ╱               │
                 ╲───────┬─────────╱                │
                         │ YES                      │
                         ▼                          │
              ┌─────────────────────┐               │
              │INCORPORATE ADDITIONAL│              │
              │ CONDITION INTO LARGE-│              │
        S2h ──│ SCALE MATRIX EQUATION│              │
              └──────────┬──────────┘               │
                         ▼◄───────────────────────┘
              ┌─────────────────────┐
              │ CALCULATE LARGE-SCALE│
              │   MATRIX EQUATION    │
        S2i ──└──────────┬──────────┘
                         ▼
              ┌─────────────────────┐
        S2j ──│   UPDATE SOLUTION   │
              └──────────┬──────────┘
                         ▼
                 ╱───────────────╲
          NO    ╱      HAS        ╲
     ┌─────────╱    RESIDUAL       ╲──── S2g
     │         ╲ REACHED CONVER-   ╱
     │          ╲ GENCE CONDI-    ╱
     │           ╲    TION?      ╱
     │            ╲─────┬──────╱
     │  S2m             │ YES
     ▼                  ▼
┌──────────────┐  ┌──────────────────┐
│UPDATE MATERIALS│ │ACQUIRE CALCULATION│── S2l
│PROPERTY VALUES │ │     RESULT        │
└──────────────┘  └────────┬──────────┘
                           ▼
                    ┌─────────────┐
                    │     END     │
                    └─────────────┘
```

# FIG. 20

```
              ┌─────────────┐
              │    START    │
              └──────┬──────┘
                     │
                     ▼ ◄──────────────────────────┐
    ┌──────────────────────────────────┐          │
    │          PRE PROCESS             │          │
    └────────────────┬─────────────────┘          │
                     │                            │
                     ▼                            │
    ┌──────────────────────────────────┐          │
    │         SOLVER PROCESS           │          │
    └────────────────┬─────────────────┘          │
                     │                            │
                     ▼                            │
              ╱─────────────╲        YES          │
         ╱─── HAS            ───╲──────────────────┘
        ╱  ANALYSIS DOMAIN SHAPE  ╲
         ╲      VARIED?          ╱
              ╲─────────────╱
                     │ NO
                     ▼
    ┌──────────────────────────────────┐
    │          POST PROCESS            │
    └────────────────┬─────────────────┘
                     │
                     ▼
              ┌─────────────┐
              │     END     │
              └─────────────┘
```

FIG. 21

GENERATING DEVICE FOR CALCULATION DATA

INPUT DEVICES — 4

CAD AP-PARATUS — C

B

PARAMETER INPUT SECTION — 11

PARAMETER STORAGE SECTION — 12

COMMUNI-CATION SECTION — 13

SHAPE DATA INPUT SECTION — 14

SHAPE DATA STORAGE SECTION — 15

PATCH DATA GENERATING SECTION — 16

PATCH DATA STORAGE SECTION — 17

VOXEL DATA GENERATING SECTION — 18

VOXEL DATA STORAGE SECTION — 19

INITIAL POINT DATA GENERATING SECTION — 20

INITIAL POINT DATA STORAGE SECTION — 21

DATA DECIMATING SECTION — 22

DIVISIONAL REGION DATA GENERATING SECTION — 23

DIVISIONAL REGION DATA STORAGE SECTION — 24

INTERIM DATA STORAGE SECTION — 26

CALCULATION DATA GENERATING SECTION — 25

CALCULATION DATA STORAGE SECTION — 27

OUTPUT DEVICES — 5

D

*FIG. 22*

12

| ANALYSIS DOMAIN DATA | Xmin, Ymin, Zmin, Xmax, Ymax, Zmax |
|---|---|
| ANALYSIS DOMAIN REFERENCE POINT DATA | Bx, By, Bz |
| DIVISION-INTO-VOXELS NUMBER DATA | Nx, Ny, Nz |

*FIG. 23*

OBJECT TO BE ANALYZED
(CAD DATA)

(Bx, By, Bz)

## FIG. 24

ANALYSIS DOMAIN
(RECTANGULAR
PARALLELEPIPED)

(Xmax, Ymax, Zmax)

OBJECT TO BE ANALYZED

Y

Z

X

(Xmin, Ymin, Zmin)

FIG. 25

P1 PATCH

P3

P2

OBJECT TO BE ANALYZED

## FIG. 26

17

| NUMBER OF PATCHES | | 1000 | |
|---|---|---|---|
| PATCH ID | P1 COORDINATE VALUES | P2 COORDINATE VALUES | P3 COORDINATE VALUES |
| 1 | X, Y, Z | X, Y, Z | X, Y, Z |
| ⋮ | | | |
| 1000 | X, Y, Z | X, Y, Z | X, Y, Z |

*FIG. 27*

## FIG. 28

VOXEL ATTRIBUTE

VOXEL ATTRIBUTE

Ny

Nz

Nx

Y
Z
X

19

VOXEL WHICH INTERSECTS PATCH ⟶ PATCH ID
VOXEL LOCATED INSIDE OBJECT TO BE ANALYZED ⟶ -2
VOXEL LOCATED OUTSIDE OBJECT TO BE ANALYZED ⟶ -1

EP 2 610 772 A1

## FIG. 29

DIMENSIONS Sx, Sy, Sz OF ALL VOXELS ARE IDENTICAL AND ARE CALCULATED ACCORDING TO FOLLOWING CALCULATION FORMULAE:

$$Sx = (Xmax - Xmin) / Nx$$
$$Sy = (Ymax - Ymin) / Ny$$
$$Sz = (Zmax - Zmin) / Ny$$

CENTER COORDINATES Xc, Yc, AND Zc ARE CALCULATED ACCORDING TO FOLLOWING CALCULATION FORMULAE WHERE i, j, AND k INDICATE STORAGE POSITION OF VOXEL:

$$Xc = Xmin + (Xmax - Xmin) * (i + 0.5) / (Nx - 1)$$
$$Yc = Ymin + (Ymax - Ymin) * (j + 0.5) / (Ny - 1)$$
$$Zc = Zmin + (Zmax - Zmin) * (k + 0.5) / (Nz - 1)$$

EP 2 610 772 A1

## FIG. 30

| NUMBER OF INITIAL POINTS | ○○○○ |
|---|---|
| INITIAL POINT ID | COORDINATE VALUES OF INITIAL POINT |
| 1 | X, Y, Z |
| ⋮ | ⋮ |
| ○○○○ | X, Y, Z |

21

## FIG. 31

DIVISIONAL REGION DATA

— INITIAL POINT ID (DIVISIONAL POINT ID) OF INITIAL POINT CLOSEST TO CENTER COORDINATES OF VOXEL

— VOXEL LOCATED OUTSIDE OBJECT TO BE ANALYZED —→ −1

EP 2 610 772 A1

EP 2 610 772 A1

## FIG. 32

26

| DIVISIONAL REGION ID (REAR) | DIVISIONAL REGION ID (FRONT) | NORMAL VECTOR | | | AREA |
|---|---|---|---|---|---|
| | | X | Y | Z | |
| 2 | 4 | 130 | 256 | 128 | LENGTH OF NORMAL VECTOR |
| 2 | 5 | 115 | 108 | 56 | LENGTH OF NORMAL VECTOR |

## FIG. 33

27

| NUMBER OF DIVISIONAL REGIONS | | 100 |
|---|---|---|
| DIVISIONAL REGION ID | CENTER-OF-GRAVITY COORDINATES OF DIVISIONAL REGION | VOLUME OF DIVISIONAL REGION |
| 1 | X, Y, Z | ○○○ |
| ⋮ | | |
| 100 | X, Y, Z | ○○○ |

| NUMBER OF BOUNDARY SURFACES | | 200 | | |
|---|---|---|---|---|
| BOUNDARY SURFACE ID | DIVISIONAL REGION ID (REAR) | DIVISIONAL REGION ID (FRONT) | NORMAL VECTOR | AREA |
| 1 | 8 | 5 | X, Y, Z | ○○ |
| ⋮ | | | | |
| 200 | 100 | 97 | X, Y, Z | ○○ |

## FIG. 34

```
    ( VOXEL DATA GENERATING )
    (      SECTION          )
              │
              ▼
    ┌─────────────────────────┐
    │ DEFINE VOXELS AND CALCULATE │──S11
    │ CENTER COORDINATES AND SIZES │
    └─────────────────────────┘
              │
              ▼
    ┌─────────────────────────┐
    │    SELECT ONE VOXEL      │──S12
    └─────────────────────────┘
              │
              ▼
    ┌─────────────────────────┐
    │  DETERMINE M WHERE VOXEL │──S13
    │   INTERSECTS PATCH BY    │
    │  REFERRING TO PATCH DATA │
    └─────────────────────────┘
              │        S14
              ▼
         ◇ INTERSECTS ◇───YES──────────────┐
         ◇  PATCH?    ◇                     │
              │NO                           ▼
              │      S15            ┌─────────────────┐ S19
              ▼                     │  STORE PATCH ID OF │
    ┌─────────────────────────┐    │ INTERSECTING PATCH │
    │   DETERMINE POSITIONAL   │    └─────────────────┘
    │ RELATIONSHIP BETWEEN VOXEL│            │
    │ AND OBJECT TO BE ANALYZED │            │
    └─────────────────────────┘            │
              │      S16                     │
              ▼                              │
         ◇ OUTSIDE ◇───NO──────┐            │
         ◇ REGION? ◇           │            │
              │YES   S17        ▼  S18       │
              ▼            ┌──────────┐      │
    ┌──────────────┐      │STORE "-2."│     │
    │  STORE "-1." │      └──────────┘      │
    └──────────────┘            │            │
              │                 │            │
              ▼◄────────────────┴────────────┘
              │       S20
              ▼
    NO   ◇ ALL VOXELS  ◇
◄────────◇ PROCESSED?  ◇
              │YES
              ▼
           ( END )
```

*FIG. 35*

```
        ╭─────────────────────────╮
        │  DIVISIONAL REGION DATA │
        │   GENERATING SECTION    │
        ╰─────────────────────────╯
                    │
                    ▼
        ┌─────────────────────────┐
        │      STORE  "-1."       │──── S21
        └─────────────────────────┘
                    │
    ┌──────────────▶│
    │               ▼
    │   ┌─────────────────────────┐
    │   │     SELECT ONE VOXEL    │──── S22
    │   └─────────────────────────┘
    │               │
    │               ▼
    │   ┌─────────────────────────┐
    │   │  SELECT CLOSEST INITIAL │
    │   │   POINT BY REFERRING TO │──── S23
    │   │     INITIAL POINT DATA  │
    │   └─────────────────────────┘
    │               │
    │               ▼
    │   ┌─────────────────────────┐
    │   │  STORE INITIAL POINT ID │
    │   │    OF SELECTED INITIAL  │──── S24
    │   │          POINT          │
    │   └─────────────────────────┘
    │               │
    │               ▼        S25
    │         ╱───────────╲
    │    NO  ╱             ╲
    └───────  ALL VOXELS PROCESSED?
            ╲             ╱
             ╲───────────╱
                    │ YES
                    ▼
            ╭───────────────╮
            │      END      │
            ╰───────────────╯
```

## FIG. 36

```
        ( CALCULATION DATA
         GENERATING SECTION )
                  │
                  ↓
        ┌──────────────────────────┐
        │ SELECT ONE REFERENCE VOXEL │──S31
        └──────────────────────────┘
                  │
                  ↓
        ┌──────────────────────────┐
        │   DETERMINE SIX ADJACENT   │──S32
        │  VOXELS THAT ARE ADJACENT TO │
        │      REFERENCE VOXEL       │
        └──────────────────────────┘
                  │
                  ↓
        ┌──────────────────────────┐
        │  SELECT ONE ADJACENT VOXEL │──S33
        └──────────────────────────┘
                  │
                  ↓
        ┌──────────────────────────┐
        │ DETERMINE DIVISIONAL REGIONS│──S34
        │ TO WHICH REFERENCE VOXEL AND│
        │   ADJACENT VOXEL BELONG    │
        └──────────────────────────┘
                  │
                  ↓  S35
              ARE TWO
           DIVISIONAL REGIONS ──YES──→
            IDENTICAL?
                  │NO
                  ↓  S36
        ┌──────────────────────────┐
        │  MAKE SEARCH TO DETERMINE  │
        │ WHETHER COMBINATION OF TWO │
        │ DIVISIONAL REGION ID'S IS  │
        │    REGISTERED OR NOT       │
        └──────────────────────────┘
                  │
                  ↓  S37
            REGISTERED? ──YES──→
                  │NO  S38
                  ↓
        ┌──────────────────────────┐
        │   REGISTER DIVISIONAL      │
        │  REGION ID'S OF THESE      │
        │   DIVISIONAL REGIONS       │
        └──────────────────────────┘
                  │
                  ↓
        ┌──────────────────────────┐
        │ ADD NORMAL VECTOR OF SURFACE│
        │ AT WHICH REFERENCE VOXEL IS │
        │  ADJACENT TO ADJACENT VOXEL │
        └──────────────────────────┘
                  │ S39
```

```
                  S40
              HAVE ALL
           OF SIX ADJACENT ──NO──→
           VOXELS BEEN PRO-
              CESSED?
                  │YES  S41
              ALL VOXELS ──NO──→
             PROCESSED?
                  │YES  S42
                  ↓
        ┌──────────────────────────┐
        │   DETERMINE AREAS FROM     │
        │  ADDITION NORMAL VECTORS   │
        └──────────────────────────┘
                  │
                  ↓
        ┌──────────────────────────┐
        │ DETERMINE NUMBER OF DIVI-  │
        │ SIONAL REGIONS AND NUMBER  │
        │   OF BOUNDARY SURFACES     │
        └──────────────────────────┘
                  │ S43
                  ↓
              ( END )
```

FIG. 37

## FIG. 38

SCALE ADJUSTMENT DATA

| DRAWING DOMAIN DATA | Xmin, Ymin, Xmax, Ymax |
|---|---|
| DIVISION-INTO-PIXELS NUMBER DATA | Nx, Ny |
| DEPTH ADJUSTMENT DATA | Zmin, Zmax |

TRIANGLE DATA (INPUT DATA)

| NUMBER OF TRIANGLES | Nt |
|---|---|

| ID NO. | APEX-1 | APEX-2 | APEX-3 |
|---|---|---|---|
| XXX | x, y, z | x, y, z | x, y, z |
| ⋮ | ⋮ | ⋮ | ⋮ |
| XXX | XXX | XXX | XXX |

TRIANGLE DRAWING SECTION

IMAGE BUFFER

(PIXEL COLORS ARE STORED AS 24-BIT INTEGER VALUES)

Z BUFFER

(PIXEL Z COORDINATE VALUES ARE STORED)

PIECES OF PIXEL COLOR INFORMATION THEMSELVES IN IMAGE BUFFER ARE USED AS ID NUMBERS OF DIVISIONAL REGIONS.

PIXEL DATA (OUTPUT DATA)

PIXEL DATA

ID NUMBERS OF DIVISIONAL REGIONS

EP 2 610 772 A1

EP 2 610 772 A1

*FIG. 39*

Nx: DIVISION NUMBER
IN X DIRECTION (IN
THIS EXAMPLE, 10)

Ymax:
MAXIMUM Y
COORDINATE
VALUE

Ny: DIVISION NUMBER
IN Y DIRECTION (IN
THIS EXAMPLE, 10)

COMMON TO
IMAGE BUFFER
AND Z BUFFER

Zmax: MAXIMUM
ALLOWABLE VALUE
OF Z COORDINATE

Ymin:
MINIMUM Y
COORDINATE
VALUE

Xmin:
MINIMUM X
COORDINATE
VALUE

Xmax:
MAXIMUM X
COORDINATE
VALUE

Zmin: MINIMUM
ALLOWABLE VALUE
OF Z COORDINATE

PIXEL
DATA
(RECTAN-
GLE)

dy: (PIXEL VERTICAL DIMENSION)
$$= \frac{Ymax-Xmin}{Nx}$$

dx: (PIXEL HORIZONTAL DIMENSION)
$$= \frac{Xmax-Xmin}{Nx}$$

## FIG. 40

| POTENTIAL VALUE CALCULATION FORMULA: | $f(d) = \dfrac{RO-(\Delta h**2+d**2)**0.5}{RO}$ | | h: DISTANCE BETWEEN INITIAL POINT AND Z SLICING SURFACE<br>RO: RADIUS OF SPHERE |
|---|---|---|---|
| POSITION OF SLICING SURFACE | 1/4-RADIUS POSITION FROM SPHERE TOP | 1/2-RADIUS POSITION FROM SPHERE TOP | SPHERE CENTER POSITION |
| $\Delta$H VALUE | $\Delta$h=0.25*RO | $\Delta$h=0.50*RO | $\Delta$h=1.00*RO |
| GRAPH OF FUNCTION f(d)<br><br>POTENTIAL SOLID IS FIGURE OBTAINED BY ROTATING THIS GRAPH SHAPE AROUND AXIS | | | |
| SHAPE OF POTENTIAL SOLID<br><br>HEIGHT VALUES INDICATE POTENTIAL VALUES | | | |
| POTENTIAL CONTOURS IN CROSS SECTION | | | |
| POTENTIAL EQUI-CONTOUR SURFACES IN SPHERE AND SLICING POSITION | | | |

## FIG. 41

TRIANGLE DATA (INPUT DATA)

| ID NO. | APEX-1 | APEX-2 | APEX-3 |
|--------|--------|--------|--------|
| XXX | x, y, z | x, y, z | x, y, z |
| ⋮ | ⋮ | ⋮ | ⋮ |
| XXX | XXX | XXX | XXX |

| NUMBER OF TRIANGLES | Nt |
|---------------------|----|

APEX-3

APEX-1    APEX-2

X, Y, AND Z COORDINATE VALUES OF APICES OF TRIANGULAR PATCH DATA

ID NUMBER OF INITIAL POINT BASED ON WHICH POTENTIAL SOLID REPRESENTED BY TRIANGULAR PATCH DATA WAS DEFINED

INTEGER VALUE OF THIS ID NUMBER ITSELF IS EXPRESSED BY 24-BIT INTEGER AND USED AS COLOR INFORMATION. TRIANGLE IS PAINTED SOLIDLY IN THAT COLOR.

| EX. : (INITIAL POINT ID) = 1000000 |

| (HEXADECIMAL REPRESENTATION) = 0x0F4240 (3bytes=24 bits) |

| COLOR REPRESENTATION RED = 0x0F=15 GREEN = 0x42=66 BLUE = 0x40=64 |

EP 2 610 772 A1

# FIG. 42

FIRST TRIANGLE

SECOND TRIANGLE

IMAGE BUFFER

IMAGE BUFFER

Z BUFFER

Z BUFFER

*FIG. 43*

```
        ( DIVISIONAL REGION DATA )
        (  GENERATING SECTION    )
                    │
                    ▼
        ┌──────────────────────────────┐
        │ SELECT ONE Z SLICING SURFACE │──── S51
        └──────────────────────────────┘
                    │
                    ▼
        ┌──────────────────────────────┐
        │   SELECT ONE INITIAL POINT   │──── S52
        └──────────────────────────────┘
                    │
                    ▼
        ┌──────────────────────────────┐
        │    DEFINE SPHERE HAVING      │──── S53
        │   INITIAL POINT AS CENTER    │
        └──────────────────────────────┘
                    │
                    ▼       S54
               ╱─────────────╲
              ╱ DOES SPHERE   ╲      NO
             < INTERSECT Z SLICING >─────┐
              ╲  SURFACE?      ╱         │
               ╲─────────────╱          │
                    │ YES               │
                    ▼                   │
        ┌──────────────────────────────┐│
        │    DETERMINE SHAPE OF        │──── S55
        │   CROSS-SECTIONAL CIRCLE     ││
        └──────────────────────────────┘│
                    │                   │
                    ▼                   │
        ┌──────────────────────────────┐│
        │ DEFINE POTENTIAL SOLID FROM  │──── S56
        │   CROSS-SECTIONAL CIRCLE     ││
        └──────────────────────────────┘│
                    │◄──────────────────┘
                    ▼       S57
        NO     ╱─────────────╲
      ┌───────< ALL INITIAL   >
      │        ╲ POINTS PROCESSED? ╱
      │         ╲─────────────╱
      │              │ YES
      │              ▼
      │   ┌──────────────────────────────┐
      │   │  PROJECT POTENTIAL SOLIDS    │
      │   │  ONTO Z SLICING SURFACE AND  │
      │   │ STORE INITIAL POINT ID'S IN  │
      │   │  RESPECTIVE PIXELS. WHEN     │
      │   │  POTENTIAL SOLIDS OVERLAP    │──── S58
      │   │  WITH EACH OTHER, STORE      │
      │   │      INITIAL POINT ID        │
      │   │ CORRESPONDING TO HIGHER ONE  │
      │   │  IN PIXEL BY PERFORMING      │
      │   │  HIDDEN SURFACE PROCESSING   │
      │   └──────────────────────────────┘
      │              │       S59
      │              ▼
      │   NO    ╱─────────────╲
      └────────< ALL SLICING   >
               ╲ SURFACES PROCESSED? ╱
                ╲─────────────╱
                     │ YES
                     ▼
                 (  END  )
```

*FIG. 44*

START

EXECUTE LOOP FOR ALL TRIANGLES —S61

EXTRACT THREE APICES OF CURRENT TRIANGLE —S62

EXECUTE LOOP FOR ALL PIXELS —S63

SET COORDINATES (Px, Py, Pz) FOR INTERSECTING POINT OF TRIANGLE SURFACE AND STRAIGHT LINE THAT PASSES THROUGH CENTER OF CURRENT PIXEL AND WHOSE DIRECTION IS REPRESENTED BY (0, 0, +1) —S64

S65
IS CURRENT PIXEL LOCATED INSIDE OR ON BOUNDARY LINE OF TRIANGLE? — NO

YES

S66
IS Pz LARGER THAN Z BUFFER VALUE OF CURRENT PIXEL? — NO

YES

REPLACE Z BUFFER VALUE OF CURRENT PIXEL WITH Pz, AND REPLACE IMAGE BUFFER VALUE WITH COLOR THAT IS 24-BIT INTEGER AS ID NUMBER
S67

S68
ALL PIXELS PROCESSED? — NO

YES S69

ALL TRIANGLES PROCESSED? — NO

YES

END

FIG. 45

EP 2 610 772 A1

*FIG. 46*

# FIG. 47

```
┌─────────────────────┐
│  INNER VOXEL DATA   │
│ GENERATING SECTION  │
└─────────────────────┘
           │
           ▼
┌─────────────────────┐
│  SELECT ONE VOXEL   │──── S71
└─────────────────────┘
           │
           ▼
┌─────────────────────┐
│ OPERATE FOR DETERMINA-│
│ TION AS TO WHETHER OR │──── S71
│ NOT VOXEL INTERSECTS  │
│ PATCH BY REFERRING TO │
│     PATCH DATA        │
└─────────────────────┘
           │
           ▼        S73
      ╱VOXEL INTER-╲      YES
     ◁  SECTS PATCH? ▷──────────────┐
      ╲            ╱                 │
           │ NO        S74           │
           ▼                         │
┌─────────────────────┐             │
│ DETERMINE POSITIONAL │             │
│ RELATIONSHIP BETWEEN │             │
│ VOXEL AND OBJECT TO BE│             │
│      ANALYZED        │             │
└─────────────────────┘             │
           │          S75           │
           ▼                        │
       ╱ OUTSIDE ╲      YES         │
      ◁  VOXEL?   ▷──────────┐      │
       ╲         ╱           │      │
           │ NO     S77      │      │
           ▼                 │      │
┌────────────────┐    ┌──────────────┐
│  STORE "-1."   │    │  STORE "0."  │──── S76
└────────────────┘    └──────────────┘
           │                 │
           │◄────────────────┘
           ▼        S78
  NO  ╱ ALL VOXELS ╲
 ◁────  PROCESSED?  ▷
      ╲            ╱
           │ YES
           ▼
       ┌───────┐
       │  END  │
       └───────┘
```

91

## FIG. 48

```
┌─────────────────────────────┐
│  ON-WALL/ON-SPHERE POINT    │
│  DATA GENERATING SECTION    │
└─────────────────────────────┘
              │
              ▼
┌─────────────────────────────┐
│   SELECT ONE INNER VOXEL    │──── S81
└─────────────────────────────┘
              │
              ▼
┌─────────────────────────────┐
│ CHECK WHETHER OR NOT ADJACENT│
│ INNER VOXEL EXISTS IN EACH OF│──── S82
│ 6 DIRECTIONS (+X, -X, +Y, -Y,│
│   +Z, AND -Z DIRECTIONS)    │
└─────────────────────────────┘
              │            S83
              ▼
         DOES ADJACENT
    INNER VOXEL EXIST IN EVERY ──── YES
         DIRECTION?
              │ NO
              ▼
┌─────────────────────────────┐
│   DEFINE SPHERE THAT IS     │──── S84
│   INSCRIBED ON VOXEL        │
└─────────────────────────────┘
              │
              ▼
┌─────────────────────────────┐
│   DEFINE 26 ON-SPHERE       │──── S85
│   POINTS ON SPHERE          │
└─────────────────────────────┘
              │
              ▼
┌─────────────────────────────┐
│ CHECK WHETHER OR NOT INNER  │
│ VOXEL EXISTS ON THE EXTENSION│
│ OF EACH OF VECTORS THAT ARE │──── S86
│ DIRECTED FROM CENTER OF VOXEL│
│   TO ON-SPHERE POINTS       │
└─────────────────────────────┘
              │         S87
              ▼
            EXIST? ──── YES
              │ NO
              ▼
┌─────────────────────────────┐
│ SEARCH PATCH DATA FOR POINT │
│ THAT IS CLOSEST TO EACH     │──── S88
│ POINT, AND DEFINE ON-WALL   │
│   POINT THERE               │
└─────────────────────────────┘
              │
              ▼
┌─────────────────────────────┐
│   STORE ON-WALL POINTS      │──── S89
│   AND ON-SPHERE POINTS      │
└─────────────────────────────┘
              │            S90
              ▼
  NO     ALL INNER VOXELS
         PROCESSED?
              │ YES
              ▼
         ┌─────────┐
         │   END   │
         └─────────┘
```

## FIG. 49

```
┌─────────────────────────────┐
│    DIVISION POINT DATA       │
│    GENERATING SECTION        │
└─────────────────────────────┘
              │
              ▼
┌─────────────────────────────┐
│ DEFINE STRAIGHT LINES EACH OF│──S91
│ WHICH PASSES THROUGH ON-WALL │
│ POINT AND ON-SPHERE POINT    │
└─────────────────────────────┘
              │
              ▼
┌─────────────────────────────┐
│ GENERATE, ON EACH STRAIGHT   │──S92
│ LINE, INITIAL POINT-1 AT     │
│ POSITION HAVING DISTANCE d1  │
│ FROM ON-WALL POINT           │
└─────────────────────────────┘
              │
              ▼
┌─────────────────────────────┐
│ GENERATE, ON EACH STRAIGHT   │──S93
│ LINE, INITIAL POINT-2 AT POSI-│
│ TION HAVING DISTANCE d2 FROM │
│ GENERATED INITIAL POINT-1    │
└─────────────────────────────┘
              │
              ▼
           HAS                S94
      LINE SEGMENT
   CONNECTING EACH ON-
   WALL POINT AND GENERATED
   INITIAL POINTS REACHED SPHERE    NO
   SURFACE OR HAS USER-SPECIFIED ──────┐
      NUMBER OF INITIAL                │
      POINTS BEEN GEN-                 │
          ERATED?                      │
              │ YES                    │
              ▼                        │
┌─────────────────────────────┐        │
│            END              │        │
└─────────────────────────────┘        │
```

## FIG. 50

```
        ┌─────────────────────────┐
        │   INITIAL POINT DATA    │
        │   GENERATING SECTION    │
        └─────────────────────────┘
                     │
                     ▼
        ┌─────────────────────────┐
        │   STORE CENTER POINTS OF │──── S101
        │   INNER VOXELS AS INITIAL│
        │   POINTS, RESPECTIVELY   │
        └─────────────────────────┘
                     │
                     ▼
        ┌─────────────────────────┐
        │  STORE DIVISION POINTS AS│──── S102
        │  RESPECTIVE INITIAL POINTS│
        └─────────────────────────┘
                     │
                     ▼
             ┌──────────────┐
             │     END      │
             └──────────────┘
```

*FIG. 51*

*FIG. 52*

```
┌──────────────────────────┐
│    INNER VOXEL DATA       │
│   MODIFYING SECTION       │
└──────────────────────────┘
             │
             ▼
┌──────────────────────────┐
│     SELECT ONE VOXEL      │──── S111
└──────────────────────────┘
             │
             ▼
┌──────────────────────────┐
│ CHECK WHETHER OR NOT      │
│ ADJACENT INNER VOXEL      │──── S112
│ EXISTS IN EACH OF 6       │
│ DIRECTIONS (+X, −X, +Y,   │
│ −Y, +Z, AND −Z            │
│ DIRECTIONS)               │
└──────────────────────────┘
             │
             ▼        S113
         ◇ DOES ADJA-
          CENT INNER VOXEL ──── YES
          EXIST IN EVERY DI-
          RECTION? ◇
             │ NO
             ▼
┌──────────────────────────┐
│       STORE "−1."         │──── S114
└──────────────────────────┘
             │
             ▼        S115
    NO ◇ ALL VOXELS PROCESSED? ◇
             │ YES
             ▼
         ┌─────────┐
         │   END   │
         └─────────┘
```

## FIG. 53

EXTERNAL SHAPE (PATCHES)
OF OBJECT TO BE ANALYZED

INNER VOXEL DATA

*FIG. 54*

*FIG. 55*

ON-SPHERE POINT

ON-WALL POINT

CENTER OF VOXEL

*FIG. 56*

INITIAL POINT-2

INITIAL POINT-1

d2 d1

d1

d3 d2 d1

## FIG. 57

POINT GROUPS FOR GENERATION OF BOUNDARY LAYER

*FIG. 58*

▨ INNER VOXEL DATA

*FIG. 59*

DIVISIONAL REGION GENERATING SECTION

DIVISIONAL REGION DATA

## INTERNATIONAL SEARCH REPORT

International application No.

PCT/JP2011/068662

A. CLASSIFICATION OF SUBJECT MATTER
*G06F17/50*(2006.01)i

According to International Patent Classification (IPC) or to both national classification and IPC

B. FIELDS SEARCHED

Minimum documentation searched (classification system followed by classification symbols)
G06F17/50

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2011 |
| Kokai Jitsuyo Shinan Koho | 1971-2011 | Toroku Jitsuyo Shinan Koho | 1994-2011 |

Electronic data base consulted during the international search (name of data base and, where practicable, search terms used)
CiNii

C. DOCUMENTS CONSIDERED TO BE RELEVANT

| Category* | Citation of document, with indication, where appropriate, of the relevant passages | Relevant to claim No. |
|---|---|---|
| A | WO 2005/008547 A1 (Riken, Japan), 27 January 2005 (27.01.2005), abstract & US 2007/0057938 A1 & EP 1645979 A1 & WO 2005/008547 A1 & CN 1849608 A | 1-12 |
| A | WO 2006/095629 A1 (Riken, Japan), 14 September 2006 (14.09.2006), abstract & US 2009/0040217 A1 & EP 1857949 A1 & WO 2006/095629 A1 & CN 101137988 A | 1-12 |
| A | JP 2005-202634 A (Keio University), 28 July 2005 (28.07.2005), abstract (Family: none) | 1-12 |

☐ Further documents are listed in the continuation of Box C.   ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 07 November, 2011 (07.11.11) | 15 November, 2011 (15.11.11) |

| Name and mailing address of the ISA/ | Authorized officer |
|---|---|
| Japanese Patent Office | |
| Facsimile No. | Telephone No. |

Form PCT/ISA/210 (second sheet) (July 2009)

**EP 2 610 772 A1**

**Patent documents cited in the description**

- US 20080021684 A
- JP 2010187309 A
- JP 2010284878 A